(19) Europäisches Patentamt
European Patent Office
Office européen des brevets

(11) EP 2 204 426 B1

(12) # EUROPEAN PATENT SPECIFICATION

(45) Date of publication and mention of the grant of the patent:
**16.04.2014 Bulletin 2014/16**

(21) Application number: **08841663.1**

(22) Date of filing: **14.10.2008**

(51) Int Cl.:
*C09J 7/02* (2006.01)
*B32B 27/00* (2006.01)
*B32B 27/30* (2006.01)
*C09J 4/02* (2006.01)
*C09J 133/00* (2006.01)
*A61L 15/24* (2006.01)
*A61L 15/42* (2006.01)
*A61L 15/58* (2006.01)

(86) International application number:
**PCT/JP2008/002906**

(87) International publication number:
**WO 2009/054106 (30.04.2009 Gazette 2009/18)**

(54) **THERMAL EXPANSION TYPE REMOVABLE ACRYLIC PRESSURE-SENSITIVE ADHESIVE TAPE OR SHEET**

AUF WÄRMEAUSDEHNUNG BASIERENDES ABLÖSBARES ACRYLHAFTKLEBEBAND ODER FOLIE

RUBAN OU FEUILLE D'ADHÉSIF SENSIBLE À LA PRESSION ACRYLIQUE AMOVIBLE DU TYPE À DILATATION THERMIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.10.2007 JP 2007273835**
**20.06.2008 JP 2008162429**

(43) Date of publication of application:
**07.07.2010 Bulletin 2010/27**

(73) Proprietor: **Nitto Denko Corporation**
**Ibaraki-shi**
**Osaka 567-8680 (JP)**

(72) Inventors:
- **YAMANAKA, Eiji**
  **Ibaraki-shi**
  **Osaka 567-8680 (JP)**
- **NAGASAKI, Kunio**
  **Ibaraki-shi**
  **Osaka 567-8680 (JP)**
- **HIRAO, Akira**
  **Ibaraki-shi**
  **Osaka 567-8680 (JP)**
- **NAKASHIMA, Tooru**
  **Ibaraki-shi**
  **Osaka 567-8680 (JP)**

(74) Representative: **Grünecker, Kinkeldey, Stockmair & Schwanhäusser**
**Leopoldstrasse 4**
**80802 München (DE)**

(56) References cited:
**EP-A2- 1 820 833**
**JP-A- 5 279 636**
**JP-A- 2002 121 510**
**JP-A- 2005 179 561**

- **DATABASE WPI Week 200613 Thomson Scientific, London, GB; AN 2006-121321 XP002678835, & JP 2006 022189 A (NITTO DENKO CORP) 26 January 2006 (2006-01-26)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 204 426 B1

## Description

### Technical Field

The present invention relates to heat-expandable/peelable acrylic pressure-sensitive adhesive tapes or sheets which maintain high adhesion force (adhesive strengths at room temperature) during bonding with an adherend but, upon peeling, show reduced adhesive strengths through heating, regardless of whether the adhered has an uneven (rough) surface. More specifically, it relates to a heat-expandable/peelable acrylic pressure-sensitive adhesive tape or sheet that maintains satisfactory adhesive properties during bonding with an adherend but shows a reduced adhesive strength through heating and is easily separable from the adherend when the tape or sheet is to be disintegrated from the adherend for the purpose typically of recycling or reworking, regardless of whether the surface of the adherend is uneven or not or not. It also relates to a heat-expandable/peelable acrylic pressure-sensitive adhesive tape or sheet that maintains satisfactory adhesive properties during bonding with an adherend but is easily peelable from the adherend through heating, when the tape or sheet is to be peeled off from the adherend for the purpose typically of reworking or recycling.

### Background Art

Base polymers for use in acrylic pressure-sensitive adhesives have been prepared by subjecting acrylic monomers mainly containing alkyl (meth)acrylate to solution polymerization in organic solvents. Recently, demands have been made to produce pressure-sensitive adhesive layers without using such organic solvents, so as to avoid or control air pollution and other environmental issues for the conservation of the global environment. Thus, in aspects of safety and environment, it is advantageous to produce pressure-sensitive adhesive tapes or sheets (hereinafter "tape(s) or sheet(s)" is also simply referred to as "tape(s)" or "sheet(s)") by subjecting acrylic monomers to polymerization through ultraviolet irradiation without using solvents to give pressure-sensitive adhesive layers. In addition, demands on savings and recycling of resources have increasingly made, with recently increasing environmental consciousness.

Certain pressure-sensitive adhesive tapes have pressure-sensitive adhesive layers containing microparticles. Among them, acrylic foam-like pressure-sensitive adhesive tapes, which are acrylic pressure-sensitive adhesive tapes containing microparticles in their substrate and/or pressure-sensitive adhesive layer, are frequently used in applications requiring satisfactory bond strength and shear strength at room temperature. Exemplary applications include bonds of parts typically in automobiles, machine parts, electrical appliances, and construction materials.

Such known acrylic foam-like pressure-sensitive adhesive tapes developed under these circumstances have high bond strengths (adhesive strengths) to exhibit high reliability in bonding, but their high bond strengths make it difficult to separate or debond the bonded parts. Such problems of the acrylic foam-like pressure-sensitive adhesive tapes occur, for example, in the following applications.

Recent flat-panel television sets have decorative panels. The decorative panels are printed typically black and affixed to the whole surface of the television sets for the purpose of increasing the graphical design function. The acrylic foam-like pressure-sensitive adhesive tapes have been used to affix the decorative panels to the television sets, because they satisfy requirements such as high bond strength, high holding power, gap absorptivity, and stress relaxation ability. However, the high bond strengths of the acrylic foam-like pressure-sensitive adhesive tapes make it difficult to debond the bonded articles in recycling of materials after use.

The acrylic foam-like pressure-sensitive adhesive tapes are also used for the fixation of display boards, because they satisfy requirements such as high bond strength, long-term reliability, and high adhesiveness on rough surfaces (gap absorptivity). The display boards are generally removed from poles or base boards after use. In the removal, however, the high bond strengths of the acrylic foam-like pressure-sensitive adhesive tapes may damage the display boards or may damage the poles or base boards to which the display boards have been affixed.

The acrylic foam-like pressure-sensitive adhesive tapes are further also used for the fixation of liquid crystal display (LCD) modules and of back-light units, because they satisfy requirements such as high bond strength, gap absorptivity, and impact absorptivity. The tapes are to be peeled off in reworking to correct application failure of the tapes during production of the LCD modules and back-light units or in repairing to repair certain defects found in inspections after the affixation of the tapes. In these cases, however, the high bond strengths of the acrylic foam-like pressure-sensitive adhesive tapes may impede the peeling of the tapes or, even if the tapes are peeled off, may damage parts to which the tapes have been affixed to thereby impede the reuse of the parts.

Acrylic foam-like pressure-sensitive adhesive tapes disclosed in Patent Documents 1 to 7 have been known as such acrylic foam-like pressure-sensitive adhesive tapes, but none of them has both satisfactory adhesion force to an adherend having an uneven surface (rough surface) and easiness to peel.

Certain acrylic pressure-sensitive adhesive tapes further contain an acrylic acid component. The acrylic pressure-sensitive adhesive tapes of this type have high adhesion force at room temperature but show increased tack

strengths when heated to fail to be peeled off satisfactorily easily, when the adhesive tapes are adopted to a metallic adherend such as stainless steel (SUS). In addition, the acidic component may corrode the adherend.

Patent Document 1: Japanese Examined Patent Application Publication (JP-B) No. S57(1982)-17030 (corresponding to U.S. Pat. No. 4223067)
Patent Document 2: Japanese Unexamined Patent Application Publication (JP-A) No. H07(1995)-48549
Patent Document 3: Japanese Unexamined Patent Application Publication (JP-A) No. 2001-212900
Patent Document 4: Japanese Unexamined Patent Application Publication (JP-A) No. 2002-088320
Patent Document 5: Japanese Unexamined Patent Application Publication (JP-A) No. 2002-003800
Patent Document 6: Japanese Unexamined Patent Application Publication (JP-A) No. 2002-121505
Patent Document 7: Japanese Unexamined Patent Application Publication (JP-A) No. 2004-018761

JP-A-2006-022189 relates to a bubble-containing viscoelastic composition containing bubbles, hollow fine spheres and a fluorine-based surfactant having an alkoxyalkyl group and a fluorinated hydrocarbon group in the molecule.

EP-A-1820833 discloses a double-sided pressure-sensitive adhesive tape or sheet comprising:

- a bubble-containing pressure-sensitive adhesive layer; and
- a releasable liner protecting a pressure-sensitive adhesive surface of the bubble-containing pressure-sensitive adhesive layer, said releasable liner comprising at least a releasably treated layer formed by an ionizing radiation-curable silicone type releasing agent,

wherein the releasably treated layer formed by the ionizing radiation-curable silicone type releasing agent is employed onto a pressure-sensitive adhesive surface on the heavier releasable side.

Disclosure of Invention

Problems to be Solved by the Invention

Accordingly, an object of the present invention is to provide a heat-expandable/peelable acrylic pressure-sensitive adhesive tape that maintains a high adhesion force during bonding with an adherend to form a bonded part but, upon the separation/debonding of the bonded part, shows a reduced adhesive strength through heating to allow the bonded part (bonded article) to be easily separated/debonded, regardless of whether the surface of the adherend is uneven or not.

Another object of the present invention is to provide a heat-expandable/peelable acrylic pressure-sensitive adhesive tape that maintains a high adhesion force during bonding with a metallic adherend to form a bonded part but, upon peeling for the purpose typically of reworking or recycling, shows a reduced adhesive strength through heating, and can be easily peeled/debonded from the metallic adherend. Means for Solving the Problems

After intensive investigations to achieve the objects, the present inventors have found that a specific pressure-sensitive adhesive tape or sheet including a substrate and a pressure-sensitive adhesive layer present on or above at least one side of the substrate can give a removable (peelable) pressure-sensitive adhesive tape that maintains a high adhesion force during bonding with even an uneven surface of an adherend to form a bonded part but, upon the separation/debonding of the bonded part, shows a reduced adhesive strength through heating, and can be easily separated/debonded from the adherend. Specifically, this pressure-sensitive adhesive tape or sheet includes a viscoelastic body containing both bubbles and microparticles, which is a substrate containing bubbles, as the substrate; and a pressure-sensitive adhesive layer present on or above at least one side of the substrate, which pressure-sensitive adhesive layer contains a blowing agent and is formed from a pressure-sensitive adhesive composition containing a blowing agent. The present invention has been made based on these findings.

Specifically, the present invention provides, in an embodiment, a heat-expandable/peelable acrylic pressure-sensitive adhesive tape or sheet, at least comprising:

a viscoelastic body containing both bubbles and microparticles; and
a pressure-sensitive adhesive layer containing a blowing agent,
wherein the pressure-sensitive adhesive layer is present on or above at least one side of the viscoelastic body.

In the heat-expandable/peelable acrylic pressure-sensitive adhesive tape or sheet, the bubbles are preferably contained in an amount of 3 to 30 percent by volume based on the total volume of the viscoelastic body containing both bubbles and microparticles.

The viscoelastic body containing both bubbles and microparticles is preferably a layer as a polymerization product derived from a polymerizable composition containing both bubbles and microparticles, in which the polymerizable composition contains a vinyl monomer mixture or a partially polymerized prepolymer thereof, the vinyl monomer mixture containing at least one alkyl (meth)acrylate whose alkyl moiety having 2 to 18 carbon atoms as a main component; one or more photoinitiators; the microparticles; one or more multifunctional (meth)acrylates; and the bubbles. More preferably, the polymerizable composition containing both bubbles and microparticles contains the microparticles; 0.001 to 5 parts by weight of the photoinitiator; and 0.001 to 5 parts by weight of the multifunctional (meth)acrylate, per 100 parts by weight of the vinyl monomer mixture containing at least one alkyl (meth)acrylate whose alkyl moiety having 2 to 18 carbon atoms as a main component or partially polymerized prepolymer of the monomer mixture.

In the viscoelastic body containing both bubbles and microparticles, the average particle diameter of the microparticles is preferably from 30 to 100 μm, and the content of the microparticles is preferably from 5 to 50 percent by volume based on the total volume of the viscoelastic body.

The pressure-sensitive adhesive layer containing a blowing agent is preferably a layer as a polymerization product derived from a pressure-sensitive adhesive composition containing a blowing agent, which composition contains a vinyl monomer mixture containing at least one alkyl (meth)acrylate whose alkyl moiety having 2 to 18 carbon atoms as a main component, or a partially polymerized prepolymer of the monomer mixture; one or more photoinitiators; one or more multifunctional (meth)acrylates; and one or more blowing agents, in which the pressure-sensitive adhesive layer containing a blowing agent has a solvent-insoluble content of from 35 to 99 percent by weight.

The vinyl monomer mixture or partially polymerized product thereof constituting the pressure-sensitive adhesive layer containing a blowing agent may include, as monomer components, at least one alkyl (meth)acrylate monomer (a1) whose alkyl moiety having 2 to 18 carbon atom, represented by following Formula (1) :
[Chemical Formula 1]

$$CH_2=C(R^1)COOR^2 \qquad (1)$$

wherein $R^1$ represents hydrogen atom or methyl group, and $R^2$ represents an alkyl group having 2 to 18 carbon atoms; at least one N-hydroxyalkyl(meth)acrylamide monomer (a2) represented by following Formula (2):
[Chemical Formula 2]

$$CH_2=C(R^3)CONHR^4 \qquad (2)$$

wherein $R^3$ represents hydrogen atom or methyl group, and $R^4$ represents a hydroxyalkyl group having 1 to 4 carbon atoms; and at least one nitrogen-containing monomer (a3).

The vinyl monomer mixture or partially polymerized prepolymer thereof preferably contains 50 to 85 percent by weight of the alkyl (meth)acrylate monomer (a1) whose alkyl moiety having 2 to 18 carbon atom; 0.1 to 12 percent by weight of the N-hydroxyalkyl(meth)acrylamide monomer (a2); and 10 to 40 percent by weight of the nitrogen-containing monomer (a3).

In the vinyl monomer mixture or partially polymerized prepolymer thereof, the total content of the alkyl (meth)acrylate monomer (a1) whose alkyl moiety having 2 to 18 carbon atom, the N-hydroxyalkyl(meth)acrylamide monomer (a2), and the nitrogen-containing monomer (a3) is preferably 90 percent by weight or more based on the total weight of monomer components constituting the pressure-sensitive adhesive composition containing a blowing agent.

The vinyl monomer mixture or partially polymerized prepolymer thereof preferably contains substantially no carboxyl-containing monomer.

The N-hydroxyalkyl(meth)acrylamide monomer (a2) is preferably N-(2-hydroxyethyl)(meth)acrylamide.

The nitrogen-containing monomer (a3) is preferably an N-vinyl cyclic amide represented by following Formula (3):

[Chemical Formula 3]

$$CH_2=CHNCOR^5 \qquad (3)$$

wherein $R^5$ represents a bivalent organic group.

The pressure-sensitive adhesive composition containing a blowing agent especially preferably contains 0.001 to 5 parts by weight of the photoinitiator, 10 to 200 parts by weight of the blowing agent, and 0.001 to 5 parts by weight of the multifunctional (meth)acrylate, per 100 parts by weight of the vinyl monomer mixture containing at least one alkyl (meth)acrylate whose alkyl moiety having 2 to 18 carbon atoms as a main component or partially polymerized prepolymer

of the monomer mixture.

The pressure-sensitive adhesive layer containing a blowing agent preferably contains heat-expandable microspheres as the blowing agent. The pressure-sensitive adhesive layer containing a blowing agent preferably has a thickness of from 30 to 200 μm.

Advantages

The heat-expandable/peelable acrylic pressure-sensitive adhesive tape according to the present invention has the above configuration, thereby maintains a high adhesion force during bonding with an adherend to form a bonded part, but, upon the separation/debonding of the bonded part, shows a reduced adhesive strength through heating, and can be easily separated/debonded from the adherend, regardless of whether the surface of the adherend is uneven or not.

Brief Description of Drawings

[FIG. 1] FIG. 1 depicts schematic cross-sectional views illustrating a production process embodiment of a heat-expandable/peelable acrylic pressure-sensitive adhesive tape according to an embodiment of the present invention.
[FIG. 2] FIG. 2 depicts schematic cross-sectional views illustrating another production process embodiment of a heat-expandable/peelable acrylic pressure-sensitive adhesive tape according to another embodiment of the present invention.
[FIG. 3] FIG. 3 depicts schematic cross-sectional views illustrating yet another production process embodiment of a heat-expandable/peelable acrylic pressure-sensitive adhesive tape according to yet another embodiment of the present invention.
[FIG. 4] FIG. 4 depicts schematic diagrams showing how to measure a wetted area ratio.

Reference Numerals

1a first step in Production Process Embodiment 1
1b second step in Production Process Embodiment 1
1c third step in Production Process Embodiment 1
1d fourth step in Production Process Embodiment 1
1e heat-expandable/peelable acrylic pressure-sensitive adhesive tape produced according to Production Process

Embodiment 1

2a first step in Production Process Embodiment 2
2b second step in Production Process Embodiment 2
2c third step in Production Process Embodiment 2
2d fourth step in Production Process Embodiment 2
2e heat-expandable/peelable acrylic pressure-sensitive adhesive tape produced according to Production Process

Embodiment 2

3a first step in Production Process Embodiment 3
3b second step in Production Process Embodiment 3
3c third step in Production Process Embodiment 3
3d fourth step in Production Process Embodiment 3
3e heat-expandable/peelable acrylic pressure-sensitive adhesive tape produced according to Production Process

Embodiment 3

11 layer of polymerizable composition containing both bubbles and microparticles
12 layer of pressure-sensitive adhesive composition containing a blowing agent
13 release film
14 pressure-sensitive adhesive layer containing a blowing agent
15 viscoelastic body containing both bubbles and microparticles (viscoelastic substrate containing both bubbles and microparticles)
16 active energy rays
17 heat-expandable/peelable acrylic pressure-sensitive adhesive tape (single-sided)
18 heat-expandable/peelable acrylic pressure-sensitive adhesive tape (double-sided)
4a sample for the measurement of wetted area ratio
4b adherend for the measurement of wetted area ratio
4c schematic view of sample affixed to adherend through bonding using sufficient pressure, for the measurement of wetted area ratio
41 acrylic plate
42 sheet according to any of Examples and Comparative Examples
43 poly(ethylene terephthalate) film
44a wetting
44b wetting
44c wetting
44d wetting

Best Modes for Carrying Out the Invention

[Heat-Expandable/peelable Acrylic Pressure-Sensitive Adhesive Tape]

Heat-expandable/peelable acrylic pressure-sensitive adhesive tapes according to embodiments of the present invention are pressure-sensitive adhesive tapes each include a viscoelastic body containing both bubbles and microparticles, and a pressure-sensitive adhesive layer containing a blowing agent present on or above one or both surfaces of the viscoelastic body and are pressure-sensitive adhesive tapes adopted to removing (re-peeling), which maintain high adhesion force during bonding with an adherend, but, upon peeling, show reduced adhesive strengths (bond strengths). Above all, as having a viscoelastic body containing both bubbles and microparticles as a base material (substrate), the tapes satisfactorily absorb gaps (height gaps; difference in levels), thereby maintain high adhesion force during bonding with an adherend even having an uneven surface but, upon peeling therefrom, easily show reduced adhesive strengths (bond strengths) due to the expansion of the blowing agent through heating. The tapes preferably further include a release film (separator) on the pressure-sensitive adhesive layer so as to protect the adhesive face of the pressure-sensitive adhesive layer.

The heat-expandable/peelable acrylic pressure-sensitive adhesive tapes may each further include one or more other layers, such as intermediate layers and under coats, within ranges not adversely affecting the advantages of the present invention.

The intermediate layers include, for example, one or more intermediate layers provided between the viscoelastic body containing both bubbles and microparticles and the pressure-sensitive adhesive layer containing a blowing agent. Exemplary intermediate layers include a coating layer of release agent to impart releasability; a coating layer of primer to improve adhesion between layers; a layer to help the tape to be satisfactorily deformable; a layer to provide a larger adhesion area with the adherend; a layer to provide higher bond strength to the adherend; a layer to allow the tape to satisfactorily follow the surface shape of adherends; a layer to more satisfactorily reduce the bond strength of the tape through heating; and a layer to allow the tape to peel off more satisfactorily after heating.

The heat-expandable/peelable acrylic pressure-sensitive adhesive tapes according to the present invention may each be a double-sided pressure-sensitive adhesive sheet having adhesive faces on both sides thereof; or a single-sided pressure-sensitive adhesive sheet having an adhesive face on one side thereof. In such heat-expandable/peelable acrylic pressure-sensitive adhesive tapes in the form of a double-sided pressure-sensitive adhesive sheet, the two adhesive faces may be provided by the pressure-sensitive adhesive layers alone. Alternatively, it is also acceptable that one of the two adhesive faces is provided by a pressure-sensitive adhesive layer containing a blowing agent, and the other adhesive face is provided by a pressure-sensitive adhesive layer other than the pressure-sensitive adhesive layer containing a blowing agent (this layer hereinafter also referred to as "blowing-agent-free pressure-sensitive adhesive

layer"). The blowing-agent-free pressure-sensitive adhesive layer may be prepared according typically to a known method of forming a pressure-sensitive adhesive layer using a pressure-sensitive adhesive. Exemplary pressure-sensitive adhesives herein include acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorinated pressure-sensitive adhesives, and epoxy pressure-sensitive adhesives. The thickness of the blowing-agent-free pressure-sensitive adhesive layer is not particularly limited and can be set as appropriate according to the intended use and the way to use the tape.

The heat-expandable/peelable acrylic pressure-sensitive adhesive tapes according to the present invention may be wound as a roll or stacked as a multilayer sheet. Specifically, the heat-expandable/peelable acrylic pressure-sensitive adhesive tapes may be in the form typically of sheets or tapes. In heat-expandable/peelable acrylic pressure-sensitive adhesive tapes in the form of wound rolls, the adhesive faces may be protected by a separator or may be protected by a releasably treated layer (backing layer) arranged on the other side of the base material (substrate). Exemplary release treatment agents (release agents) for use in the formation of a releasably treated layer (backing layer) on the other side of the base material include silicone release agents and long-chain alkyl release agents.

(Viscoelastic Body Containing Both Bubbles and Microparticles)

The viscoelastic body containing both bubbles and microparticles is a layer formed from a polymerizable composition containing microparticles and is generally a layer prepared through polymerization of a polymerizable composition containing microparticles and further containing bubbles (hereinafter also referred to as a "polymerizable composition containing both bubbles and microparticles"). The viscoelastic body contains both bubbles and microparticles and, in addition, has viscoelastic properties. The heat-expandable/peelable acrylic pressure-sensitive adhesive tapes each having such a viscoelastic body containing both bubbles and microparticles satisfactorily absorb gaps on an uneven surface of an adherend and exhibit high adhesion force during bonding with the adherend. The former advantage is obtained because the viscoelastic body contains bubbles; and the latter advantage is obtained because the viscoelastic body contains microparticles. The viscoelastic body containing both bubbles and microparticles may be a viscoelastic substrate containing both bubbles and microparticles.

The polymerizable composition containing both bubbles and microparticles constituting the viscoelastic body containing both bubbles and microparticles is a composition including at least a monomer mixture for constituting a base polymer or a partially polymerized prepolymer thereof, microparticles, and bubbles.

Though not limited as long as the viscoelastic body containing both bubbles and microparticles has viscoelastic properties, the base polymer herein can be suitably chosen from among base polymers in pressure-sensitive adhesives (tacky adhesives) such as acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorinated pressure-sensitive adhesives, and epoxy pressure-sensitive adhesives.

Each of different base polymers can be used alone or in combination. Exemplary preferred base polymers are those for use in acrylic pressure-sensitive adhesives. Such acrylic pressure-sensitive adhesives generally contain acrylic polymers as base polymers. Specifically, preferred examples of the polymerizable composition containing both bubbles and microparticles for constituting the viscoelastic body containing both bubbles and microparticles include polymerizable compositions containing both bubbles and microparticles, each of which contains, as a main monomer component, a vinyl monomer component for the formation of an acrylic polymer; of which more preferred are polymerizable compositions containing both bubbles and microparticles, each of which contains a vinyl monomer mixture or a partially polymerized prepolymer thereof, one or more photoinitiators, the microparticles, one or more multifunctional (meth)acrylates, and the bubbles.

Vinyl monomers for use in the polymerizable composition containing both bubbles and microparticles are not especially limited, as long as they have at least one unsaturated double bond and are monomers that can undergo radical polymerization (radically polymerizable monomers) but are preferably acrylic monomers for their reactivity, of which alkyl (meth)acrylates whose alkyl moiety having 2 to 18 carbon atoms are more preferred. The main component of the vinyl monomer mixture or partially polymerized prepolymer thereof for use in the polymerizable composition containing both bubbles and microparticles is preferably at least one of acrylic monomers, of which alkyl (meth)acrylates whose alkyl moiety (linear or branched-chain alkyl group) having 2 to 18 carbon atoms are more preferred. As used herein, the term "main component" means that the component in question is contained in an amount of 50 percent by weight or more. Other corresponding terms are defined in the same manner

Exemplary alkyl (meth)acrylates whose alkyl moiety having 2 to 18 carbon atoms include ethyl (meth)acrylates, n-propyl (meth)acrylates, isopropyl (meth)acrylates, n-butyl (meth)acrylates, sec-butyl (meth)acrylates, t-butyl (meth)acrylates, n-octyl (meth)acrylates, isooctyl (meth)acrylates, 2-ethylhexyl (meth)acrylates, isononyl (meth)acrylates, dodecyl (meth)acrylates, and isostearyl (meth)acrylates. Each of different alkyl (meth)acrylates may be used alone or in combination. As used herein the term "(meth)acrylate" means "acrylate" and/or "methacrylate", and other corresponding terms are defined in the same manner.

The polymerizable composition containing both bubbles and microparticles may further contain one or more copolymerizable monomers in combination with one or more vinyl monomers (of vinyl monomers, acrylic monomers are preferred). Specifically, the vinyl monomer mixture or partially polymerized prepolymer thereof in the polymerizable composition containing both bubbles and microparticles may contain one or more copolymerizable monomers. Exemplary copolymerizable monomers include carboxyl-containing monomers such as acrylic acid, methacrylic acid, carboxyethyl acrylate, carboxypentyl acrylate, itaconic acid, maleic acid, and crotonic acid; hydroxyl-containing monomers such as 2-hydroxyethyl (meth)acrylates, 2-hydroxypropyl (meth)acrylates, 4-hydroxybutyl (meth)acrylates, 6-hydroxyhexyl (meth)acrylates, 8-hydroxyoctyl (meth)acrylates, 10-hydroxydecyl (meth)acrylates, 12-hydroxylauryl (meth)acrylates, and (4-hydroxymethylcyclohexyl)methyl acrylate; acid anhydride monomers such as maleic anhydride and itaconic anhydride; sulfo-containing monomers such as 2-acrylamido-2-methylpropanesulfonic acid and sulfopropyl acrylate; phosphate-containing monomers such as 2-hydroxyethylacryloyl phosphate; amide monomers including (meth)acrylamides and N-substituted (meth)acrylamides such as N-methylolacrylamide; succinimide monomers such as N-(meth)acryloyloxymethylenesuccinimides, N-(meth)acryloyl-6-oxyhexamethylenesuccinimides, and N-(meth)acryloyl-8-oxyoctamethylenesuccinimides; vinyl monomers such as vinyl acetate, N-vinylpyrrolidone, N-vinylcarboxamides, styrene, and N-vinylcaprolactam; cyano acrylate monomers such as acrylonitrile and methacrylonitrile; acrylic ester monomers such as glycidyl (meth)acrylates, tetrahydrofurfuryl (meth)acrylates, polyethylene glycol (meth)acrylates, polypropylene glycol (meth)acrylates, fluorine-containing (meth)acrylates, silicone (meth)acrylates, and 2-methoxyethyl acrylate; alkyl (meth)acrylates each having another alkyl group than those of the alkyl (meth)acrylates as the main components, such as methyl (meth)acrylates and nonadecyl (meth)acrylates; and alicyclic acrylates such as isobornyl (meth)acrylates. Each of different copolymerizable monomers may be used alone or in combination.

The vinyl monomer mixture or partially polymerized prepolymer thereof constituting the polymerizable composition containing both bubbles and microparticles, when containing one or more copolymerizable monomers, preferably contains vinyl monomer(s) in a content of 50 to 99.9 percent by weight and copolymerizable monomer(s) in a content of 0.1 to 50 percent by weight; more preferably contains vinyl monomer(s) in a content of 60 to 99.9 percent by weight, and copolymerizable monomer(s) in a content of 0.1 to 40 percent by weight; furthermore preferably contains vinyl monomer(s) in a content of 80 to 99.5 percent by weight and copolymerizable monomer(s) in a content of 0.5 to 20 percent by weight; and still further preferably contains vinyl monomer(s) in a content of 90 to 99 percent by weight and copolymerizable monomer(s) in a content of 1 to 10 percent by weight.

Preferred copolymerizable monomers include hydroxyl-containing monomers and carboxyl-containing monomers, of which acrylic acid is more preferred. The amount thereof is preferably from 1 to 10 percent by weight for further higher adhesive strength.

The polymerizable composition containing both bubbles and microparticles may contain one or more polymerization initiators of every kind, such as thermopolymerization initiators and photoinitiators (photopolymerization initiators), without limitation, of which photoinitiators are preferred for shorter polymerization period.

In an embodiment, a polymerizable composition containing both bubbles and microparticles and further containing one or more polymerization initiators such as thermopolymerization initiators and photoinitiators is used for the preparation of the viscoelastic body containing both bubbles and microparticles. This polymerizable composition can be cured by using a reaction through the application of heat or active energy rays and can thereby be cured as intact as holding the bubbles and microparticles therein, to form a viscoelastic body containing both bubbles and microparticles. Specifically, this easily gives a viscoelastic body structurally stably containing both microparticles and bubbles. In a preferred embodiment of the present invention, one or more photoinitiators is used as the polymerization initiator. In this embodiment, it is preferred to employ a polymerization reaction by the action of active energy rays (photo-curing reaction) to give a viscoelastic body structurally stably containing both bubbles and microparticles. Each of different polymerization initiators can be used alone or in combination.

Though not limited, examples of photoinitiators for use in the polymerizable composition containing both bubbles and microparticles include benzoin ether photoinitiators, acetophenone photoinitiators, $\alpha$-ketol photoinitiators, aromatic sulfonyl chloride photoinitiators, photoactive oxime photoinitiators, benzoin photoinitiators, benzil photoinitiators, benzophenone photoinitiators, ketal photoinitiators, and thioxanthone photoinitiators.

Specifically, exemplary benzoin ether photoinitiators include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Exemplary acetophenone photoinitiators include 2,2-diethoxyacetophenone, 2,2-dimethoxy-2-phenylacetophenone, 1-hydroxycyclohexyl phenyl ketone, 4-phenoxydichloroacetophenone, and 4-t-butyl-dichloroacetophenone. Exemplary $\alpha$-ketol photoinitiators include 2-methyl-2-hydroxypropiophenone and 1-[4-(2-hydroxyethyl)-phenyl]-2-hydroxy-2-methylpropan-1-one. Exemplary aromatic sulfonyl chloride photoinitiators include 2-naphthalenesulfonyl chloride. Exemplary photoactive oxime photoinitiators include 1-phenyl-1,1-propanedione-2-(o-ethoxycarbonyl)-oxime. Exemplary benzoin photoinitiators include benzoin. Exemplary benzil photoinitiators include benzil (i.e., dibenzoyl). Exemplary

benzophenone photoinitiators include benzophenone, benzoylbenzoic acid, 3,3'-dimethyl-4-methoxybenzophenone, polyvinylbenzophenones, and α-hydroxycyclohexyl phenyl ketone. Exemplary ketal photoinitiators include benzil dimethyl ketal. Exemplary thioxanthone photoinitiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone.

Though not critical, the amount of photoinitiators used in the polymerizable composition containing both bubbles and microparticles is, for example, from 0.001 to 5 parts by weight, preferably from 0.01 to 5 parts by weight, and more preferably from 0.05 to 3 parts by weight, per 100 parts by weight of total monomer components of the vinyl monomer mixture or partially polymerized prepolymer thereof contained in the polymerizable composition containing both bubbles and microparticles.

Exemplary thermopolymerization initiators for use in the polymerizable composition containing both bubbles and microparticles include azo thermopolymerization initiators such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine) dihydrochloride; peroxide thermopolymerization initiators such as dibenzoyl peroxide and tert-butyl permaleate; and redox thermopolymerization initiators. The amount of thermopolymerization initiators is not particularly limited, as long as being within ranges where the initiators can function as thermopolymerization initiators.

Exemplary microparticles for use in the viscoelastic body containing both bubbles and microparticles include particles of metals such as copper, nickel, aluminum, chromium, iron, and stainless steel, and particles of oxides of these metals; particles of carbides such as silicon carbide, boron carbide, and nitrogen carbide; particles of nitrides such as aluminum nitride, silicon nitride, and boron nitride; particles of ceramics represented by oxides such as alumina and zirconia; microparticles of inorganic substances such as calcium carbide, aluminum hydroxide, glass, and silica; particles of naturally-occurring materials such as white sandy loam ("shirasu") and sand; and particles of polymers such as polystyrenes, poly(methyl methacrylate)s, phenolic resins, benzoguanamine resins, urea resins, silicone resins, nylons, polyesters, polyurethanes, polyethylenes, polypropylenes, polyamides, and polyimides.

Exemplary microparticles for use in the viscoelastic body containing both bubbles and microparticles further include hollow inorganic microspheres and hollow organic microspheres. Specifically, exemplary hollow inorganic microspheres include hollow balloons made of glass, such as hollow glass balloons; hollow balloons made of metallic compounds, such as hollow alumina balloons; and hollow balloons made of ceramics and porcelain, such as hollow ceramic balloons. Exemplary hollow organic microspheres include hollow balloons made from resins, such as hollow acrylic resin balloons and hollow poly(vinylidene chloride) balloons.

Exemplary commercially available hollow glass balloons include a product supplied by Fuji Silysia Chemical Ltd. under the trade name "Fuji Balloon" (glass microballoon); products supplied by Tokai Kogyo Co., Ltd. under the trade names "CEL-STAR Z-25", "CEL-STAR Z-27", "CEL-STAR CZ-31T", "CEL-STAR Z-36", "CEL-STAR Z-39", "CEL-STAR T-36", "CEL-STAR SX-39", and "CEL-STAR PZ-6000"; and a product supplied by Fine Balloon Limited under the trade name "Silax Fine Balloon".

Exemplary microparticles for use in the viscoelastic body containing both bubbles and microparticles still further include solid (non-hollow) glass balloons. Exemplary commercially available solid glass balloons include a product supplied by Asahi Glass Co., Ltd. under the trade name "SUNSPHERE NP-100"; and products supplied by Potters-Ballotini Co., Ltd. under the trade names "Micro Glass Beads EMB-20" and "Glass Beads EGB-210".

Of the microparticles, preferred are hollow inorganic microparticles, of which hollow glass balloons are more preferred, from the viewpoints of the weight of the component and the polymerization efficiency upon the application of active energy rays typified by ultraviolet rays. Use of hollow glass balloons helps to improve adhesive strength at high temperatures without adversely affecting other characteristic properties such as shear force and holding power (shear adhesion). Each of different types of microparticles may be used alone or in combination. Such microparticles may have been subjected to surface treatments such as a treatment for reducing surface tension typically with a silicone compound or fluorine compound.

Though not critical, the particle diameter (average particle diameter) of microparticles may be chosen within ranges of, for example, from 1 to 500 μm, preferably from 5 to 200 μm, more preferably from 10 to 100 μm, and furthermore preferably from 30 to 100 μm.

Though not critical, the specific gravity (true density) of the microparticles may be chosen within ranges of, for example, from 0.01 to 1.8 g/cm$^3$ and preferably from 0.02 to 1.5 g/cm$^3$. Microparticles having a specific gravity of less than 0.01 g/cm$^3$ may not be uniformly dispersed in the polymerization composition, because they may undesirably float upon mixing with other components. Additionally, they may have insufficient strength and may undergo breakage. In contrast, microparticles having a specific gravity of more than 1.8 g/cm$^3$ may have insufficient transmittance with respect to active energy rays typified by ultraviolet rays, and this may impair the efficiency in a photo-curing reaction. In addition, this may impair the workability, because the resulting heat-expandable/peelable acrylic pressure-sensitive adhesive

tape may have an excessively increased weight. When used as the microparticles, the true density of hollow inorganic microparticles is preferably from 0.1 to 0.6 g/cm$^3$; and that of hollow organic microparticles is preferably from 0.01 to 0.05 g/cm$^3$.

Though not critical, the amount of microparticles in the polymerizable composition containing both bubbles and microparticles may be set within such ranges that the polymerizable composition gives a viscoelastic body containing both bubbles and microparticles, which viscoelastic body contains the microparticles in an amount of, for example, from 5 to 50 percent by volume, preferably from 10 to 45 percent by volume, and more preferably from 15 to 40 percent by volume, based on the total volume of the viscoelastic body. The microparticles, if present in the composition in such an amount that the amount in the viscoelastic body is less than 5 percent by volume, may not effectively exhibit their advantageous effects. In contrast, the microparticles, if present in the composition in such an amount that the amount in the viscoelastic body is more than 50 percent by volume, may disturb the viscoelastic body containing both bubbles and microparticles to have satisfactory viscoelasticity.

Multifunctional (meth)acrylates for use in the polymerizable composition containing both bubbles and microparticles can be any compounds, as long as each having at least two (meth)acryloyl groups. As used herein, the term "(meth)acryloyl group" means "acryloyl group" and/or "methacryloyl group", and other corresponding terms are defined in the same manner.

Exemplary multifunctional (meth)acrylates include trimethylolpropane tri(meth)acrylates, tetramethylolmethane tetraacrylate, pentaerythritol di(meth)acrylates, pentaerythritol tri(meth)acrylates, pentaerythritol tetra(meth)acrylates, 1,2-ethylene glycol di(meth)acrylates, 1,4-butylene glycol di(meth)acrylates, 1,6-hexanediol di(meth)acrylates, 1,12-dodecanediol di(meth)acrylates, dipentaerythritol monohydroxypenta(meth)acrylates, dipentaerythritol hexa(meth)acrylates, polyethylene glycol di(meth)acrylates, hexanediol di(meth)acrylates, (poly)ethylene glycol di(meth)acrylates, (poly)propylene glycol di(meth)acrylates, neopentyl glycol di(meth)acrylates, tetramethylolmethane tri(meth)acrylates, allyl (meth)acrylates, vinyl (meth)acrylates, epoxy acrylates, polyester acrylates, urethane acrylates; and reactive hyperbranched polymers each having two or more terminal (meth)acryloyl groups, such as products supplied by SARTOMER COMPANY, INC. under the trade names "CN2300", "CN2301", and "CN2320". Each of different multifunctional (meth)acrylates may be used alone or in combination.

The amount of multifunctional (meth)acrylates in the polymerizable composition containing both bubbles and microparticles is preferably such that the solvent-insoluble content in the viscoelastic body containing both bubbles and microparticles is from 45 to 99 percent by weight, and preferably from 50 to 95 percent by weight. A viscoelastic body containing both bubbles and microparticles, if having a solvent-insoluble content of less than 45 percent by weight, may have an insufficient cohesive strength to thereby fail to prevent unintended foaming. In contrast, a viscoelastic body containing both bubbles and microparticles, if having a solvent-insoluble content of more than 99 percent by weight, may show insufficient flexibility, and this may adversely affect the viscoelasticity and appearance.

As used herein the term "solvent-insoluble content" in a viscoelastic body containing both bubbles and microparticles refers to the "proportion of solvent-insoluble components" in the viscoelastic body and is determined according to the following "method for measuring solvent-insoluble content in viscoelastic body containing both bubbles and microparticles". Microparticles that are insoluble in a solvent are also included in the solvent-insoluble components in the viscoelastic body containing both bubbles and microparticles.

Specifically, the solvent-insoluble content in the viscoelastic body containing both bubbles and microparticles is determined in the following manner. About 1 gram of the viscoelastic body containing both bubbles and microparticles is sampled and precisely weighed to determine the weight of the sampled viscoelastic body before immersion. Next, the sample is immersed in about 40 g of ethyl acetate for 7 days, all components insoluble in ethyl acetate are recovered, dried at 130°C for 2 hours, and the dry weight of the insoluble components is determined. The determined dry weight is substituted into the following equation:

Solvent-insoluble content (%) in viscoelastic body containing both bubbles and microparticles = ((Dry weight of insoluble components)/(Weight of viscoelastic body before immersion)) x 100

The multifunctional (meth)acrylates are used in the polymerizable composition containing both bubbles and microparticles in such an amount that the solvent-insoluble content in the viscoelastic body containing both bubbles and microparticles falls within the above-specified range, as has been described above. While varying depending on their molecular weights and numbers of functional groups, the specific amount of the multifunctional (meth)acrylates is generally from 0.001 to 5 parts by weight, preferably from 0.001 to 3 parts by weight, and more preferably from 0.01 to 2

parts by weight, per 100 parts by weight of total monomer components of the vinyl monomer mixture or partially polymerized prepolymer thereof in the polymerizable composition containing both bubbles and microparticles. If the amount is more than 5 parts by weight, the resulting heat-expandable/peelable acrylic pressure-sensitive adhesive tape may exhibit insufficient cohesive force and show insufficient pressure-sensitive adhesiveness (tack strength). In contrast, if the amount is excessively small (e.g., if it is less than 0.001 parts by weight), the heat-expandable/peelable acrylic pressure-sensitive adhesive tape may show insufficient cohesive force.

For better handleability, the polymerizable composition containing both bubbles and microparticles is preferably adjusted to have a suitable viscosity for coating. Specifically, the viscosity is generally preferably from 0.3 to 40 Pa.s in terms of viscosity measured with a Brookfield viscometer at a measurement temperature of 25°C. To have such a suitable viscosity, the vinyl monomer mixture may have been prepolymerized to give a partially polymerized prepolymer in the polymerizable composition. Specifically, the polymerizable composition containing both bubbles and microparticles may contain a partially polymerized prepolymer of the vinyl monomer mixture.

While varying depending on the molecular weight of a partially polymerized portion, the degree of polymerization of a partially polymerized prepolymer of the vinyl monomer mixture is approximately from 2 to 40 percent by weight and preferably approximately from 5 to 20 percent by weight. The partial polymerization is generally conducted by the application of active energy rays typified by ultraviolet rays while avoiding contact with oxygen.

The degree of polymerization of a partially polymerized prepolymer may be determined in the following manner. Initially, about 0.5 g of the partially polymerized prepolymer is precisely weighed, this is dried at 130°C for 2 hours, and the weight of the dried prepolymer is precisely weighed to give a weight loss [volatile content (weight of unreacted monomers)], and the weight loss is substituted into the following equation:

$$\text{Degree of polymerization (\%) of partially polymerized prepolymer} = [1-(\text{Weight loss})/(\text{Weight of partially polymerized prepolymer before drying})] \times 100$$

The viscosity of the polymerizable composition containing both bubbles and microparticles may also be adjusted by suitably adding a polymer as a thickener. Exemplary polymers as thickeners include acrylic polymers as copolymers of the alkyl (meth)acrylate typically with acrylic acid, acrylamide, acrylonitrile, and/or acryloylmorpholine; styrene-butadiene rubbers (SBRs); isoprene rubbers; styrene-butadiene block copolymers (SBSs); ethylene-vinyl acetate copolymers; acrylic rubbers; polyurethanes; and polyesters. Each of different polymers as thickeners may be used alone or in combination.

The amount of polymers as thickeners may be 40 percent by weight or less, and, for example, from 5 to 40 percent by weight based on the total weight of the polymerizable composition containing both bubbles and microparticles.

The viscoelastic body contains bubbles. Exemplary ways to allow bubbles to be contained in the viscoelastic body include (1) the way in which the viscoelastic body containing both bubbles and microparticles is formed from a polymerizable composition containing microparticles and further containing a gas component for the formation of bubbles (this component is hereinafter also referred to as "bubble-constituting gas"), to thereby form bubbles in the viscoelastic body; and (2) the way in which the viscoelastic body containing both bubbles and microparticles is formed from a pressure-sensitive adhesive composition containing microparticles and further containing a blowing agent, to thereby form bubbles in the viscoelastic body. The viscoelastic body containing both bubbles and microparticles in the present invention generally contains the bubbles in the way (1). The blowing agent is not particularly limited and can be chosen as appropriate from among known blowing agents such as heat-expandable microspheres.

The amount of bubbles to be contained in the viscoelastic body containing both bubbles and microparticles is not particularly limited and can be chosen suitably according typically to the intended use. Typically, the amount is from 3 to 30 percent by volume, preferably from 8 to 26 percent by volume, and more preferably from 13 to 22 percent by volume based on the total volume of the viscoelastic body containing both bubbles and microparticles. Bubbles, if contained in an amount of less than 3 percent by volume, may not sufficiently exhibit their advantageous effects. In contrast, bubbles, if contained in an amount of more than 30 percent by volume, may form open cells (open bubbles) penetrating the viscoelastic body containing both bubbles and microparticles, and this may adversely affect the viscoelasticity and appearance.

Bubbles contained in the viscoelastic body are basically preferably closed cells, but they may be a mixture of closed cells and semi-closed cells.

The bubbles are generally spheroidal, and preferably spherical, but they may be irregular spheroidal. The average diameter of the bubbles is not particularly limited and may be chosen within ranges of, for example, from 1 to 1000 μm, preferably from 10 to 500 μm, and more preferably from 30 to 300 μm.

Exemplary bubble components (gaseous components constituting bubbles; bubble-constituting gases) in the

bubbles include, but are not limited to, gases such as nitrogen, carbon dioxide, and inert gases such as argon gases; and other various gaseous components such as air. When a bubble-constituting gas is incorporated into the polymerizable composition typically before carrying out a polymerization reaction, the bubble-constituting gas should be one that does not adversely affect the reaction. Nitrogen is preferably used as the bubble-constituting gas, typically because it is inactive to such reactions and low in cost.

The polymerizable composition containing both bubbles and microparticles may further contain a surfactant so as to contain finely divided bubbles stably. Exemplary surfactants include hydrocarbon surfactants, silicone surfactants, and fluorochemical surfactants. Among them, fluorochemical surfactants are preferred, of which fluorochemical surfactants containing a fluorocarbon polymer each having a weight-average molecular weight of 20000 or more are more preferred.

Specifically, such a fluorochemical surfactant containing a fluorocarbon polymer having a weight-average molecular weight of 20000 or more, when used, helps the polymerizable composition containing both bubbles and microparticles to contain sufficient amounts of bubbles stably. This is probably because the large weight-average molecular weight of 20000 or more of the fluorocarbon polymer constituting the fluorochemical surfactant increases the film strengths (cell wall strengths) of formed bubbles, thus the composition can contain a larger amount of bubbles, and the formed bubbles become more stable to be more resistant to coalescence.

The weight-average molecular weight of the fluorocarbon polymer in the fluorochemical surfactant is not particularly limited, as long as it is 20000 or more, and may be set within ranges of, for example, from 20000 to 100000, preferably from 22000 to 80000, and more preferably from 24000 to 60000. A fluorocarbon polymer having a weight-average molecular weight of less than 20000, if used in the fluorochemical surfactant in the polymerizable composition, may not effectively help the polymerizable composition to contain or bear sufficient amounts of bubbles stably. Additionally, the fluorocarbon polymer of this type may not effectively prevent bubbles, even if contained in the polymerizable composition, from coalescence during the interval between the incorporation (mixing) of bubbles in the composition and the formation of a viscoelastic body containing both bubbles and microparticles from the polymerizable composition. The resulting viscoelastic body containing both bubbles and microparticles may contain insufficient amounts of bubbles and/or may contain holes (open holes) penetrating the viscoelastic body.

Each of different fluorocarbon polymers may be used alone or in combination.

The fluorocarbon polymers each contain at least a monomer having a fluorine-containing group (hereinafter also referred to as "fluorine-containing monomer") as a monomer component. Each of different fluorine-containing monomers may be used alone or in combination.

Exemplary preferred fluorine-containing monomers include vinyl monomers each having a fluorine-containing group. Preferred fluorine-containing groups in vinyl monomers having fluorine-containing groups include perfluoro groups. The perfluoro groups may be monovalent or multivalent (e.g., bivalent or higher). Exemplary preferred monovalent fluorine-containing groups (typified by perfluoro groups) include perfluoroalkyl groups such as $CF_3CF_2$ group and $CF_3CF_2CF_2$ group. The perfluoroalkyl groups may be bound to a vinyl monomer through another group such as -O- group, -OCO- group, or alkylene group. Specifically, the monovalent fluorine-containing group may be in the form typically of a perfluoro ether group such as perfluoroalkyloxy group; or a perfluoro ester group such as perfluoroalkyl-oxycarbonyl group or perfluoroalkyl-carbonyloxy group. Exemplary perfluoro ether groups include $CF_3CF_2O$ group and $CF_3CF_2CF_2O$ group. Exemplary perfluoro ester groups include $CF_3CF_2OCO$ group, $CF_3CF_2CF_2OCO$ group, $CF_3CF_2COO$ group, and $CF_3CF_2CF_2COO$ group.

Of multivalent fluorine-containing groups, exemplary bivalent fluorine-containing groups include perfluoroalkylene groups corresponding to the above-mentioned perfluoroalkyl groups, such as tetrafluoroethylene group and hexafluoropropylene group. The perfluoroalkylene groups may be bound to a principle chain (vinyl monomer) through another group, as in the perfluoroalkyl groups. Exemplary other groups include -O- group, -OCO- group, and alkylene groups. Typically, the perfluoroalkylene group may be in the forms typically of a perfluoroalkylene-oxy group such as tetrafluoroethylene-oxy group or hexafluoropropylene-oxy group; or a perfluoroalkylene-oxycarbonyl group such as tetrafluoroethylene-oxycarbonyl group or hexafluoropropylene-oxycarbonyl group.

Though not critical, the number of carbon atoms in the perfluoro moiety of the fluorine-containing group (e.g., a perfluoro group such as perfluoroalkyl group or perfluoroalkylene group) may be, for example, 1 or more, preferably from 3 to 30, and more preferably from 4 to 20.

Exemplary preferred vinyl monomers having a fluorine-containing group include (meth)acrylic esters each having a fluorine-containing group, of which perfluoroalkyl (meth)acrylates are more preferred. Exemplary perfluoroalkyl (meth)acrylates include perfluoroalkyl (meth)acrylates whose alkyl moiety having 1 to 20 carbon atoms, such as perfluoromethyl (meth)acrylates, perfluoroethyl (meth)acrylates, perfluoropropyl (meth)acrylates, perfluoroisopropyl (meth)acrylates, perfluorobutyl (meth)acrylates, perfluoroisobutyl (meth)acrylates, perfluoro-sec-butyl (meth)acrylates, perfluoro-tert-butyl (meth)acrylates, perfluoropentyl (meth)acrylates, perfluorohexyl (meth)acrylates, perfluoroheptyl (meth)acrylates, and perfluorooctyl (meth)acrylates.

The fluorocarbon polymer for use herein may further contain, as monomer components, one or more monomer

components (hereinafter also referred to as "non-fluorine monomers") copolymerizable with a fluorine-containing monomer, in addition to the fluorine-containing monomer. Each of different non-fluorine monomers may be used alone or in combination.

Typically, when the fluorine-containing monomer is a vinyl monomer having a fluorine-containing group [typified by a (meth)acrylic ester having a fluorine-containing group], (meth)acrylic esters are preferred as the non-fluorine monomers, of which alkyl (meth)acrylates are more preferred. Exemplary alkyl (meth)acrylates include alkyl (meth)acrylates whose alkyl moiety having 1 to 20 carbon atoms, such as methyl (meth)acrylates, ethyl (meth)acrylates, propyl (meth)acrylates, isopropyl (meth)acrylates, butyl (meth)acrylates, isobutyl (meth)acrylates, s-butyl (meth)acrylates, t-butyl (meth)acrylates, pentyl (meth)acrylates, hexyl (meth)acrylates, heptyl (meth)acrylates, octyl (meth)acrylates, 2-ethylhexyl (meth)acrylates, isooctyl (meth)acrylates, nonyl (meth)acrylates, isononyl (meth)acrylates, decyl (meth)acrylates, isodecyl (meth)acrylates, undecyl (meth)acrylates, dodecyl (meth)acrylates, tridecyl (meth)acrylates, tetradecyl (meth)acrylates, pentadecyl (meth)acrylates, hexadecyl (meth)acrylates, heptadecyl (meth)acrylates, octadecyl (meth)acrylates, nonadecyl (meth)acrylates, and eicosyl (meth)acrylates, of which alkyl (meth)acrylates whose alkyl moiety having 4 to 18 carbon atoms are more preferred.

Exemplary (meth)acrylic esters other than alkyl (meth)acrylates include (meth)acrylic esters of alicyclic hydrocarbons, such as cyclopentyl (meth)acrylates, cyclohexyl (meth)acrylates, and isobornyl (meth)acrylates; and (meth)acrylic esters of aromatic hydrocarbons, such as phenyl (meth)acrylates.

Exemplary non-fluorine monomers further include carboxyl-containing monomers such as (meth)acrylic acid, itaconic acid, maleic acid, fumaric acid, crotonic acid, and isocrotonic acid, and anhydrides of them; sulfo-containing monomers such as sodium vinylsulfonate; aromatic vinyl compounds such as styrene and vinyltoluene; cyano-containing monomers such as acrylonitrile and methacrylonitrile; olefins or dienes such as ethylene, butadiene, isoprene, and isobutylene; vinyl esters such as vinyl acetate; vinyl ethers such as vinyl alkyl ethers; vinyl chloride; amido-containing monomers such as acrylamide, methacrylamide, N-vinylpyrrolidone, N,N-dimethyl(meth)acrylamides, N-methylol(meth)acrylamides, N-methoxymethyl(meth)acrylamides, and N-butoxymethyl(meth)acrylamides; hydroxyl-containing monomers including hydroxylalkyl (meth)acrylates such as hydroxyethyl (meth)acrylates, hydroxypropyl (meth)acrylates, and hydroxybutyl (meth)acrylates; amino-containing monomers such as aminoethyl (meth)acrylates, dimethylaminoethyl (meth)acrylates, t-butylaminoethyl (meth)acrylates, and (meth)acryloylmorpholines; imido-containing monomers such as cyclohexylmaleimide and isopropylmaleimide; glycidyl-containing monomers such as glycidyl (meth)acrylates and methylglycidyl (meth)acrylates; and isocyanato-containing monomers such as 2-methacryloyloxyethyl isocyanate. Exemplary non-fluorine monomers still further include multifunctional copolymerizable monomers (multifunctional monomers) such as triethylene glycol di(meth)acrylates, diethylene glycol di(meth)acrylates, ethylene glycol di(meth)acrylates, tetraethylene glycol di(meth)acrylates, neopentyl glycol di(meth)acrylates, 1,6-hexanediol di(meth)acrylates, trimethylolpropane tri(meth)acrylates, pentaerythritol tri(meth)acrylates, dipentaerythritol hexa(meth)acrylates, and divinylbenzene.

Exemplary preferred fluorochemical surfactants for use in the present invention include fluorochemical surfactants containing fluorocarbon polymers including, as monomer components, at least vinyl monomers having a fluorine-containing group, of which those including (meth)acrylic esters having a fluorine-containing group as monomer components are more preferred. Among them, further preferred are fluorochemical surfactants containing fluorocarbon polymers including, as monomer components, a vinyl monomer having a fluorine-containing group in combination with a (meth)acrylic ester, of which those including, as monomer components, a (meth)acrylic ester having a fluorine-containing group in combination with an alkyl (meth)acrylate are especially preferred. The content of vinyl monomers having a fluorine-containing group, typified by (meth)acrylic esters having a fluorine-containing group, in the fluorocarbon polymers constituting fluorochemical surfactants is not critical and may be chosen as appropriate according to target characteristic properties of the surfactants.

Specific exemplary fluorochemical surfactants include commercially available products supplied by JEMCO Inc. under the trade names "EFTOP EF-352" and "EFTOP EF-801"; and a product supplied by Daikin Industries, Ltd. under the trade name "Unidyne TG-656".

Though not critical, the amount (in terms of solids content) of fluorochemical surfactants may be chosen within ranges of, for example, from 0.01 to 2 parts by weight, preferably from 0.03 to 1.5 parts by weight, and more preferably from 0.05 to 1 part by weight, per 100 parts by weight of the total monomer components in the polymerizable composition containing both bubbles and microparticles. Fluorochemical surfactants, if used in an amount of less than 0.01 part by weight per 100 parts by weight of the total monomer components of the polymerizable composition, may not be satisfactorily mixed with and contained in sufficient amounts in a polymerizable composition containing microparticles. In contrast, fluorochemical surfactants, if used in an amount of more than 2 parts by weight, may adversely affect the adhesive performance (adhesive properties).

Bubbles are preferably incorporated as a last component to form a polymerizable composition containing both bubbles and microparticles, for allowing the polymerizable composition to bear or contain bubbles stably to thereby form a viscoelastic body containing both bubbles and microparticles. It is more preferred to allow the microparticle-containing

polymerizable composition before bearing bubbles (hereinafter also referred to as "precursor for viscoelastic body containing both bubbles and microparticles") to have a higher viscosity. The viscosity of the precursor for viscoelastic body containing both bubbles and microparticles is not particularly limited, as long as sufficient amounts of bubbles can be held in the resulting composition stably. Typically, the viscosity is preferably from 5 to 50 Pa.s, and more preferably from 10 to 40 Pa.s, as measured with a BH type viscometer using a No. 5 rotor at a number of revolutions of 10 rpm and a measurement temperature of 30°C. A precursor for viscoelastic body containing both bubbles and microparticles, if having a low viscosity (BH type viscometer, No. 5 rotor, 10 rpm, 30°C) of less than 5 Pa.s, may not satisfactorily bear bubbles, because incorporated bubbles immediately undergo coalescence to escape out of the system. In contrast, a precursor for viscoelastic body containing both bubbles and microparticles, if having an excessively high viscosity of more than 50 Pa.s, may be difficult to bear sufficient amounts of bubbles to give a viscoelastic body containing both bubbles and microparticles.

The viscosity of the precursor for viscoelastic body containing both bubbles and microparticles may be adjusted, for example, by incorporating any of various polymer components such as acrylic rubbers and thickening additives into the precursor; or by partially polymerizing a vinyl monomer mixture as a component of the precursor. Specifically, a precursor for viscoelastic body containing both bubbles and microparticles having a suitable viscosity for stably bearing and holding bubbles may be obtained by mixing one or more vinyl monomers and a polymerization initiator (e.g., one or more photoinitiators) to give a monomer mixture; carrying out a polymerization reaction of the monomer mixture corresponding to the type of the polymerization initiator to give a composition (syrup) in which only part of monomer components are polymerized; and adding to the syrup a fluorochemical surfactant containing a fluorocarbon polymer with a weight-average molecular weight of 20000 or more, microparticles and other components used according to necessity, such as additives. Such a fluorochemical surfactant containing a fluorocarbon polymer with a weight-average molecular weight of 20000 or more, microparticles and other components added according to necessity, such as additives, may be previously incorporated into the vinyl monomer mixture before the preparation of the syrup.

The way to incorporate bubbles into the precursor is not particularly limited, and a known technique for mixing or blending bubbles into such compositions can be employed. An exemplary device for use herein is one that includes a disc having a through hole at the center part; a stator having a multiplicity of fine teeth and arranged on the disc; and a rotor facing the stator, having a multiplicity of fine teeth, and arranged on the disc. Using this device, a polymerizable composition containing microparticles and further containing finely divided and dispersed bubbles can be obtained in the following manner. The precursor for viscoelastic body containing both bubbles and microparticles is introduced in between the teeth of the stator and the teeth of the rotor, and a gaseous component for constituting bubbles (bubble-constituting gas) is introduced through the through hole into the precursor while rotating the rotor at high speed to allow the bubble-constituting gas to be finely divided, dispersed, and mixed in the precursor.

To suppress or prevent the coalescence of bubbles, it is desirable to carry out the steps from the incorporation of bubbles to the formation of the viscoelastic body containing both bubbles and microparticles continuously as a series of steps. Specifically, it is desirable that a polymerizable composition containing both bubbles and microparticles is prepared by blending bubbles into the precursor in the above-mentioned manner, and the prepared polymerizable composition containing both bubbles and microparticles is immediately used for the formation of a viscoelastic body containing both bubbles and microparticles typically according to the following method of forming a substrate.

A polymerizable composition containing both bubbles and microparticles of this configuration is resistant to coalescence of bubbles and thus stably contains sufficient amounts of bubbles. The polymerizable composition is therefore advantageously usable as a composition for the formation of a base material containing bubbles (e.g., viscoelastic body containing both bubbles and microparticles or viscoelastic substrate containing both bubbles and microparticles) in pressure-sensitive adhesive tapes or sheets. This is achieved by suitably choosing components for constituting the polymerizable composition containing both bubbles and microparticles, such as the vinyl monomer mixture or partially polymerized prepolymer thereof, photoinitiators, microparticles, multifunctional (meth)acrylates, and additives.

The polymerizable composition containing both bubbles and microparticles for the formation of the viscoelastic body containing both bubbles and microparticles may further contain any of suitable additives according to the intended use, in addition to the above-mentioned components. Exemplary additives include crosslinking agents such as polyisocyanate crosslinking agents, silicone crosslinking agents, epoxy crosslinking agents, and alkyl-etherified melamine crosslinking agents; tackifiers such as tackifiers that are solid, semi-solid, or liquid at room temperature and composed typically from any of rosin derivative resins, polyterpene resins, petroleum resins, and oil-soluble phenolic resins; plasticizers; fillers; age inhibitors; antioxidants; colorants such as pigments and dyestuffs; and softeners.

Though not limited, the viscoelastic body containing both bubbles and microparticles may be prepared, for example, by applying a polymerizable composition containing both bubbles and microparticle to a suitable base material such as a release film or substrate to form a layer of polymerizable composition containing both bubbles and microparticles, and drying and/or curing the layer according to necessity. The curing may be performed through the application of heat or active energy rays. The curing, when performed through the application of active energy rays (photocuring), is preferably carried out while blocking oxygen, because oxygen in the air may adversely affect the photopolymerization

reaction. The oxygen blocking may be performed typically by affixing a base material such as a release film or substrate onto the layer as appropriate or by carrying out photocuring in an atmosphere of nitrogen gas. The base material used as appropriate in the preparation of the viscoelastic body containing both bubbles and microparticles may be removed (peeled) during an adequate step in the preparation of the heat-expandable/peelable acrylic pressure-sensitive adhesive tapes according to the present invention or may be removed upon use of the prepared heat-expandable/peelable acrylic pressure-sensitive adhesive tapes.

Though not critical, the thickness of the viscoelastic body containing both bubbles and microparticles is generally 100 μm or more (e.g., from 100 to 1500 μm), preferably 200 μm or more (e.g., from 200 to 1400 μm), and more preferably 300 μm or more (e.g., from 300 μm to 1300 μm) to ensure a satisfactory adhesive strength. The viscoelastic body containing both bubbles and microparticles may have a single-layer structure or multilayer structure.

(Pressure-Sensitive Adhesive Layer Containing Blowing Agent)

The pressure-sensitive adhesive layer containing a blowing agent is not especialy limited, as long as being a layer formed from an acrylic pressure-sensitive adhesive containing a blowing agent, and generally contains an acrylic polymer as a base polymer. The base polymer of the pressure-sensitive adhesive layer containing a blowing agent may be identical to or different from the base polymer of the viscoelastic body containing both bubbles and microparticles in the heat-expandable/peelable acrylic pressure-sensitive adhesive tapes according to the present invention.

The heat-expandable/peelable acrylic pressure-sensitive adhesive tapes according to the present invention each contain a blowing agent in a pressure-sensitive adhesive layer and thereby show such properties that their adhesive strengths are easily reduced (easiness to peel) by the expansion of the blowing agent through heating. Specifically, the heat-expandable/peelable acrylic pressure-sensitive adhesive tapes have such characteristic properties that they exhibit satisfactory adhesiveness to an adherend but are easily peelable or removable from the adherend through heating, regardless of whether the surface of the adherend is uneven or not.

Of such pressure-sensitive adhesive compositions containing a blowing agent for the formation of the pressure-sensitive adhesive layer containing a blowing agent, preferred are acrylic pressure-sensitive adhesive compositions containing a blowing agent and containing one or more acrylic monomers as main monomer components. When the polymerizable composition containing both bubbles and microparticles contains one or more acrylic monomers as main monomer components, preferred is a pressure-sensitive adhesive composition containing a blowing agent having the formulation of the polymerizable composition containing both bubbles and microparticles, except for removing bubbles and microparticles therefrom but further containing a blowing agent. As used herein the term "pressure-sensitive adhesive composition" also includes a "composition for the formation of a pressure-sensitive adhesive".

The pressure-sensitive adhesive composition containing a blowing agent is preferably a pressure-sensitive adhesive composition containing a blowing agent which contains at least a vinyl monomer mixture or a partially polymerized prepolymer thereof, one or more photoinitiators, one or more multifunctional (meth)acrylates, and the blowing agent. This is because the corresponding polymerizable composition containing both bubbles and microparticles preferably contains at least a vinyl monomer mixture or a partially polymerized prepolymer thereof, one or more photoinitiators, microparticles, one or more multifunctional (meth)acrylates, and bubbles.

Vinyl monomers for use in the pressure-sensitive adhesive composition containing a blowing agent are not especially limited, as long as being monomers having an unsaturated double bond and can undergo radical polymerization (radically polymerizable monomers). Among them, acrylic monomers are preferred from the viewpoint of reactivity, of which alkyl (meth)acrylates (a1) whose alkyl moiety having 2 to 18 carbon atoms, represented by following Formula (1) are preferred. Specifically, the main component of the vinyl monomer mixture or partially polymerized prepolymer thereof for use in the pressure-sensitive adhesive composition containing a blowing agent is preferably an acrylic monomer, and is more preferably an alkyl (meth)acrylate (a1) whose alkyl moiety (linear or branched-chain alkyl group) having 2 to 18 carbon atoms, represented by following Formula (1):

[Chemical Formula 1]

$$CH_2{=}C(R^1)COOR^2 \qquad (1)$$

wherein $R^1$ represents hydrogen atom or methyl group; and $R^2$ represents an alkyl group having 2 to 18 carbon atoms.

Exemplary alkyl (meth)acrylates (a1) whose alkyl moiety having 2 to 18 carbon atoms, represented by Formula (1), include ethyl (meth)acrylates, n-propyl (meth)acrylates, isopropyl (meth)acrylates, n-butyl (meth)acrylates, sec-butyl (meth)acrylates, tert-butyl (meth)acrylates, n-octyl (meth)acrylates, isooctyl (meth)acrylates, 2-ethylhexyl (meth)acrylates, isononyl (meth)acrylates, dodecyl (meth)acrylates, and isostearyl (meth)acrylates. Each of different alkyl

(meth)acrylates may be used alone or in combination.

The pressure-sensitive adhesive composition containing a blowing agent may further contain one or more copolymerizable monomers in combination with the vinyl monomer typified by acrylic monomer. Specifically, the vinyl monomer mixture or partially polymerized prepolymer thereof contained in the pressure-sensitive adhesive composition may further contain one or more copolymerizable monomers.

Examples of such copolymerizable monomers include carboxyl-containing monomers such as ethylenically unsaturated monocarboxylic acids (e.g., acrylic acid, methacrylic acid, crotonic acid, carboxyethyl acrylate, and carboxypentyl acrylate), ethylenically unsaturated dicarboxylic acids (e.g., maleic acid, itaconic acid, and citraconic acid), and anhydrides of ethylenically unsaturated dicarboxylic acids (e.g., maleic anhydride and itaconic anhydride); hydroxyl-containing monomers such as 2-hydroxyethyl (meth)acrylates, 2-hydroxypropyl (meth)acrylates, 4-hydroxybutyl (meth)acrylates, 6-hydroxyhexyl (meth)acrylates, 8-hydroxyoctyl (meth)acrylates, 10-hydroxydecyl (meth)acrylates, 12-hydroxylauryl (meth)acrylates, and (4-hydroxymethylcyclohexyl)-methyl acrylate; sulfo-containing monomers such as 2-acrylamido-2-methylpropanesulfonic acid and sulfopropyl acrylate; phosphate-containing monomers such as 2-hydroxyethylacryloyl phosphate; amide monomers including (meth)acrylamides, and N-substituted (meth)acrylamides such as N-methylolacrylamide; succinimide monomers such as N-(meth)acryloyloxymethylenesuccinimides, N-(meth)acryloyl-6-oxyhexamethylenesuccinimides, and N-(meth)acryloyl-8-oxyoctamethylenesuccinimides; vinyl monomers such as vinyl acetate, N-vinylpyrrolidone, N-vinylcarboxamides, styrene, and N-vinylcaprolactam; cyano acrylate monomers such as acrylonitrile and methacrylonitrile; acrylic ester monomers such as glycidyl (meth)acrylates, tetrahydrofurfuryl (meth)acrylates, polyethylene glycol (meth)acrylates, polypropylene glycol (meth)acrylates, fluorine-containing (meth)acrylates, silicon-containing (meth)acrylates, and 2-methoxyethyl acrylate; alkyl (meth)acrylates each having another alkyl group than those of the alkyl (meth)acrylates as the main components, such as methyl (meth)acrylates and nonadecyl (meth)acrylates; and alicyclic acrylates such as isobornyl (meth)acrylates. Each of different copolymerizable monomers can be used alone or in combination. As used herein the term "carboxyl-containing monomer" refers to a vinyl monomer (ethylenically unsaturated monomer) having at least one carboxyl group per one molecule, which carboxyl group may be present in the form of anhydride.

The vinyl monomer mixture or partially polymerized prepolymer thereof constituting the pressure-sensitive adhesive composition containing a blowing agent, when containing one or more copolymerizable monomers, preferably contains vinyl monomers in a content of 50 to 99.9 percent by weight and copolymerizable monomers in a content of 0.1 to 50 percent by weight; more preferably contains vinyl monomers in a content of 60 to 99.9 percent by weight and copolymerizable monomers in a content of 0.1 to 40 percent by weight; furthermore preferably contains vinyl monomers in a content of 70 to 99.5 percent by weight and copolymerizable monomers in a content of 0.5 to 30 percent by weight; and still further preferably contains vinyl monomers in a content of 80 to 99 percent by weight and copolymerizable monomers in a content of 1 to 20 percent by weight.

Of the copolymerizable monomers, preferred are hydroxyl-containing monomers and carboxyl-containing monomers, of which acrylic acid is more preferred. The amount thereof is preferably from 1 to 10 percent by weight for better adhesive strength.

When the tape is adopted to an adherend containing a metal such as stainless steel (SUS) as a material, in a preferred embodiment, the vinyl monomer mixture or partially polymerized prepolymer thereof contains, as the copolymerizable monomers in combination with the monomer (a1), at least one N-hydroxyalkyl(meth)acrylamide monomer (a2) represented by Formula (2) and at least one nitrogen-containing monomer (a3). This combination use is preferred from the viewpoints of preventing the tack strength from increasing as a result of heating and of preventing the corrosion of the adherend.

The combination use of the N-hydroxyalkyl(meth)acrylamide monomer (a2) represented by Formula (2) and the nitrogen-containing monomer (a3) helps the pressure-sensitive adhesive layer containing a blowing agent to have a higher adhesive strength even when the pressure-sensitive adhesive composition does not contain substantially no acidic-group-containing monomer as a monomer component for the formation of an acrylic polymer as the base polymer. Examples of such acidic-group-containing monomers include carboxyl-containing monomers; and other monomers containing an acidic group (e.g., sulfonic group or phosphate group) other than carboxyl group, such as sulfo-containing monomers and phosphate-containing monomers. The improvement in adhesiveness through the combination use of the monomers (a2) and (a3) is to the same extent as in the case where a hydroxyl-containing monomer and/or a carboxyl-containing monomer (typified by acrylic acid) is used in an amount within the above-mentioned range. The above advantages allow the heat-expandable/peelable acrylic pressure-sensitive adhesive tape to maintain a satisfactory adhesiveness to an adherend but to be easily peelable from the adherend through heating, regardless of whether the surface of the adherend is uneven (rough) or not. Additionally, the specific vinyl monomer mixture contains substantially no acidic-group-containing monomer as a copolymerizable monomer, and the resulting heat-expandable/peelable acrylic pressure-sensitive adhesive tape according to the preferred embodiment, when applied directly to a metal surface, is highly prevented from corroding the metal surface.

As used herein the phrase "contains substantially no" refers to that the vinyl monomer mixture contains no

substance in question or, if any, contains the substance in a content of 0.1 percent by weight or less based on the amount of total monomer components. Typically, the phrase "contains substantially no" carboxyl-containing monomer as a monomer component means that the vinyl monomer mixture contains, as a monomer component, no carboxyl-containing monomer or contains any carboxyl-containing monomer(s) in a total content of 0.1 percent by weight or less based on the amount of total monomer components.

When the N-hydroxyalkyl(meth)acrylamide monomer (a2) represented by Formula (2) and nitrogen-containing monomer (a3) are used as copolymerizable monomers in combination with the monomer (a1), the content of alkyl (meth)acrylate monomer (a1), represented by Formula (1), whose alkyl moiety having 2 to 18 carbon atom may be from 50 to 85 percent by weight, and preferably from 60 to 80 percent by weight, in the vinyl monomer mixture or partially polymerized prepolymer thereof containing, as monomer components, the alkyl (meth)acrylate monomer (a1), represented by Formula (1), whose alkyl moiety having 2 to 18 carbon atom, N-hydroxyalkyl(meth)acrylamide monomer (a2) represented by Formula (2), and nitrogen-containing monomer (a3).

The N-hydroxyalkyl(meth)acrylamide monomer (a2) represented by Formula (2) can function as a component contributing to the improvement in cohesiveness of the pressure-sensitive adhesive due to intermolecular actions between the N-hydroxyalkyl(meth)acrylamide monomer molecules.

[Chemical Formula 2]

$$CH_2=C(R^3)CONHR^4 \qquad (2)$$

In Formula (2), $R^3$ represents hydrogen atom or methyl group; and $R^4$ represents a hydroxyalkyl group having 1 to 4 carbon atoms.

The hydroxyalkyl group $R^4$ in Formula (2) may have a straight-chain structure or branched-chain structure.

Exemplary N-hydroxyalkyl(meth)acrylamide monomers (a2) represented by Formula (2) include N-methylol(meth)acrylamides, N-(2-hydroxyethyl)acrylamide, N-(2-hydroxyethyl)methacrylamide, N-(2-hydroxypropyl)acrylamide, N-(2-hydroxypropyl)methacrylamide, N-(1-hydroxypropyl)acrylamide, N-(1-hydroxypropyl)methacrylamide, N-(3-hydroxypropyl)acrylamide, N-(3-hydroxypropyl)methacrylamide, N-(2-hydroxybutyl)acrylamide, N-(2-hydroxybutyl)methacrylamide, N-(3-hydroxybutyl)acrylamide, N-(3-hydroxybutyl)methacrylamide, N-(4-hydroxybutyl)acrylamide, and N-(4-hydroxybutyl)methacrylamide. Each of different N-hydroxyalkyl(meth)acrylamide monomers (a2) represented by Formula (2) can be used alone or in combination.

Of N-hydroxyalkyl(meth)acrylamide monomers (a2) represented by Formula (2), N-(2-hydroxyethyl)acrylamide and N-(2-hydroxyethyl)methacrylamide are preferred, of which N-(2-hydroxyethyl)acrylamide (HEAA) is more preferred, because these monomers can form a pressure-sensitive adhesive layer containing a blowing agent, which is good in balance between hydrophilicity and hydrophobicity and good in balance among adhesive properties. It is especially preferred that N-(2-hydroxyethyl)acrylamide (HEAA) as the N-hydroxyalkyl(meth)acrylamide monomer (a2) represented by Formula (2) occupies 50 percent by weight or more, more preferably 70 percent by weight or more, and typically preferably substantially 100 percent by weight, of the total amount of N-hydroxyalkyl(meth)acrylamide monomers (a2) represented by Formula (2).

The content of the N-hydroxyalkyl(meth)acrylamide monomer (a2) represented by Formula (2) is approximately from 0.1 to 12 percent by weight, and preferably approximately from 1 to 10 percent by weight, based on the total amount of monomer components constituting the vinyl monomer mixture or partially polymerized prepolymer thereof in the pressure-sensitive adhesive composition containing a blowing agent. If the content is less than 0.1 percent by weight, the pressure-sensitive adhesive layer containing a blowing agent formed from the pressure-sensitive adhesive composition containing a blowing agent may tend to have insufficient adhesive performance, typified by adhesiveness at high temperatures and durability against separation in the presence of a constant stress. In contrast, if it exceeds 12 percent by weight, the resulting pressure-sensitive adhesive layer containing a blowing agent may tend to have insufficient tack and/or adhesiveness at low temperatures.

In a preferred embodiment, a pressure-sensitive adhesive composition containing a blowing agent, when containing the N-hydroxyalkyl(meth)acrylamide monomer(s) (a2) represented by Formula (2) and the nitrogen-containing monomer (a3) as copolymerizable monomers in combination with the monomer (a1), contains the N-hydroxyalkyl(meth)acrylamide monomer (a2) represented by Formula (2) in a content of, for example, 2 percent by weight or more (typically from 2 to 12 percent by weight), and more preferably 3 percent by weight or more (typically from 3 to 12 percent by weight, and especially typically front 3 to 10 percent by weight) based on the total amount of monomer components constituting the vinyl monomer mixture or partially polymerized prepolymer thereof in the pressure-sensitive adhesive composition containing a blowing agent. The pressure-sensitive adhesive composition containing a blowing agent in such preferred embodiment can advantageously give a heat-expandable/peelable acrylic pressure-sensitive adhesive tape or sheet which has further better cohesive strength and further higher resistance to resilience (higher adhesion against repulsive force).

The weight ratio [(a1)/(a2)] of the alkyl (meth)acrylate(s) (a1), represented by Formula (1), whose alkyl moiety

having 2 to 18 carbon atoms to the N-hydroxyalkyl(meth)acrylamide monomer(s) (a2), represented by Formula (2), is desirably from 99/1 to 80/20, preferably from 98/2 to 85/15, and more preferably from 97/3 to 90/10. A pressure-sensitive adhesive composition containing a blowing agent which contains these monomer components in the above-specified weight ratio can advantageously give a heat-expandable/peelable acrylic pressure-sensitive adhesive tape or sheet which has further better cohesive strength and further higher resistance to resilience (higher adhesion against repulsive force).

The total amount of the alkyl (meth)acrylate(s) (a1), represented by Formula (1), whose alkyl moiety having 2 to 18 carbon atoms and the N-hydroxyalkyl(meth)acrylamide monomer(s) (a2), represented by Formula (2), is desirably 60 percent by weight or more (e.g., from 60 to 90 percent by weight), and preferably 70 percent by weight or more (e.g., from 70 to 90 percent by weight) based on the total amount of monomer components constituting the pressure-sensitive adhesive composition containing a blowing agent. If the total amount is less than 60 percent by weight, this may cause problems such as insufficient adhesiveness at low temperatures and/or insufficient tack.

The nitrogen-containing monomer (a3) is a monomer or monomers having nitrogen element in the monomer molecule and is one or more monomers selected from the group consisting of N-vinyl cyclic amides and (meth)acrylamides which may have one or more N-alkyl groups. The nitrogen-containing monomers (a3) do not include the N-hydroxyalkyl(meth)acrylamide monomers (a2) represented by Formula (2). Each of different nitrogen-containing monomers (a3) can be used alone or in combination.

Exemplary (meth)acrylamides which may have one or more N-alkyl groups include N-alkyl(meth)acrylamides such as (meth)acrylamides, N-ethyl(meth)acrylamides, and N-n-butyl(meth)acrylamides; and N,N-dialkyl(meth)acrylamides such as N,N-dimethyl(meth)acrylamides, N,N-diethyl(meth)acrylamides, N,N-dipropyl(meth)acrylamides, N,N-diisopropyl(meth)acrylamides, N,N-di(n-butyl)(meth)acrylamides, and N,N-di(t-butyl)(meth)acrylamides. Among them, (meth)acrylamides each having one or two N-alkyl groups with 1 to 4 carbon atoms (more preferably 1 or 2 carbon atoms) are preferably used. Examples of such preferred (meth)acrylamides include N,N-dialkylacrylamides such as N,N-diethylacrylamide and N,N-dimethylacrylamide.

Of N-vinyl cyclic amides, preferred are N-vinyl cyclic amides represented by following Formula (3):

[Chemical Formula 3]

$$CH_2=CHNCOR^5 \qquad (3)$$

wherein $R^5$ represents a bivalent organic group.

In Formula (3), $R^5$ is preferably a saturated or unsaturated hydrocarbon group, and more preferably a saturated hydrocarbon group (e.g., an alkylene group having 3 to 5 carbon atoms).

Exemplary N-vinyl cyclic amides represented by Formula (3) include N-vinyl-2-pyrrolidone, N-vinyl-2-piperidone, N-vinyl-3-morpholinone, N-vinyl-2-caprolactam, N-vinyl-1,3-oxazin-2-one, and N-vinyl-3,5-morpholinedione; of which N-vinyl-2-pyrrolidone is especially preferred.

The N-vinyl cyclic amides represented by Formula (3), when used as the nitrogen-containing monomer (a3), can give a pressure-sensitive adhesive composition containing a blowing agent which in tern gives a pressure-sensitive adhesive layer containing a blowing agent and having further better balance among adhesive properties.

The content of the nitrogen-containing monomer(s) (a3) is approximately from 10 to 40 percent by weight, and preferably from 15 to 35 percent by weight, based on the total amount of monomer components constituting the vinyl monomer mixture or partially polymerized prepolymer thereof in the pressure-sensitive adhesive composition containing a blowing agent. The nitrogen-containing monomer(s) (a3), if contained in a content of more than 40 percent by weight, may adversely affect properties (e.g., adhesiveness as a pressure-sensitive adhesive) in a low-temperature environment of the pressure-sensitive adhesive layer containing a blowing agent formed from the pressure-sensitive adhesive composition containing a blowing agent. In contrast, the nitrogen-containing monomer(s) (a3), if contained in a content of less than 10 percent by weight, may not satisfactorily help the pressure-sensitive adhesive layer containing a blowing agent to have sufficient adhesive strengths (e.g., peel strength) and/or sufficient resistance to resilience (sufficient adhesion against repulsive force).

The total amount (total content) of the alkyl (meth)acrylate monomers (a1) whose alkyl moiety having 2 to 18 carbon atom, N-hydroxyalkyl(meth)acrylamide monomers (a2), and nitrogen-containing monomers (a3) is desirably 70 percent by weight or more, preferably 90 percent by weight or more, and more preferably 95 percent by weight or more, based on the total amount of monomer components constituting the pressure-sensitive adhesive composition containing a blowing agent. If the total content is less than 70 percent by weight, the resulting pressure-sensitive adhesive layer containing a blowing agent may not have adhesive properties satisfactorily in good balance and may not have desired sufficient adhesive performance.

Typically, a pressure-sensitive adhesive composition containing a blowing agent in a preferred embodiment includes a vinyl monomer mixture or a partially polymerized prepolymer thereof, one or more photoinitiators, a blowing agent, and one or more multifunctional (meth)acrylates, which vinyl monomer mixture or partially polymerizable prepolymer thereof contains, as monomer components, one or more alkyl (meth)acrylate monomers (a1), represented by Formula (1), whose alkyl moiety having 2 to 18 carbon atom, one or more N-hydroxyalkyl(meth)acrylamide monomers (a2) represented by Formula (2), and one or more nitrogen-containing monomers (a3). This pressure-sensitive adhesive composition containing a blowing agent can form a pressure-sensitive adhesive layer containing a blowing agent which exhibits satisfactory adhesiveness to an adherend during bonding but can be easily peelable from the adherend through heating regardless of whether the surface of the adherend is uneven or not, and which has highly suppressed corrosive properties with respect to a metal surface. This is because the polymerizable composition contains substantially none of carboxyl-containing monomers and other acidic-group-containing monomers (i.e., contains substantially no carboxyl-containing monomer and substantially no other acidic-group-containing monomer); namely, the polymerizable composition contains none of these monomers or contains, if any, these monomers in a total content of 0.1 percent by weight or less of the weight of total monomer components. In addition, the pressure-sensitive adhesive composition containing a blowing agent of this configuration can effectively give a heat-expandable/peelable acrylic pressure-sensitive adhesive tape having a high cohesive strength and satisfactory resistance to resilience (adhesion against repulsive force) through a simple composition.

The pressure-sensitive adhesive composition containing a blowing agent may contain one or more polymerization initiators of every kind, such as thermopolymerization initiators and photoinitiators, without limitation. Among them, photoinitiators are preferably used for a shorter polymerization period (duration).

In a preferred embodiment, a pressure-sensitive adhesive composition containing a blowing agent containing a polymerization initiator, such as a thermopolymerization initiator or photoinitiator, is used for the formation of the pressure-sensitive adhesive layer containing a blowing agent. This pressure-sensitive adhesive composition can be cured as intact as containing the blowing agent through a curing reaction by the action of heat or active energy rays, to give a pressure-sensitive adhesive layer containing the blowing agent. Specifically, this composition easily gives a pressure-sensitive adhesive layer structurally stably containing a blowing agent. In a preferred embodiment in the present invention, one or more photoinitiators is used as the polymerization initiator. In this embodiment, it is desirable to employ a polymerization reaction by the action of active energy rays (photo-curing reaction) to give a pressure-sensitive adhesive layer structurally stably containing a blowing agent. Each of different polymerization initiators may be used alone or in combination.

Though not limited, exemplary photoinitiators for use in the pressure-sensitive adhesive composition containing a blowing agent for the formation of the layer of pressure-sensitive adhesive composition containing a blowing agent include benzoin ether photoinitiators, acetophenone photoinitiators, α-ketol photoinitiators, aromatic sulfonyl chloride photoinitiators, photoactive oxime photoinitiators, benzoin photoinitiators, benzil photoinitiators, benzophenone photoinitiators, ketal photoinitiators, and thioxanthone photoinitiators.

Specifically, exemplary benzoin ether photoinitiators include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Exemplary acetophenone photoinitiators include 2,2-diethoxyacetophenone, 2,2-dimethoxy-2-phenylacetophenone, 1-hydroxycyclohexyl phenyl ketone, 4-phenoxydichloroacetophenone, and 4-t-butyl-dichloroacetophenone. Exemplary α-ketol photoinitiators include 2-methyl-2-hydroxypropiophenone and 1-[4-(2-hydroxyethyl)-phenyl]-2-hydroxy-2-methylpropan-1-one. Exemplary aromatic sulfonyl chloride photoinitiators include 2-naphthalenesulfonyl chloride. Exemplary photoactive oxime photoinitiators include 1-phenyl-1,1-propanedione-2-(o-ethoxycarbonyl)-oxime. Exemplary benzoin photoinitiators include benzoin. Exemplary benzil photoinitiators include benzil. Exemplary benzophenone photoinitiators include benzophenone, benzoylbenzoic acid, 3,3'-dimethyl-4-methoxybenzophenone, polyvinylbenzophenone, and α-hydroxycyclohexyl phenyl ketone. Exemplary ketal photoinitiators include benzil dimethyl ketal. Exemplary thioxanthone photoinitiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone.

Examples of thermopolymerization initiators for use in the pressure-sensitive adhesive composition containing a blowing agent include azo thermopolymerization initiators such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine) dihydrochloride; peroxide thermopolymerization initiators such as dibenzoyl peroxide and tert-butyl permaleate; and redox thermopolymerization initiators. The amount of thermopolymerization initiators is not particularly limited, as long as being within ranges where the initiators can function as thermopolymerization initiators.

The amount of photoinitiators for use in the pressure-sensitive adhesive composition containing a blowing agent may be from 0.001 to 5 parts by weight, preferably from 0.01 to 5 parts by weight, and more preferably from 0.05 to 3

parts by weight, per 100 parts by weight of the vinyl monomer mixture or partially polymerized prepolymer thereof contained in the adhesive composition containing a blowing agent.

To activate photoinitiators, an active energy ray is applied to the pressure-sensitive adhesive composition containing a blowing agent. Exemplary active energy rays include ionizing radiations such as alpha rays, beta rays, gamma rays, neutron beams, and electron beams; and ultraviolet rays, of which ultraviolet rays are preferred. Conditions for the application of active energy rays, such as irradiation energy and irradiation period, are not particularly limited and have only to be such as to activate the photoinitiator and cause a reaction of monomer components.

The blowing agent for use in the pressure-sensitive adhesive composition is not particularly limited and can be selected as appropriate typically from among known blowing agents. Among them, preferred are encapsulated blowing agents. Exemplary encapsulated blowing agents include microspheres each including an elastic shell and, encapsulated therein, a material that easily gasifies and expands through heating, such as isobutane, propane, or pentane (these microspheres are hereinafter also referred to as "heat-expandable microspheres").

The shell of the heat-expandable microspheres is generally frequently composed of a thermoplastic material, a hot-melt material, and/or a material that breaks as a result of expansion through heating. Exemplary materials constituting the shell of the heat-expandable microspheres include vinylidene chloride-acrylonitrile copolymers, poly(vinyl alcohol)s, poly(vinyl butyral)s, poly(methyl methacrylate)s, polyacrylonitriles, poly(vinylidene chloride)s, and polysulfones. These heat-expandable microspheres can be prepared according to a common procedure such as coacervation process or interfacial polymerization.

The heat-expandable microspheres are also available as commercial products. Exemplary commercially available heat-expandable microspheres as blowing agents include, but are not limited to, products supplied by Matsumoto Yushi-Seiyaku Co., Ltd. under the trade names "Matsumoto Microsphere F-30", "Matsumoto Microsphere F-50", "Matsumoto Microsphere F-80S", and "Matsumoto Microsphere F-85"; and a product supplied by Akzo Nobel Surface Chemistry AB under the trade name "EXPANCEL Du".

The average particle diameter of the heat-expandable microspheres is generally approximately from 1 to 80 μm, and preferably approximately from 3 to 50 μm so as to be finely dispersed in the composition and to form a thin layer.

Heat-expandable microspheres, when used as the blowing agent, preferably have such a suitable strength that they do not rupture until the coefficient of cubic expansion becomes 5 times or more, and more preferably 10 times or more, in order to efficiently reduce the adhesive strength of the pressure-sensitive adhesive layer containing the blowing agent through heating. If a heat-expandable microsphere that ruptures at a low expansion rate or a blowing agent not encapsulated in a microcapsule is used as the blowing agent, it may not help to sufficiently reduce the adhesive area between the adherend and the pressure-sensitive adhesive layer containing the blowing agent, to fail to give satisfactory peelability.

Though varying depending on the type thereof, the amount of the blowing agent is, for example, approximately from 10 to 200 parts by weight, preferably approximately from 20 to 125 parts by weight, and more preferably approximately from 25 to 100 parts by weight, per 100 parts by weight of the vinyl monomer mixture or partially polymerized prepolymer thereof constituting the pressure-sensitive adhesive composition containing the blowing agent. The blowing agent, if used in a content of less than 10 parts by weight, may not sufficiently effectively help to reduce the tack strength after a heating treatment. In contrast, the blowing agent, if used in a content of more than 200 parts by weight, may tend to cause cohesive failure of the pressure-sensitive adhesive layer containing the blowing agent and/or interfacial failure with the viscoelastic body containing both bubbles and microparticles.

Exemplary blowing agents for use in the pressure-sensitive adhesive composition containing a blowing agent further include inorganic blowing agents and organic blowing agents of every kind. Representative examples of the inorganic blowing agents include ammonium carbonate, ammonium hydrogen carbonate, sodium hydrogen carbonate, ammonium nitrite, sodium borohydride, and azides. Representative examples of the organic blowing agents include water; chlorofluoroalkanes such as trichloromonofluoromethane and dichloromonofluoromethane; azo compounds such as azobisisobutyronitrile, azodicarbonamide, and barium azodicarboxylate; hydrazine compounds such as p-toluenesulfonyl hydrazide, diphenylsulfone-3,3'-disulfonyl hydrazide, 4,4'-oxybis(benzenesulfonyl hydrazide), and allylbis(sulfonyl hydrazide); semicarbazide compounds such as p-toluylenesulfonyl semicarbazide and 4,4'-oxybis(benzenesulfonyl semicarbazide); triazole compounds such as 5-morpholyl-1,2,3,4-thiatriazole; and N-nitroso compounds such as N,N'-dinitrosopentamethylenetetramine and N,N'-dimethyl-N,N'-dinitrosoterephthalamide. Each of different blowing agents can be used alone or in combination. The pressure-sensitive adhesive composition containing a blowing agent may further contain a foaming aid (blowing aid) according to necessity.

The multifunctional (meth)acrylates for use in the pressure-sensitive adhesive composition containing a blowing agent can be any compounds without limitation, as long as having at least two (meth)acryloyl groups.

Examples of such multifunctional (meth)acrylates include trimethylolpropane tri(meth)acrylates, tetramethylolmethane tetraacrylate, pentaerythritol di(meth)acrylates, pentaerythritol tri(meth)acrylates, pentaerythritol tetra(meth)acrylates, 1,2-ethylene glycol di(meth)acrylates, 1,4-butylene glycol di(meth)acrylates, 1,6-hexanediol di(meth)acrylates, 1,12-dodecanediol di(meth)acrylates, dipentaerythritol monohydroxypenta(meth)acrylates, dipentaerythritol hexa(meth)acrylates, polyethylene glycol di(meth)acrylates, hexanediol di(meth)acrylates, (poly)ethylene glycol di(meth)acrylates, (poly)propylene glycol di(meth)acrylates, neopentyl glycol di(meth)acrylates, tetramethylolmethane tri(meth)acrylates, allyl (meth)acrylates, vinyl (meth)acrylates, epoxy acrylates, polyester acrylates, urethane acrylates, and reactive hyperbranched polymers having two or more terminal (meth)acryloyl groups [e.g., products supplied by SARTOMER COMPANY, INC. under the trade names "CN2300", "CN2301", and "CN2320". Each of different multifunctional (meth)acrylates can be used alone or in combination.

The amount of multifunctional (meth)acrylates in the pressure-sensitive adhesive composition containing a blowing agent is desirably such that the solvent-insoluble content of the resulting pressure-sensitive adhesive layer containing a blowing agent formed from the composition is from 35 to 99 percent by weight, preferably from 50 to 99 percent by weight, and more preferably from 70 to 95 percent by weight. If the solvent-insoluble content is less than 35 percent by weight, the tape may be difficult to peel off from an adherend through expansion. In contrast, if the solvent-insoluble content is more than 99 percent by weight, the tape may exhibit insufficient wettability and may not satisfactorily adhere to the adherend.

As used herein the term "solvent-insoluble content" in a pressure-sensitive adhesive layer containing a blowing agent refers to the "proportion of solvent-insoluble components" in the pressure-sensitive adhesive layer and is determined according to the following "method for measuring solvent-insoluble content in pressure-sensitive adhesive layer containing a blowing agent". Blowing agents that are insoluble in a solvent are also included in the solvent-insoluble components in the pressure-sensitive adhesive layer.

Specifically, the solvent-insoluble content in the pressure-sensitive adhesive layer containing a blowing agent herein is determined in the following manner. About 1 gram of the pressure-sensitive adhesive layer is sampled and precisely weighed to determine the weight of the pressure-sensitive adhesive layer before immersion. Next, the sample is immersed in about 40 g of ethyl acetate for 7 days, all components insoluble in ethyl acetate are recovered, dried at 130°C for 2 hours, and the dry weight of the insoluble components is determined. The determined dry weight is substituted into the following equation:

Solvent-insoluble content (%) in pressure-sensitive adhesive layer containing a blowing agent = ((Dry weight of insoluble components)/(Weight of the pressure-sensitive adhesive layer before immersion) x 100

The amount of multifunctional (meth)acrylates may be set so that the solvent-insoluble content in the pressure-sensitive adhesive layer containing a blowing agent falls within the above-specified range, as mentioned above. Specifically, though varying depending typically on the molecular weights and the numbers of functional groups, the amount of the multifunctional (meth)acrylates is, for example, generally from 0.001 to 5 parts by weight, preferably from 0.001 to 3 parts by weight, and more preferably from 0.01 to 2 parts by weight, per 100 parts by weight of the total monomer components of the vinyl monomer mixture or partially polymerized prepolymer thereof contained in the pressure-sensitive adhesive composition containing a blowing agent. Multifunctional (meth)acrylates, if used in an amount of more than 5 parts by weight, may for example cause the pressure-sensitive adhesive layer containing a blowing agent to have an excessively high cohesive force to thereby have an insufficient adhesive strength (tacky adhesive strength). In contrast, multifunctional (meth)acrylates, if used in an excessively small amount (e.g., less than 0.001 part by weight) may for example cause the layer of pressure-sensitive adhesive composition containing a blowing agent to have an insufficient cohesive strength.

The pressure-sensitive adhesive composition containing a blowing agent may contain various additives. Exemplary additives include crosslinking agents such as isocyanate crosslinking agents and epoxy crosslinking agents; tackifiers such as rosin derivative resins, polyterpene resins, petroleum resins, and oil-soluble phenolic resins; plasticizers; fillers; age inhibitors; and surfactants.

Though not limited in the way, the pressure-sensitive adhesive layer containing a blowing agent may be formed, for example, by applying the pressure-sensitive adhesive composition containing a blowing agent to a suitable base material such as release film or substrate to form a layer of pressure-sensitive adhesive composition containing a blowing agent; and drying and/or curing (curing by the action of heat or active energy rays) the layer according to necessity. The curing may be performed through the application of heat or active energy rays. The curing, when performed through the application of active energy rays (photocuring), is preferably carried out while blocking oxygen, because oxygen in the air may adversely affect the photopolymerization reaction. The oxygen blocking may be performed typically by affixing an appropriate base material such as a release film or substrate onto the layer or by carrying out photocuring in an atmosphere of nitrogen gas. The base material used as appropriate in the formation of the pressure-sensitive adhesive

layer containing a blowing agent may be removed (peeled) during an adequate step in the preparation of the heat-expandable/peelable acrylic pressure-sensitive adhesive tape according to the present invention or may be removed upon use of the prepared heat-expandable/peelable acrylic pressure-sensitive adhesive tape.

The thickness of the pressure-sensitive adhesive layer containing a blowing agent may be suitably set according typically to the intended use of the heat-expandable/peelable pressure-sensitive adhesive tape according to the present invention and how much the adhesive strength thereof is reduced through heating. For providing a smooth surface of the adhesive tape, the thickness is preferably equal to or larger than the maximum particle diameter of the blowing agent typified by heat-expandable microspheres and is, for example, approximately from 1 to 300 μm, preferably approximately from 10 to 250 μm, and more preferably approximately from 30 to 200 μm. The pressure-sensitive adhesive layer containing a blowing agent, if having an excessively small thickness, may not provide a sufficient adhesive strength to hold the adherend. The pressure-sensitive adhesive layer containing a blowing agent may have a single-layer structure or multilayer structure.

(Release Film)

A release film is used during the production of a heat-expandable/peelable acrylic pressure-sensitive adhesive tape or used as a protecting part for protecting, for example, the adhesive face of the heat-expandable/peelable acrylic pressure-sensitive adhesive tape. The release film may not always be used but is preferably used during the production of the heat-expandable/peelable acrylic pressure-sensitive adhesive tape. This is because the photopolymerization reaction is inhibited typically by oxygen in the air, and the release film prevents the contact between the surface of the tape and oxygen by covering the surface. The release film is generally removed when the heat-expandable/peelable acrylic pressure-sensitive adhesive tape is used.

Though not especially limited as long as being able to block oxygen and transmit rays (light), examples of the release film include bases having a releasably treated surface treated with a release agent (parting agent) at least on one side thereof; as well as bases showing low adhesiveness and containing fluorocarbon polymers (such as polytetrafluoroethylenes, polychlorotrifluoroethylenes, poly(vinyl fluoride)s, poly(vinylidene fluoride)s, tetrafluoroethylene-hexafluoropropylene copolymers, and chlorofluoroethylene-vinylidene fluoride copolymers)); and bases showing low adhesiveness and containing nonpolar polymers (including olefinic resins such as polyethylenes and polypropylenes). Such a low-adhesion base can use its both sides as release surfaces. In contrast, a base having one or two releasably treated surfaces can use the releasably treated surface(s) as release surface(s).

In the bases which have a releasably treated surface on at least one side thereof and are used as release films, exemplary bases include plastic base films (synthetic resin films) including polyester films such as poly(ethylene terephthalate) films; olefinic resin films such as polyethylene films and polypropylene films; poly(vinyl chloride) films; polyimide films; polyamide films such as nylon films; and rayon films. Exemplary bases further include paper bases, i.e., bases made of papers such as woodfree papers, Japanese papers, kraft papers, glassine papers, synthetic papers, and topcoat papers. Among these bases, polyester films such as poly(ethylene terephthalate) films are preferably used.

Exemplary release agents (parting agents) usable herein include, but are not limited to, silicone release agents, fluorine release agents, and long-chain alkyl release agents. Each of different release agents may be used alone or in combination. The release film may be prepared, for example, according to a known or common procedure.

The thickness of release film is not particularly limited, as long as being able to block oxygen and to transmit rays (light). The release film can have a single-layer structure or multilayer structure.

[Processes for the Production of Heat-Expandable/peelable Acrylic Pressure-Sensitive Adhesive Tape]

Processes for the production of heat-expandable/peelable acrylic pressure-sensitive adhesive tapes according to embodiments of the present invention will be illustrated in detail below, with reference to the attached drawings according to necessity. The heat-expandable/peelable acrylic pressure-sensitive adhesive tapes each include at least a viscoelastic body containing both bubbles and microparticles; and a pressure-sensitive adhesive layer containing a blowing agent. FIGS. 1, 2, and 3 illustrate examples of processes for the production of the heat-expandable/peelable acrylic pressure-sensitive adhesive tapes (Production Process Embodiments 1, 2, and 3, respectively), but the way to produce the heat-expandable/peelable acrylic pressure-sensitive adhesive tapes is not limited to these Production Process Embodiments.

FIG. 1 depicts schematic cross-sectional views illustrating a production process embodiment of a heat-expandable/peelable acrylic pressure-sensitive adhesive tape according to an embodiment of the present invention; and FIGS. 2 and 3 depict cross-sectional views illustrating other production process embodiments of a heat-expandable/peelable acrylic pressure-sensitive adhesive tapes according to other embodiments of the present invention. In FIGS. 1 to 3, the reference numerals "11" stands for a layer of polymerizable composition containing both bubbles and microparticles, "12" stands for a layer of pressure-sensitive adhesive composition containing a blowing agent, "13" stands for a release

film, "14" stands for a pressure-sensitive adhesive layer containing a blowing agent, "15" stands for a viscoelastic body containing both bubbles and microparticles, "16" stands for an active energy ray, "17" stands for a heat-expandable/peelable acrylic pressure-sensitive adhesive tape (single-sided), and "18" stands for a heat-expandable/peelable acrylic pressure-sensitive adhesive tape (double-sided).

(Production Process Embodiment 1 of Heat-Expandable/peelable Acrylic Pressure-Sensitive Adhesive Tapes)

A first step of Production Process Embodiment 1 is the step of applying a polymerizable composition containing both bubbles and microparticles to a releasably treated surface of a release film 13 to form a layer 11 of polymerizable composition containing both bubbles and microparticles. This step gives a sheet which includes the release film 13 and, arranged on its releasably treated surface, the layer 11 of polymerizable composition containing both bubbles and microparticles. The view 1a illustrates the first step of Production Process Embodiment 1.

A second step of Production Process Embodiment 1 is the step of applying a pressure-sensitive adhesive composition containing a blowing agent to a releasably treated surface of another release film 13 to form a layer 12 of pressure-sensitive adhesive composition containing a blowing agent. This step gives a sheet which includes the release film 13 and, arranged on its releasably treated surface, the layer 12 of pressure-sensitive adhesive composition containing a blowing agent. The view 1b illustrates the second step of Production Process Embodiment 1.

A third step of Production Process Embodiment 1 is the step of laying the sheet prepared in the first step and the sheet prepared in the second step on each other so that the layer 11 of polymerizable composition containing both bubbles and microparticles is in contact with the layer 12 of pressure-sensitive adhesive composition containing a blowing agent. This step gives a laminate which includes the layer 11 of polymerizable composition containing both bubbles and microparticles; the layer 12 of pressure-sensitive adhesive composition containing a blowing agent and the release film 13 arranged in this order on one side of the layer 11; and the release film 13 arranged on the other side of the layer 11. The view 1c illustrates the third step of Production Process Embodiment 1.

A fourth step of Production Process Embodiment 1 is the step of applying active energy rays 16 through the release films 13 to the both sides of the laminate prepared in the third step. This step carries out photocuring of the layer 11 of polymerizable composition containing both bubbles and microparticles and the layer 12 of pressure-sensitive adhesive composition containing a blowing agent into a viscoelastic body 15 containing both bubbles and microparticles and a pressure-sensitive adhesive layer 14 containing a blowing agent, respectively. The layer 11 of polymerizable composition containing both bubbles and microparticles and the layer 12 of pressure-sensitive adhesive composition containing a blowing agent in the laminate are blocked from oxygen by the action of the release films 13. The view 1d illustrates the fourth step of Production Process Embodiment 1.

The view 1e illustrates a heat-expandable/peelable acrylic pressure-sensitive adhesive tape produced by Production Process Embodiment 1. The heat-expandable/peelable acrylic pressure-sensitive adhesive tape 17 is a supported single-sided pressure-sensitive adhesive sheet which includes the viscoelastic body 15 containing both bubbles and microparticles and, arranged on one side thereof, the pressure-sensitive adhesive layer 14 containing a blowing agent. The viscoelastic body 15 containing both bubbles and the microparticles and the pressure-sensitive adhesive layer 14 containing a blowing agent are protected by the release films 13, respectively, in the heat-expandable/peelable acrylic pressure-sensitive adhesive tape 17.

(Production Process Embodiment 2 of Heat-Expandable/peelable Acrylic Pressure-Sensitive Adhesive Tapes)

A first step of Production Process Embodiment 2 is the step of applying a pressure-sensitive adhesive composition containing a blowing agent to a releasably treated surface of a release film 13 to form a (first) layer 12 of pressure-sensitive adhesive composition containing a blowing agent. This step gives a sheet which includes the release film 13 and, arranged on its releasably treated surface, the (first) layer 12 of pressure-sensitive adhesive composition containing a blowing agent. The view 2a illustrates the first step of Production Process Embodiment 2.

A second step of Production Process Embodiment 2 is the step of applying a pressure-sensitive adhesive composition containing a blowing agent to a releasably treated surface of another release film 13 to form another (second) layer 12 of pressure-sensitive adhesive composition containing a blowing agent, and laying a layer 11 of polymerizable composition containing both bubbles and microparticles on the (second) layer 12 of pressure-sensitive adhesive composition containing a blowing agent. The lamination of the layer 11 of polymerizable composition containing both bubbles and microparticles may be performed by applying a polymerizable composition containing both bubbles and microparticles to the (second) layer 12 of pressure-sensitive adhesive composition containing a blowing agent to form a layer 11 of polymerizable composition containing both bubbles and microparticles thereon; or by forming a layer 11 of polymerizable composition containing both bubbles and microparticles typically on a suitable release film (separator) and transferring the formed layer 11 of polymerizable composition containing both bubbles and microparticles onto the (second) layer 12 of pressure-sensitive adhesive composition containing a blowing agent. This step gives a laminate which includes

the release film 13; the (second) layer 12 of pressure-sensitive adhesive composition containing a blowing agent arranged on a releasably treated surface of the release film 13; and the layer 11 of polymerizable composition containing both bubbles and microparticles on the (second) layer 12 of pressure-sensitive adhesive composition containing a blowing agent. The view 2b illustrates the second step of Production Process Embodiment 2.

A third step of Production Process Embodiment 2 is the step of laying the sheet prepared in the first step and the laminate prepared in the second step on each other so that the (first) layer 12 of pressure-sensitive adhesive composition containing a blowing agent is in contact with the layer 11 of polymerizable composition containing both bubbles and microparticles. This step gives a laminate which includes the layer 11 of polymerizable composition containing both bubbles and microparticles; the layers 12 of pressure-sensitive adhesive composition containing a blowing agent arranged on both sides of the layer 11; and the release films 13 arranged on the both layers 12 of pressure-sensitive adhesive composition containing a blowing agent. The view 2c illustrates the third step of Production Process Embodiment 2.

A fourth step of Production Process Embodiment 2 is the step of applying active energy rays 16 through the release films 13 to the both surfaces of the laminate prepared in the third step. This step carries out photocuring of the layer 11 of polymerizable composition containing both bubbles and microparticles and the layers 12 of pressure-sensitive adhesive composition containing a blowing agent into a viscoelastic body 15 containing both bubbles and microparticles, and into pressure-sensitive adhesive layers 14 containing a blowing agent, respectively. The layers 12 of pressure-sensitive adhesive composition containing a blowing agent in the laminate are blocked from oxygen by the action of the release films 13. The view 2d illustrates the fourth step of Production Process Embodiment 2.

The view 2e illustrates a heat-expandable/peelable acrylic pressure-sensitive adhesive tape produced by Production Process Embodiment 2. The heat-expandable/peelable acrylic pressure-sensitive adhesive tape 18 is a supported double-sided pressure-sensitive adhesive sheet which includes the viscoelastic body 15 containing both bubbles and microparticles and, arranged on both sides thereof, the pressure-sensitive adhesive layers 14 containing a blowing agent.

(Production Process Embodiment 3 of Heat-Expandable/peelable Acrylic Pressure-Sensitive Adhesive Tapes)

A first step of Production Process Embodiment 3 is the step of applying a pressure-sensitive adhesive composition containing a blowing agent to a releasably treated surface of a release film 13 to form a (first) layer 12 of pressure-sensitive adhesive composition containing a blowing agent thereon. This step gives a sheet which includes the release film 13; and, arranged on the releasably treated surface thereof, the (first) layer 12 of pressure-sensitive adhesive composition containing a blowing agent. The view 3a illustrates the first step of Production Process Embodiment 3.

A second step of Production Process Embodiment 3 is the step of laying a layer 11 of polymerizable composition containing both bubbles and microparticles on the layer 12 of pressure-sensitive adhesive composition containing a blowing agent of the sheet prepared in the first step. The lamination of the layer 11 of polymerizable composition containing both bubbles and microparticles may be carried out by applying a polymerizable composition containing both bubbles and microparticles to the layer 12 of pressure-sensitive adhesive composition containing a blowing agent to form a layer 11 of polymerizable composition containing both bubbles and microparticles thereon; or by forming a layer 11 of polymerizable composition containing both bubbles and microparticles typically on a suitable release film (separator) and transferring the layer 11 to the layer 12 of pressure-sensitive adhesive composition containing a blowing agent. This step gives a laminate which includes the release film 13; the layer 12 of pressure-sensitive adhesive composition containing a blowing agent arranged on the releasably treated surface of the release film 13; and the layer 11 of polymerizable composition containing both bubbles and microparticles arranged on the layer 12. The view 3b illustrates the second step of Production Process Embodiment 3.

A third step of Production Process Embodiment 3 is the step of laying another (second) layer 12 of pressure-sensitive adhesive composition containing a blowing agent on the layer 11 of polymerizable composition containing both bubbles and microparticles of the laminate prepared in the second step. The lamination of the (second) layer 12 of pressure-sensitive adhesive composition containing a blowing agent may be carried out by applying a pressure-sensitive adhesive composition containing a blowing agent to the layer 11 of polymerizable composition containing both bubbles and microparticles to form a layer 12 of pressure-sensitive adhesive composition containing a blowing agent thereon; or by forming a layer 12 of pressure-sensitive adhesive composition containing a blowing agent typically on a suitable release film (separator) and transferring the layer 12 onto the layer 11 of polymerizable composition containing both bubbles and microparticles. This step gives a laminate which includes the layer 11 of polymerizable composition containing both bubbles and microparticles; the two layers 12 of pressure-sensitive adhesive composition containing a blowing agent arranged on both sides of the layer 11; and the release film 13 arranged on one of the two layers 12 of pressure-sensitive adhesive composition containing a blowing agent. The view 3c illustrates the final stage of the third step of Production Process Embodiment 3.

A fourth step of Production Process Embodiment 3 is the step of lying another release film 13 on the other

(second) layer 12 of pressure-sensitive adhesive composition containing a blowing agent, which (second) layer 12 bears no release film, in the laminate prepared in the third step so that a releasably treated surface of the other release film 13 is in contact with the (second) layer 12; and thereafter applying active energy rays 16 to the both sides of the laminate through the release films 13. This step carries out photocuring of the layer 11 of polymerizable composition containing both bubbles and microparticles and the layers 12 of pressure-sensitive adhesive composition containing a blowing agent into a viscoelastic body 15 containing both bubbles and microparticles, and pressure-sensitive adhesive layers 14 containing a blowing agent, respectively. The layers 12 of pressure-sensitive adhesive composition containing a blowing agent in the laminate are blocked from oxygen by the action of the release films 13. The view 3d illustrates the fourth step of Production Process Embodiment 3.

The view 3e illustrates a heat-expandable/peelable acrylic pressure-sensitive adhesive tape produced by Production Process Embodiment 3. The heat-expandable/peelable acrylic pressure-sensitive adhesive tape 18 is a supported, double-sided pressure-sensitive adhesive sheet which includes the viscoelastic body 15 containing both bubbles and microparticles; and the pressure-sensitive adhesive layers 14 containing a blowing agent arranged on both sides of the viscoelastic body 15.

A coating (application) procedure for use in the application of a polymerizable composition containing both bubbles and microparticles or pressure-sensitive adhesive composition containing a blowing agent typically to a release film 13 in each Production Process Embodiment is not particularly limited and may be selected from common procedures. Exemplary coating procedures include slot die coating, reverse gravure coating, microgravure coating, dip coating, spin coating, brush application, roll coating, and flexographic printing. A coating device for use in the application is not particularly limited and may be selected from commonly used coating devices including roll coaters such as reverse coaters and gravure coaters; curtain coaters; lip coaters; die coaters; and knife coaters.

Oxygen is blocked by the release films 13 in the steps where the layer 11 of polymerizable composition containing both bubbles and microparticles and the layer(s) 12 of pressure-sensitive adhesive composition containing a blowing agent are cured by the application of active energy rays in the above-mentioned production process embodiments. Instead of using release films 13, oxygen may be blocked by using an inactive gas such as nitrogen gas. Specifically, the photopolymerization reaction may be protected from adverse effects of oxygen, by applying active energy rays in an atmosphere of an inactive gas such as nitrogen gas. When the photocuring of the layer 11 of polymerizable composition containing both bubbles and microparticles and the layer(s) 12 of pressure-sensitive adhesive composition containing a blowing agent using active energy rays is performed in an atmosphere of an inactive gas such as nitrogen gas, it is acceptable not to cover the layer 11 of polymerizable composition containing both bubbles and microparticles and the layer(s) 12 of pressure-sensitive adhesive composition containing a blowing agent with the release films 13.

The atmosphere of an inactive gas such as nitrogen gas is preferably minimized in oxygen content when the photocuring of the layer 11 of polymerizable composition containing both bubbles and microparticles and the layer(s) 12 of pressure-sensitive adhesive composition containing a blowing agent is performed using active energy rays in this atmosphere. Typically, the oxygen concentration in the atmosphere is preferably 5000 ppm or less. A large amount of dissolved oxygen, if contained in the layer 11 of polymerizable composition containing both bubbles and microparticles and/or the layer(s) 12 of pressure-sensitive adhesive composition containing a blowing agent, may impede the formation of free radicals in sufficient amounts to thereby hinder the sufficient progress of polymerization, and this may adversely affect the degree of polymerization, molecular weight, and molecular weight distribution of the resulting polymers.

Exemplary active energy rays include ionizing radiations such as alpha rays, beta rays, gamma rays, neutron beams, and electron beams; and ultraviolet rays, of which ultraviolet rays are preferred. Conditions for the application of active energy rays, such as irradiation energy and irradiation period, are not particularly limited and have only to be such conditions as to activate the photoinitiator and cause a reaction of monomer components. For example, as the active energy rays, ultraviolet rays having an illumination intensity of 1 to 200 $mW/cm^2$ at wavelengths of from 300 to 400 nm may be applied in a quantity of approximately from 400 to 4000 $mJ/cm^2$.

The degree of polymerization is preferably 90 percent by weight or more in the photocuring of the layer 11 of polymerizable composition containing both bubbles and microparticles and the layer(s) 12 of pressure-sensitive adhesive composition containing a blowing agent using active energy rays. Unreacted monomers can be removed also by further providing a drying step. The degree of polymerization herein can be determined through calculation by the same procedure as in the degree of polymerization of the partially polymerized prepolymer.

A light source for use in the application of ultraviolet rays may be one having a spectral distribution at wavelengths ranging from 180 to 460 nm, and preferably from 300 to 400 nm. Exemplary light sources include common irradiation devices such as chemical lamps, "black-light" lamps (e.g., products supplied by Toshiba Lighting & Technology Corporation), mercury arc lamps, carbon arc lamps, low-pressure mercury lamps, medium-pressure mercury lamps, high-pressure mercury lamps, ultrahigh-pressure mercury lamps, and metal halide lamps. Irradiation devices that generate an electromagnetic radiation having a wavelength longer or shorter than the above-mentioned wavelength range may also be used.

A desired illumination intensity of ultraviolet rays may be obtained typically by adjusting the distance between

the irradiation device as a light source and the layer 11 of polymerizable composition containing both bubbles and microparticles and the layer(s) 12 of pressure-sensitive adhesive composition containing a blowing agent each as a photocurable composition; and/or adjusting the voltage applied therebetween.

Adherends to which the heat-expandable/peelable acrylic pressure-sensitive adhesive tapes are used are not particularly limited and may be selected from among adherends having suitable shapes and including suitable materials. Exemplary materials for the adherends include resins such as polycarbonates, polypropylenes, polyesters, polystyrenes, phenolic resins, epoxy resins, polyurethanes, ABSs, and acrylic resins; metals such as iron, aluminum, copper, and nickel, and alloys of these metals.

The adhesion force of the heat-expandable/peelable acrylic pressure-sensitive adhesive tapes are 10 newtons per 25 millimeters (N/25 mm) or more (e.g., from 10 to 100 N/25 mm), preferably 11 N/25 mm or more (e.g., from 11 to 90 N/25 mm), and more preferably 12 N/25 mm or more (e.g., from 12 to 80 N/25 mm) in terms of 90-degree peel strength (90-degree peel adhesion, adherend: polycarbonate plate, according to the test method of pressure-sensitive adhesive tape/pressure-sensitive adhesive sheets specified in Japanese Industrial Standards (JIS) Z 0237). The adhesive strengths of the heat-expandable/peelable acrylic pressure-sensitive adhesive tapes after heating are 10 N/25 mm or less (e.g., from 0 to 10 N/25 mm), preferably 9 N/25 mm or less (e.g., from 0 to 9 N/25 mm), and more preferably 8 N/25 mm or less (e.g., from 0 to 8 N/25 mm) in terms of 90-degree peel strength (90-degree peel adhesion, adherend: polycarbonate plate, according to the test method of pressure-sensitive adhesive tape/pressure-sensitive adhesive sheets specified in JIS Z 0237).

Specifically, the 90-degree peel strength of a sample heat-expandable/peelable acrylic pressure-sensitive adhesive tape may be determined by applying the sample pressure-sensitive adhesive tape to a test adherend through bonding using sufficient pressure at an atmospheric temperature of 23°C through one reciprocating movement of a 5-kg roller thereon, aging the resulting article at 23°C for 30 minutes, and peeling the sample heat-expandable/peelable acrylic pressure-sensitive adhesive tape at a peel direction of 90 degrees and a tensile speed of 50 mm/minute using a tensile tester. The 90-degree peel strength of the heat-expandable/peelable acrylic pressure-sensitive adhesive tape after heating may be determined according to the above testing procedure, except for subjecting the resulting article to a heating treatment before peeling.

The heating treatment may be carried out, typically using a suitable heating device such as hot plate, hot air dryer (air forced oven), near-infrared lamp, or air dryer. The heating temperature has only to be equal to or higher than the foaming (expanding) initiating temperature of the blowing agent and may be suitably set according typically to how is the surface of the adherend, which type is the blowing agent, how thermally stable is the adherend, and how the heating is carried out (e.g., heat capacity and heating device or procedure). In general, the heating treatment is carried out at a temperature of 100°C to 250°C, for a duration of 5 to 90 seconds typically using a hot plate or for a duration of 5 to 15 minutes typically using a hot air dryer (air forced oven). Heating under such conditions generally allows the blowing agent in the pressure-sensitive adhesive layer to expand and/or foam, whereby the pressure-sensitive adhesive layer expands and deforms to have an uneven surface to thereby have a lowered adhesive strength or lose adhesive strength. An infrared lamp or heated water may be used as the heat source in some cases.

Instead of using any of the above-mentioned heating devices or procedures, the heating may be carried out by providing a material typically of plane heater (sheet-like heater) in the structure of the heat-expandable/peelable acrylic pressure-sensitive adhesive tape, and applying a voltage to the plane heater to elevate the temperature thereof up to the expansion (foaming) temperature.

The plane heater is not especially limited, as long as being a heating element capable of generating heat through energization and having a flat planar (film-like or sheet-like) shape. Typically, the heating element may be a heating element containing a material such as metallic foil, metallic plate or graphite carbon, and carbon powder or metal powder. The heating element may be covered by an electrical insulating sheet or not. The plane heater, when used as a component material of the heat-expandable/peelable acrylic pressure-sensitive adhesive tape, can be provided in any of layers of the tape, as long as not adversely affecting the advantages of the present invention.

The heat-expandable/peelable acrylic pressure-sensitive adhesive tapes according to the present invention are sufficiently wettable even with an adherend having an uneven surface with a gap height of from 0 to 500 μm (preferably from 0 to 300 μm). This is because the viscoelastic body of the heat-expandable/peelable acrylic pressure-sensitive adhesive tapes contains bubbles and thereby the heat-expandable/peelable acrylic pressure-sensitive adhesive tapes can more satisfactorily absorb gaps (height gaps; protrusions and depressions). The heat-expandable/peelable acrylic pressure-sensitive adhesive tapes therefore exhibit high adhesion force during bonding with an adherend having a gap structure.

The adhesion force (adhesive performance) of the heat-expandable/peelable acrylic pressure-sensitive adhesive tapes can be controlled by suitably choosing conditions such as the components of the pressure-sensitive adhesive layer containing a blowing agent; the type and amount of the blowing agent; the way to apply active energy rays in the preparation of the pressure-sensitive adhesive layer; the thickness of the pressure-sensitive adhesive layer containing a blowing agent; and the amount of microparticles in the viscoelastic body containing both bubbles and microparticles.

Typically, Japanese Unexamined Patent Publication (JP-A) No. 2003-13015 discloses a specific method of adjusting the adhesion force by suitably selecting the irradiation procedure of active energy rays. Specifically, JP-A No. 2003-13015 discloses a method of precisely adjusting the adhesive performance by carrying out the application of active energy rays in two or more steps. When ultraviolet rays are used as the active energy rays, exemplary specific processes include a process of carrying out application of ultraviolet rays in two steps, i.e., a first step of applying ultraviolet rays at an illumination intensity of 30 mW/$cm^2$ or more, and a second step of applying ultraviolet rays at an illumination intensity lower than that in the first step to thereby substantially complete the polymerization reaction; and a process of carrying out application of ultraviolet rays in three steps, i.e., a first step of applying ultraviolet rays at an illumination intensity of 30 mW/$cm^2$ or more, a second step of applying ultraviolet rays at an illumination intensity lower than that in the first step to give a degree of polymerization of 70% or more, and a third step of applying ultraviolet rays at an illumination intensity of 30 mW/$cm^2$ or more to thereby substantially complete the polymerization reaction.

Exemplary ultraviolet-irradiation devices for use in the first step include low-pressure mercury lamps, high-pressure mercury lamps, ultrahigh-pressure mercury lamps, and metal halide lamps; and those for use in the second step include chemical lamps and black-light lamps.

The heat-expandable/peelable acrylic pressure-sensitive adhesive tapes according to embodiments of the present invention have adhesive strengths controlled within the above-specified range, thereby maintain high adhesion force during bonding with an adherend to form a bonded part, but, upon the separation/debonding of the bonded part, can have reduced adhesive strengths through heating, and can be easily separated or debonded from the adherend. In addition, they can satisfactorily absorb gaps because of having bubbles in their substrates.

The heat-expandable/peelable acrylic pressure-sensitive adhesive tapes can particularly satisfactorily absorb gaps having heights of from 1 to 150 μm (preferably those having heights of from 10 to 120 μm).

The heat-expandable/peelable acrylic pressure-sensitive adhesive tapes are usable in a variety of uses, such as in bonds of parts, typically in automobiles, machine parts, electrical appliances, and construction materials. In addition, they may be used as pressure-sensitive adhesive tapes that are easily removable from an adherend, because their pressure-sensitive adhesive layer containing a blowing agent is capable of expanding through heating, and the tapes show reduced adhesive strengths with an adherend when they are heated after being applied to the adherend. Furthermore, they can also be used as pressure-sensitive adhesive sheets in the form typically of sheets or tapes.

## EXAMPLES

The present invention will be illustrated in further detail with reference to several examples below. It should be noted, however, these examples are never construed to limit the scope of the present invention.

(Preparation Example 1 of Pressure-Sensitive Adhesive Composition Containing Blowing Agent)

A partially polymerized monomer syrup having a degree of polymerization of 7% was prepared by placing 90 parts by weight of 2-ethylhexyl acrylate, 10 parts by weight of acrylic acid, 0.05 part by weight of a photoinitiator (trade name "IRGACURE 184" supplied by Ciba Specialty Chemicals Corporation), and 0.05 part by weight of another photoinitiator (trade name "IRGACURE 651" supplied by Ciba Specialty Chemicals Corporation) in a four-necked flask, and exposing the mixture to ultraviolet rays in an atmosphere of nitrogen gas to carry out photopolymerization.

With 100 parts by weight of the partially polymerized monomer syrup were homogeneously mixed 30 parts by weight of a blowing agent (heat-expandable microspheres, trade name "Matsumoto Microsphere F-50D" supplied by Matsumoto Yushi-Seiyaku Co., Ltd.) and 0.2 part by weight of trimethylolpropane triacrylate, and thereby yielded a pressure-sensitive adhesive composition containing a blowing agent (hereinafter also referred to as "blowing-agent-containing pressure-sensitive adhesive composition (A)").

(Preparation Example 2 of Pressure-Sensitive Adhesive Composition Containing Blowing Agent)

A partially polymerized monomer syrup having a degree of polymerization of 7% was prepared by placing 90 parts by weight of 2-ethylhexyl acrylate, 10 parts by weight of acrylic acid, 0.05 part by weight of a photoinitiator (trade name "IRGACURE 184" supplied by Ciba Specialty Chemicals Corporation), and 0.05 part by weight of another photoinitiator (trade name "IRGACURE 651" supplied by Ciba Specialty Chemicals Corporation) in a four-necked flask, and exposing the mixture to ultraviolet rays in an atmosphere of nitrogen gas to carry out photopolymerization.

With 100 parts by weight of the partially polymerized monomer syrup were homogeneously mixed 30 parts by weight of a blowing agent (heat-expandable microspheres, trade name "Matsumoto Microsphere F-50D" supplied by Matsumoto YushiSeiyaku Co., Ltd.) and 0.5 part by weight of trimethylolpropane triacrylate, and thereby yielded a pressure-sensitive adhesive composition containing a blowing agent (hereinafter also referred to as "blowing-agent-containing pressure-sensitive adhesive composition (B)).

(Preparation Example 3 of Pressure-Sensitive Adhesive Composition Containing Blowing Agent)

A partially polymerized monomer syrup having a degree of polymerization of 11% was prepared by placing 70 parts by weight of 2-ethylhexyl acrylate, 28 parts by weight of N-vinyl-2-pyrrolidone, 2 parts by weight of N-hydroxyethylacrylamide, 0.05 part by weight of a photoinitiator (trade name "IRGACURE 184" supplied by Ciba Specialty Chemicals Corporation), and 0.05 part by weight of another photoinitiator (trade name "IRGACURE 651" supplied by Ciba Specialty Chemicals Corporation) in a four-necked flask, and exposing the mixture to ultraviolet rays in an atmosphere of nitrogen gas to carry out photopolymerization.

With 100 parts by weight of the partially polymerized monomer syrup were homogeneously mixed 30 parts by weight of a blowing agent (heat-expandable microspheres, trade name "Matsumoto Microsphere F-50D" supplied by Matsumoto Yushi-Seiyaku Co., Ltd.) and 0.01 part by weight of 1,6-hexanediol diacrylate, and thereby yielded a pressure-sensitive adhesive composition containing a blowing agent (hereinafter also referred to as "blowing-agent-containing pressure-sensitive adhesive composition (C)").

(Preparation Example 4 of Pressure-Sensitive Adhesive Composition Containing Blowing Agent)

A partially polymerized monomer syrup having a degree of polymerization of 11% was prepared by placing 70 parts by weight of 2-ethylhexyl acrylate, 28 parts by weight of N-vinyl-2-pyrrolidone, 2 parts by weight of N-hydroxyethylacrylamide, 0.05 part by weight of a photoinitiator (trade name "IRGACURE 184" supplied by Ciba Specialty Chemicals Corporation), and 0.05 part by weight of another photoinitiator (trade name "IRGACURE 651" supplied by Ciba Specialty Chemicals Corporation) in a four-necked flask, and exposing the mixture to ultraviolet rays in an atmosphere of nitrogen gas to carry out photopolymerization.

With 100 parts by weight of the partially polymerized monomer syrup were homogeneously mixed 30 parts by weight of a blowing agent (heat-expandable microspheres, trade name "Matsumoto Microsphere F-50D" supplied by Matsumoto Yushi-Seiyaku Co., Ltd.) and 0.2 part by weight of trimethylolpropane triacrylate, and thereby yielded a pressure-sensitive adhesive composition containing a blowing agent (hereinafter also referred to as "blowing-agent-containing pressure-sensitive adhesive composition (D)").

(Preparation Example 5 of Pressure-Sensitive Adhesive Composition Containing Blowing Agent)

A partially polymerized monomer syrup having a degree of polymerization of 11% was prepared by placing 70 parts by weight of 2-ethylhexyl acrylate, 26 parts by weight of N-vinyl-2-pyrrolidone, 4 parts by weight of N-hydroxyethylacrylamide, 0.05 part by weight of a photoinitiator (trade name "IRGACURE 184" supplied by Ciba Specialty Chemicals Corporation), and 0.05 part by weight of another photoinitiator (trade name "IRGACURE 651" supplied by Ciba Specialty Chemicals Corporation) in a four-necked flask, and exposing the mixture to ultraviolet rays in an atmosphere of nitrogen gas to carry out photopolymerization.

With 100 parts by weight of the partially polymerized monomer syrup were homogeneously mixed 30 parts by weight of a blowing agent (heat-expandable microspheres, trade name "Matsumoto Microsphere F-50D" supplied by Matsumoto Yushi-Seiyaku Co., Ltd.) and 0.02 part by weight of 1,6-hexanediol diacrylate, and thereby yielded a pressure-sensitive adhesive composition containing a blowing agent (hereinafter also referred to as "blowing-agent-containing pressure-sensitive adhesive composition (E)").

(Preparation Example 6 of Pressure-Sensitive Adhesive Composition Containing Blowing Agent)

A partially polymerized monomer syrup having a degree of polymerization of 11% was prepared by placing 70 parts by weight of 2-ethylhexyl acrylate, 26 parts by weight of N-vinyl-2-pyrrolidone, 4 parts by weight of N-hydroxyethylacrylamide, 0.05 part by weight of a photoinitiator (trade name "IRGACURE 184" supplied by Ciba Specialty Chemicals Corporation), and 0.05 part by weight of another photoinitiator (trade name "IRGACURE 651" supplied by Ciba Specialty Chemicals Corporation) in a four-necked flask, and exposing the mixture to ultraviolet rays in an atmosphere of nitrogen gas to carry out photopolymerization.

With 100 parts by weight of the partially polymerized monomer syrup were homogeneously mixed 30 parts by weight of a blowing agent (heat-expandable microspheres, trade name "Matsumoto Microsphere F-50D" supplied by Matsumoto Yushi-Seiyaku Co., Ltd.) and 0.2 part by weight of 1,6-hexanediol diacrylate, and thereby yielded a pressure-sensitive adhesive composition containing a blowing agent (hereinafter also referred to as "blowing-agent-containing pressure-sensitive adhesive composition (F)").

(Preparation Example 7 of Pressure-Sensitive Adhesive Composition Containing Blowing Agent)

A partially polymerized monomer syrup having a degree of polymerization of 11% was prepared by placing 70 parts by weight of 2-ethylhexyl acrylate, 24 parts by weight of N-vinyl-2-pyrrolidone, 6 parts by weight of N-hydroxyethylacrylamide, 0.05 part by weight of a photoinitiator (trade name "IRGACURE 184" supplied by Ciba Specialty Chemicals Corporation), and 0.05 part by weight of another photoinitiator (trade name "IRGACURE 651" supplied by Ciba Specialty Chemicals Corporation) in a four-necked flask, and exposing the mixture to ultraviolet rays in an atmosphere of nitrogen gas to carry out photopolymerization.
With 100 parts by weight of the partially polymerized monomer syrup were homogeneously mixed 30 parts by weight of a blowing agent (heat-expandable microspheres, trade name "Matsumoto Microsphere F-50D" supplied by Matsumoto Yushi-Seiyaku Co., Ltd.) and 0.05 part by weight of 1,6-hexanediol diacrylate, and thereby yielded a pressure-sensitive adhesive composition containing a blowing agent (hereinafter also referred to as "blowing-agent-containing pressure-sensitive adhesive composition (G)").

(Preparation Example 1 of Polymerizable Composition Containing Both Bubbles and Microparticles)

A partially polymerized monomer syrup having a degree of polymerization of 7% was prepared by placing 90 parts by weight of 2-ethylhexyl acrylate, 10 parts by weight of acrylic acid, 0.05 part by weight of a photoinitiator (trade name "IRGACURE 184" supplied by Ciba Specialty Chemicals Corporation), and 0.05 part by weight of another photoinitiator (trade name "IRGACURE 651" supplied by Ciba Specialty Chemicals Corporation) in a four-necked flask, and exposing the mixture to ultraviolet rays in an atmosphere of nitrogen gas to carry out photopolymerization.
With 100 parts by weight of the partially polymerized syrup were homogenously mixed 0.08 part by weight of 1,6-hexanediol diacrylate, 9.5 parts by weight of hollow glass beads (trade name "CEL-STAR Z-27" supplied by Tokai Kogyo Co., Ltd., having an average particle diameter of 63 $\mu$m and a true density of 0.26 g/cm$^3$), and 0.5 part by weight of a fluorochemical surfactant (trade name "Unidyne TG-656" supplied by Daikin Industries, Ltd.) using a propeller mixer; the mixture was placed in a beaker; nitrogen gas was bubbled from the bottom of the beaker; the bubbles and the mixture were admixed using a Homo-mixer so as to take the bubbles in the mixture, and thereby yielded a polymerizable composition containing both bubbles and microparticles (hereinafter also referred to as "bubble-and-microparticle-containing polymerizable composition (A)").

(Preparation Example 1 of Polymerizable Composition Containing Microparticles)

A partially polymerized monomer syrup having a degree of polymerization of 7% was prepared by placing 90 parts by weight of 2-ethylhexyl acrylate, 10 parts by weight of acrylic acid, 0.05 part by weight of a photoinitiator (trade name "IRGACURE 184" supplied by Ciba Specialty Chemicals Corporation), and 0.05 part by weight of another photoinitiator (trade name "IRGACURE 651" supplied by Ciba Specialty Chemicals Corporation) in a four-necked flask, and exposing the mixture to ultraviolet rays in an atmosphere of nitrogen gas to carry out photopolymerization.
With 100 parts by weight of the partially polymerized syrup were homogeneously mixed 0.08 part by weight of 1,6-hexanediol diacrylate and 9.5 parts by weight of hollow glass beads (trade name "CEL-STAR Z-27" supplied by Tokai Kogyo Co., Ltd., having an average particle diameter of 63 $\mu$m and a true density of 0.26 g/cm$^3$) using a propeller mixer and thereby yielded a polymerizable composition containing microparticles (hereinafter also referred to as "microparticle-containing polymerizable composition (A)").

(Preparation Example 1 of Viscoelastic Composition)

A partially polymerized monomer syrup having a degree of polymerization of 7% was prepared by placing 90 parts by weight of 2-ethylhexyl acrylate, 10 parts by weight of acrylic acid, 0.05 part by weight of a photoinitiator (trade name "IRGACURE 184" supplied by Ciba Specialty Chemicals Corporation), and 0.05 part by weight of another photoinitiator (trade name "IRGACURE 651" supplied by Ciba Specialty Chemicals Corporation) in a four-necked flask, and exposing the mixture to ultraviolet rays in an atmosphere of nitrogen gas to carry out photopolymerization.
Witch 100 parts by weight of the partially polymerized syrup was homogeneously mixed 0.1 part by weight of 1,6-hexanediol diacrylate, and thereby yielded a viscoelastic composition (hereinafter also referred to as "viscoelastic composition (A)").

(Example 1 of Release Film To Be Used)

A polyester film (trade name "MRN-38" supplied by Mitsubishi Plastics, Inc.), one side of which had been subjected to release treatment with a silicone release agent, was used as a release film (hereinafter also referred to as

"release film (A)").

(Example 2 of Release Film To Be Used)

A polyester film (trade name "MRF-38" supplied by Mitsubishi Plastics, Inc.), one side of which had been subjected to release treatment with a silicone release agent, was used as a release film (hereinafter also referred to as "release film (B)").

(EXAMPLE 1)

The blowing-agent-containing pressure-sensitive adhesive composition (A) was applied to the releasably treated surface of the release film (B) so as to have a thickness after curing of 100 μm, and thereby yielded a sheet including a layer of pressure-sensitive adhesive composition containing a blowing agent arranged on the release film (B).

Independently, the bubble-and-microparticle-containing polymerizable composition (A) was applied to the releasably treated surface of the release film (A) so as to have a thickness after curing of 800 μm, and thereby yielded a sheet including a layer of polymerizable composition containing both bubbles and microparticles arranged on the release film (A).

The sheet including the layer of pressure-sensitive adhesive composition containing a blowing agent was affixed to the sheet including the layer of polymerizable composition containing both bubbles and microparticles so that the layer of polymerizable composition containing both bubbles and microparticles was in contact with the layer of pressure-sensitive adhesive composition containing a blowing agent, and thereby yielded a sheet assembly.

The sheet assembly was irradiated from both sides with ultraviolet rays (UV) having a maximum sensitivity at 350 nm using a black-light lamp (supplied by Toshiba Ltd.) at an illumination intensity of 5 $mW/cm^2$ for 240 seconds, to carry out photocuring of the layer of polymerizable composition containing both bubbles and microparticles and of the layer of pressure-sensitive adhesive composition containing a blowing agent, and thereby yielded a pressure-sensitive adhesive sheet including a viscoelastic body containing both bubbles and microparticles and, present on one side thereof, a pressure-sensitive adhesive layer containing a blowing agent.

The resulting pressure-sensitive adhesive sheet is usable also as a double-sided pressure-sensitive adhesive sheet, because the viscoelastic body containing both bubbles and microparticles thereof shows adhesiveness (tackiness). The viscoelastic body containing both bubbles and microparticles had a bubble content (bubble fraction) of 20%, and the pressure-sensitive adhesive layer containing a blowing agent had a solvent-insoluble content of 84 percent by weight.

(EXAMPLE 2)

A pressure-sensitive adhesive sheet including a viscoelastic body containing both bubbles and microparticles and, present on one side thereof, a pressure-sensitive adhesive layer containing a blowing agent was prepared by the procedure of Example 1, except for forming a sheet including a layer of pressure-sensitive adhesive composition containing a blowing agent by applying the blowing-agent-containing pressure-sensitive adhesive composition (A) to the releasably treated surface of the release film (B) so as to have a thickness after curing of 50 μm to yield the sheet including the release film (B) and, arranged thereon, the layer of pressure-sensitive adhesive composition containing a blowing agent.

The resulting pressure-sensitive adhesive sheet is usable also as a double-sided pressure-sensitive adhesive sheet, because the viscoelastic body containing both bubbles and microparticles thereof shows adhesiveness. The viscoelastic body containing both bubbles and microparticles had a bubble content of 20%, and the pressure-sensitive adhesive layer containing a blowing agent had a solvent-insoluble content of 83 percent by weight.

(EXAMPLE 3)

A pressure-sensitive adhesive sheet including a viscoelastic body containing both bubbles and microparticles and, present on one side thereof, a pressure-sensitive adhesive layer containing a blowing agent was prepared by the procedure of Example 1, except for forming a sheet including a layer of pressure-sensitive adhesive composition containing a blowing agent by applying the blowing-agent-containing pressure-sensitive adhesive composition (B) to the releasably treated surface of the release film (B) so as to have a thickness after curing of 100 μm to thereby yield the sheet including the release film (B) and, present thereon, the layer of pressure-sensitive adhesive composition containing a blowing agent.

The resulting pressure-sensitive adhesive sheet is usable also as a double-sided pressure-sensitive adhesive sheet, because the viscoelastic body containing both bubbles and microparticles thereof shows adhesiveness. The viscoelastic body containing both bubbles and microparticles had a bubble content of 20%, and the pressure-sensitive

adhesive layer containing a blowing agent had a solvent-insoluble content of 88 percent by weight.

(EXAMPLE 4)

A pressure-sensitive adhesive sheet including a viscoelastic body containing both bubbles and microparticles and, present on one side thereof, a pressure-sensitive adhesive layer containing a blowing agent was prepared by the procedure of Example 1, except for forming a sheet including a layer of pressure-sensitive adhesive composition containing a blowing agent was formed by applying the blowing-agent-containing pressure-sensitive adhesive composition (B) to the releasably treated surface of the release film (B) so as to have a thickness after curing of 50 μm, to thereby yield the sheet including the release film (B) and, present thereon, the layer of pressure-sensitive adhesive composition containing a blowing agent.

The resulting pressure-sensitive adhesive sheet is usable also as a double-sided pressure-sensitive adhesive sheet, because the viscoelastic body containing both bubbles and microparticles thereof shows adhesiveness. The viscoelastic body containing both bubbles and microparticles had a bubble content of 20%, and the pressure-sensitive adhesive layer containing a blowing agent had a solvent-insoluble content of 87 percent by weight.

(EXAMPLE 5)

A pressure-sensitive adhesive sheet including a viscoelastic body containing both bubbles and microparticles and, present on one side thereof, a pressure-sensitive adhesive layer containing a blowing agent was prepared by the procedure of Example 1, except for forming a sheet including a layer of polymerizable composition containing both bubbles and microparticles by applying the bubble-and-microparticle-containing polymerizable composition (A) to the releasably treated surface of the release film (A) so as to have a thickness after curing of 400 μm, to thereby yield the sheet including the release film (A) and, present thereon, the layer of polymerizable composition containing both bubbles and microparticles.

The resulting pressure-sensitive adhesive sheet is usable also as a double-sided pressure-sensitive adhesive sheet, because the viscoelastic body containing both bubbles and microparticles thereof shows adhesiveness. The viscoelastic body containing both bubbles and microparticles had a bubble content of 20%, and the pressure-sensitive adhesive layer containing a blowing agent had a solvent-insoluble content of 81 percent by weight.

(EXAMPLE 6)

The blowing-agent-containing pressure-sensitive adhesive composition (C) was applied to the releasably treated surface of the release film (B) so as to have a thickness after curing of 100 μm, and thereby yielded a sheet including a layer of pressure-sensitive adhesive composition containing a blowing agent. The sheet included the release film (B) and, present thereon, the layer of pressure-sensitive adhesive composition containing a blowing agent.

Independently, the bubble-and-microparticle-containing polymerizable composition (A) was applied to the releasably treated surface of the release film (A) so as to have a thickness after curing of 800 μm, and thereby yielded a sheet including a layer of polymerizable composition containing both bubbles and microparticles. The sheet included the release film (A) and, present thereon, a layer of polymerizable composition containing both bubbles and microparticles.

The sheet including the layer of pressure-sensitive adhesive composition containing a blowing agent was affixed to sheet including the layer of polymerizable composition containing both bubbles and microparticles so that the layer of polymerizable composition containing both bubbles and microparticles was in contact with the layer of pressure-sensitive adhesive composition containing a blowing agent, and thereby yielded a sheet assembly.

The sheet assembly was irradiated from both sides with ultraviolet rays (UV) having a maximum sensitivity at 350 nm using a black-light lamp (supplied by Toshiba Ltd.) at an illumination intensity of 5 $mW/cm^2$ for 240 seconds, to carry out photocuring of the layer of polymerizable composition containing both bubbles and microparticles and of the layer of pressure-sensitive adhesive composition containing a blowing agent, and thereby yielded a pressure-sensitive adhesive sheet including a viscoelastic body containing both bubbles and microparticles and, present on one side thereof, a pressure-sensitive adhesive layer containing a blowing agent.

The resulting pressure-sensitive adhesive sheet is usable also as a double-sided pressure-sensitive adhesive sheet, because the viscoelastic body containing both bubbles and microparticles thereof shows adhesiveness. The viscoelastic body containing both bubbles and microparticles had a bubble content of 20%, and the pressure-sensitive adhesive layer containing a blowing agent had a solvent-insoluble content of 40 percent by weight.

(EXAMPLE 7)

A pressure-sensitive adhesive sheet including a viscoelastic body containing both bubbles and microparticles

and, present on one side thereof, a pressure-sensitive adhesive layer containing a blowing agent was prepared by the procedure of Example 1, except for using the blowing-agent-containing pressure-sensitive adhesive composition (D).

The viscoelastic body containing both bubbles and microparticles had a bubble content of 20%, and the pressure-sensitive adhesive layer containing a blowing agent had a solvent-insoluble content of 88 percent by weight.

(EXAMPLE 8)

A pressure-sensitive adhesive sheet including a viscoelastic body containing both bubbles and microparticles and, present on one side thereof, a pressure-sensitive adhesive layer containing a blowing agent was prepared by the procedure of Example 1, except for using the blowing-agent-containing pressure-sensitive adhesive composition (E).

The viscoelastic body containing both bubbles and microparticles had a bubble content of 20%, and the pressure-sensitive adhesive layer containing a blowing agent had a solvent-insoluble content of 62 percent by weight.

(EXAMPLE 9)

A pressure-sensitive adhesive sheet including a viscoelastic body containing both bubbles and microparticles and, present on one side thereof, a pressure-sensitive adhesive layer containing a blowing agent was prepared by the procedure of Example 1, except for using the blowing-agent-containing pressure-sensitive adhesive composition (F).

The viscoelastic body containing both bubbles and microparticles had a bubble content of 20%, and the pressure-sensitive adhesive layer containing a blowing agent had a solvent-insoluble content of 91 percent by weight.

(EXAMPLE 10)

A pressure-sensitive adhesive sheet including a viscoelastic body containing both bubbles and microparticles and, present on one side thereof, a pressure-sensitive adhesive layer containing a blowing agent was prepared by the procedure of Example 1, except for using the blowing-agent-containing pressure-sensitive adhesive composition (G).

The viscoelastic body containing both bubbles and microparticles had a bubble content of 20%, and the pressure-sensitive adhesive layer containing a blowing agent had a solvent-insoluble content of 81 percent by weight.

(COMPARATIVE EXAMPLE 1)

The bubble-and-microparticle-containing polymerizable composition (A) was applied to the releasably treated surface of the release film (A) to give a layer of polymerizable composition containing both bubbles and microparticles and having a thickness after curing of 800 $\mu$m; the release film (B) was affixed to the layer of polymerizable composition containing both bubbles and microparticles so that the layer surface was in contact with the releasably treated surface of the release film (B); and thereby yielded a sheet including the layer of polymerizable composition containing both bubbles and microparticles.

The sheet including the layer of polymerizable composition containing both bubbles and microparticles was irradiated from both sides with ultraviolet rays (UV) having a maximum sensitivity at 350 nm using a black-light lamp (supplied by Toshiba Ltd.) at an illumination intensity of 5 $mW/cm^2$ for 240 seconds, to carry out photocuring of the layer of polymerizable composition containing both bubbles and microparticles, and thereby yielded a sheet which included a viscoelastic body containing both bubbles and microparticles, and release films protecting the both surfaces of the viscoelastic body.

The viscoelastic body containing both bubbles and microparticles showed adhesiveness and had a bubble content of 20%.

(COMPARATIVE EXAMPLE 2)

A sheet which included a viscoelastic body containing both bubbles and microparticles, and release films protecting both surfaces of the viscoelastic body was prepared by the procedure of Comparative Example 1, except for forming a sheet including a layer of polymerizable composition containing both bubbles and microparticles by applying the bubble-and-microparticle-containing polymerizable composition (A) to the releasably treated surface of the release film (A) to give a layer of polymerizable composition containing both bubbles and microparticles and having a thickness after curing of 400 $\mu$m; and applying the release film (B) to the layer of polymerizable composition containing both bubbles and microparticles so that the layer surface was in contact with the releasably treated surface of the release film (B).

The viscoelastic body containing both bubbles and microparticles showed adhesiveness and had a bubble content of 20%.

(COMPARATIVE EXAMPLE 3)

The blowing-agent-containing pressure-sensitive adhesive composition (A) was applied to the releasably treated surface of the release film (B) so as to have a thickness after curing of 100 μm, and thereby yielded a layer of pressure-sensitive adhesive composition containing a blowing agent. The release film (A) was affixed to the layer of pressure-sensitive adhesive composition containing a blowing agent so that the layer surface was in contact with the releasably treated surface of the release film (A), and thereby yielded a sheet including the layer of pressure-sensitive adhesive composition containing a blowing agent.

The sheet including the layer of pressure-sensitive adhesive composition containing a blowing agent was irradiated from both sides with ultraviolet rays (UV) having a maximum sensitivity at 350 nm using a black-light lamp (supplied by Toshiba Ltd.) at an illumination intensity of 5 $mW/cm^2$ for 240 seconds, to carry out photocuring of the layer of pressure-sensitive adhesive composition containing a blowing agent, and thereby yielded a sheet which included a pressure-sensitive adhesive layer containing a blowing agent; and release films protecting both sides of the pressure-sensitive adhesive layer.

The pressure-sensitive adhesive layer containing a blowing agent had a solvent-insoluble content of 80 percent by weight.

(COMPARATIVE EXAMPLE 4)

The blowing-agent-containing pressure-sensitive adhesive composition (A) was applied to the releasably treated surface of the release film (B) so as to have a thickness after curing of 100 μm to give a layer of pressure-sensitive adhesive composition containing a blowing agent, and thereby yielded a sheet including the layer of pressure-sensitive adhesive composition containing a blowing agent.

Independently, the viscoelastic composition (A) was applied to the releasably treated surface of the release film (A) to give a viscoelastic composition layer, and thereby yielded a sheet including the viscoelastic composition layer. The application was performed so as to allow a viscoelastic substrate formed through photocuring of the viscoelastic composition to have a thickness of 50 μm.

The sheet including the layer of pressure-sensitive adhesive composition containing a blowing agent was affixed to the sheet including the viscoelastic composition layer so that the layer of pressure-sensitive adhesive composition containing a blowing agent was in contact with the viscoelastic composition layer and thereby yielded a sheet assembly.

The sheet assembly was irradiated from both sides with ultraviolet rays (UV) having a maximum sensitivity at 350 nm using a black-light lamp (supplied by Toshiba Ltd.) at an illumination intensity of 5 $mW/cm^2$ for 240 seconds, to carry out photocuring of the layer of pressure-sensitive adhesive composition containing a blowing agent and of the viscoelastic composition layer, and thereby yielded a pressure-sensitive adhesive sheet which included a viscoelastic substrate and, present on one side thereof, a pressure-sensitive adhesive layer containing a blowing agent.

The resulting pressure-sensitive adhesive sheet is usable also as a double-sided pressure-sensitive adhesive sheet, because the viscoelastic substrate thereof shows adhesiveness. The pressure-sensitive adhesive layer containing a blowing agent had a solvent-insoluble content of 81 percent by weight.

(COMPARATIVE EXAMPLE 5)

A pressure-sensitive adhesive sheet was prepared by the procedure of Comparative Example 4, except for forming a sheet including a layer of pressure-sensitive adhesive composition containing a blowing agent by applying the blowing-agent-containing pressure-sensitive adhesive composition (B) to the releasably treated surface of the release film (B) so as to have a thickness after curing of 100 μm, to thereby yield a layer of pressure-sensitive adhesive composition containing a blowing agent on the release film (B).

The resulting pressure-sensitive adhesive sheet is usable also as a double-sided pressure-sensitive adhesive sheet, because the viscoelastic substrate thereof shows adhesiveness. The pressure-sensitive adhesive layer containing a blowing agent had a solvent-insoluble content of 86 percent by weight.

(COMPARATIVE EXAMPLE 6)

The blowing-agent-containing pressure-sensitive adhesive composition (A) was applied to the releasably treated surface of the release film (B) so as to have a thickness after curing of 100 μm, and thereby yielded a sheet including a layer of pressure-sensitive adhesive composition containing a blowing agent.

Independently, the microparticle-containing polymerizable composition (A) was applied to the releasably treated surface of the release film (A) to form a layer of polymerizable composition containing microparticles, and thereby yielded a sheet including the layer of polymerizable composition containing microparticles. The application was performed so

as to allow a viscoelastic substrate containing microparticles formed through photocuring of the polymerizable composition containing microparticles to have a thickness of 800 μm.

The sheet including the layer of pressure-sensitive adhesive composition containing a blowing agent was affixed to the sheet including the layer of polymerizable composition containing microparticles so that the layer of pressure-sensitive adhesive composition containing a blowing agent was in contact with the layer of polymerizable composition containing microparticles, and thereby yielded a sheet assembly.

The sheet assembly was irradiated from both sides with ultraviolet rays (UV) having a maximum sensitivity at 350 nm using a black-light lamp (supplied by Toshiba Ltd.) at an illumination intensity of 5 $mW/cm^2$ for 240 seconds, to carry out photocuring of the layer of pressure-sensitive adhesive composition containing a blowing agent and of the layer of polymerizable composition containing microparticles, and thereby yielded a pressure-sensitive adhesive sheet which included a viscoelastic substrate containing microparticles and, present on one side of the substrate, a pressure-sensitive adhesive layer containing a blowing agent.

The resulting pressure-sensitive adhesive sheet is usable also as a double-sided pressure-sensitive adhesive sheet, because the viscoelastic substrate containing microparticles thereof has adhesiveness. The pressure-sensitive adhesive layer containing a blowing agent had a solvent-insoluble content of 84 percent by weight.

(Evaluation 1)

The initial bond strength and debonding capability (removability) were evaluated on the sheets prepared in the examples and comparative examples by measuring the adhesion force and adhesive strength before and after heating with respect to each adherend according to the following method for measuring initial bond strength and the method for measuring adhesive strength after heating. Independently, how the sheets absorb gaps (gap absorptivity) was evaluated according to the method of evaluating gap absorptivity. The results of these measurements and evaluations are shown in Table 1.

(Evaluation of Initial Adhesiveness and Debonding Capability)

The initial adhesion force was evaluated in the following manner. The 90-degree peel strengths of samples were determined according to a method for measuring adhesion force mentioned below; a sample having a 90-degree peel strength with respect to each adherend of 10 N/25 mm or more was evaluated as having a satisfactory initial bond strength (Good); and a sample having a 90-degree peel strength of less than 10 N/25 mm was evaluated as having an insufficient initial bond strength (Poor).

The debonding capability (removability) was evaluated in the following manner. The 90-degree peel strengths after a heating treatment of sample sheets (prepared in the examples and comparative examples) were determined according to a method for measuring the adhesive strength after heating treatment mentioned below; a sample sheet was evaluated as having good debonding capability (Good) when the sample sheet was peeled off from each adherend through the heating treatment or when the sample sheet had a 90-degree peel strength after the heating treatment of less than 10 N/25 mm with respect to each adherend; and a sample sheet was evaluated as having poor debonding capability (Poor) when having a 90-degree peel strength after the heating treatment of 10 N/25 mm or more.

As adherends, an acrylic plate (transparent, trade name "ACRYLITE" supplied by Mitsubishi Rayon Co., Ltd.), a polycarbonate plate (PC plate) (transparent, trade name "Polycarbonate Plate" supplied by Takiron Co., Ltd.), an ABS plate (natural color, supplied by Shin-Kobe Electric Machinery Co., Ltd.), and a polystyrene plate (PS plate) (natural color, supplied by RP TOPLA Limited) were respectively used, whereas the surfaces of the adherends had been washed with alcohol (ethanol) before use.

(Preparation of Test Samples)

From each of the sheets prepared in the examples and comparative examples, the release film (A) was removed to expose an adhesive face; the exposed adhesive surface was affixed, using a laminator roll, to a poly(ethylene terephthalate) film (PET film; supplied by Toray Industries, Inc. under the trade name of "Lumirror #50") 50 μm thick having a surface treated with corona on one side thereof, so that the corona-treated surface was in contact with the adhesive face; and the laminate was cut to a width of 25 mm to give a series of test samples as pressure-sensitive adhesive sheets supported on the corona-treated surface of the PET film 50 μm thick.

The prepared test samples were used in the measurements of the adhesion force and the adhesive strength after heating as below.

(Method for Measuring Adhesion Force)

Each of the test samples was affixed to an adherend by bonding using sufficient pressure at an ambient temperature of 23°C through one reciprocating movement of a 5-kg roller thereon, aged at 23°C for 30 minutes, and peeled off from the adherend at a peel direction of 90 degrees and a tensile speed of 50 mm/min using a tensile tester (trade name "TG-1kN" supplied by Minebea Co., Ltd.) at an ambient temperature of 23°C to measure a 90-degree peel strength as the adhesion force,

(Method for Measuring Adhesive Strength After Heating)

Each of the test samples was applied to an adherend by bonding using sufficient pressure at an ambient temperature of 23°C through one reciprocating movement of a 5-kg roller thereon, aged at 23°C for 30 minutes, and the bonded article including the test sample adhered to the adhered was placed as intact in an air forced oven and treated through heating at 130°C for 10 minutes.

After the completion of heating treatment, each of the test samples was observed whether it had been peeled off from the adherend by expansion or foaming of the blowing agent through heating. When the sample sheet remained adhering to the adherend without peeling, the test sample was left stand at an ambient temperature of 23°C for 2 hours and then peeled off from the adherend at a peeling direction of 90 degrees and a tensile speed of 50 mm/min using a tensile tester (trade name "TG-1kN" supplied by Minebea Co., Ltd.) at an ambient temperature of 23°C to determine a 90-degree peel strength as the adhesive strength after heating.

(Evaluation of Gap Absorptivity)

The gap absorptivity was evaluated in the following manner. Wetted area ratios of samples were determined according to the "method for measuring wetted area ratio" below; a sample having a wetted area ratio of 40% or more was evaluated as having good gap absorptivity (Good); and a sample having a wetted area ratio of less than 40% was evaluated as having poor gap absorptivity (Poor).

(Method for Measuring Wetted Area Ratio)

A series of samples for the measurement of wetted area ratio was prepared by cutting each of the sheets prepared in the examples and comparative examples into a tape 20 mm wide and 200 mm long, removing the release film (B) from the tape, and affixing the tape on an acrylic plate (transparent, 50 mm wide and 200 mm long) (see the view 4a of FIG. 4) at the center part of the plate. In FIG. 4, the view 4a illustrates the sample for the measurement of wetted area ratio, and the reference numerals "41" stands for the acrylic plate; and "42" stands for the sheet prepared in any of the examples and comparative examples.

Independently, a series of adherends for the measurement of wetted area ratio was prepared by affixing four plies of a poly(ethylene terephthalate) film cut to 20 mm wide and having a predetermined thickness to an acrylic plate (transparent, 50 mm wide and 200 mm long) at intervals of 20 mm (see the view 4b of FIG. 4). In FIG. 4, the view 4b illustrates the adherend for the measurement of wetted area ratio; the reference numerals "41" stands for the acrylic plate; and "43" stands for the poly(ethylene terephthalate) film. One having a thickness of 50 μm and one having a thickness of 100 μm were used herein as the poly(ethylene terephthalate) film, respectively.

Next, after removing the release film (A) therefrom, the sample for the measurement of wetted area ratio was affixed to the adherend for the measurement of wetted area ratio by bonding using sufficient pressure through one-way (single) movement of a 5-kg roller so that the adhesive face of the sample for the measurement of wetted area ratio was in contact with the bumped surface of the adherend for the measurement of wetted area ratio, which surface bearing the poly(ethylene terephthalate) films to thereby be bumped. A wetted area was then visually measured from the bottom of the acrylic plate, and the wetted area ratio (%) was calculated according to the following equation:

$$\text{Wetted area ratio (\%)} = (\text{Wetted area (cm}^2))/(\text{Sheet area: } 20\ \text{cm} \times 20\ \text{cm})) \times 100$$

The schematic illustration from the bottom of the resulting article including the sample affixed to the adherend by bonding using sufficient pressure is shown in the view 4c of FIG. 4. In the view 4c, the reference numerals "44a", "44b", "44c", and "44d" respectively represent wetting. In the measurements, the wetted area ratios (%) were calculated in the wettings 44a to 44d, respectively, and the average of the four wetted area ratios was defined as the wetted area

ratio of the sample (each of the examples and comparative examples). The measurements of the wetted area ratios were performed on an adherend for the measurement of wetted area ratio bearing four poly(ethylene terephthalate) films each having a thickness of 50 μm and on one bearing four poly(ethylene terephthalate) films each having a thickness of 100 μm, and the results are showing in "50 μm" and "100 μm", respectively, in "Wetted area ratio" in Table 1.

[Table 1]

TABLE 1

| | Initial adhesiveness | | | | | debonding capability | | | | | Gap absorptivity | | |
|---|---|---|---|---|---|---|---|---|---|---|---|---|---|
| | Adhesion force [N/25 mm] | | | | | Adhesive strength after heating [N/25 mm] | | | | | Wetted area ratio (%) | | |
| | Acrylic plate | PC plate | ABS plate | PS plate | | Acrylic plate | PC plate | ABS plate | PS plate | | 50 μm | 100 μm | |
| Example 1 | 29 | 27 | 20 | 24 | Good | peeled | peeled | peeled | peeled | Good | 98 | 87 | Good |
| Example 2 | 28 | 24 | 18 | 20 | Good | peeled | peeled | peeled | peeled | Good | 98 | 93 | Good |
| Example 3 | 19 | 18 | 13 | 12 | Good | peeled | peeled | peeled | peeled | Good | 92 | 84 | Good |
| Example 4 | 19 | 17 | 12 | 11 | Good | peeled | peeled | peeled | peeled | Good | 96 | 89 | Good |
| Example 5 | 22 | 20 | 15 | 16 | Good | peeled | peeled | peeled | peeled | Good | 77 | 43 | Good |
| Com. Ex 1 | 32 | 31 | 26 | 18 | Good | 29 | 26 | 22 | 20 | Poor | 96 | 88 | Good |
| Com. Ex 2 | 24 | 20 | 18 | 19 | Good | 22 | 19 | 17 | 16 | Poor | 73 | 50 | Good |
| Com. Ex. 3 | 9 | 7 | 5 | 6 | Poor | peeled | peeled | peeled | peeled | Good | 10 | 5 | Poor |
| Com. Ex. 4 | 10 | 8 | 7 | 6 | Poor | peeled | peeled | peeled | peeled | Good | 20 | 5 | Poor |
| Com. Ex. 5 | 8 | 6 | 5 | 5 | Poor | peeled | peeled | peeled | peeled | Good | 20 | 5 | Poor |
| Com. Ex. 6 | 26 | 24 | 18 | 20 | Good | peeled | peeled | peeled | peeled | Good | 35 | 10 | Poor |

The term "peeled" in Table 1 refers to that the sample sheet was peeled off from the adherend due to expansion as a result of the heating treatment.

The sheets according to Examples 1 to 5 show satisfactory adhesiveness to various adherends, are capable of peeling (debonding) easily from the adherends, have high wetted area ratios, and can absorb gaps satisfactorily. They are therefore usable in reworking and recycling applications.

In contrast, the sheets according to Comparative Examples 1 and 2 are resistant to easy peeling (debonding), although they show satisfactory adhesiveness. The sheets according to Comparative Examples 3 to 5 have poor initial bond strengths and give problems in reliability of adhesion (bonding), although they can be easily peeled off. The sheet according to Comparative Example 6 has poor gap absorptivity, although it has satisfactory adhesiveness and debonding capability.

(Evaluation 2)

The dry adhesion (adhesive properties at room temperature) and debonding capability (removability) were evaluated on the sheets of Examples 1 and 6 to 10 by the following "method for evaluating initial bond strength" and "method for evaluating heat removability". How the sheet corrodes an adherend was evaluated according to the following "method for evaluating less corrosivity". In addition, how the sheet absorbs gaps was evaluated according to the above-mentioned "method for evaluating gap absorptivity". The results are shown in Table 2.

(Method for Evaluating Initial Bond Strength)

From each of the sheets prepared in the examples, the release film (A) was removed to expose an adhesive face; and the exposed adhesive surface was affixed, using a laminator roll, to a poly(ethylene terephthalate) film (PET film; supplied by Toray Industries, Inc. under the trade name of "Lumirror #50") 50 μm thick having a surface treated with corona on one side thereof, so that the corona-treated surface was in contact with the adhesive face, and the resulting laminate was cut to a width of 25 mm to give a series of test samples as pressure-sensitive adhesive sheets supported on the corona-treated surface of the PET film 50 μm thick.

Each of the test samples was affixed to an adherend by bonding using sufficient pressure at an ambient temperature of 23°C through one reciprocating movement of a 5-kg roller thereon, aged at 23°C for 30 minutes, and peeled off from the adherend at a peel direction of 90 degrees and a tensile speed of 50 mm/min using a tensile tester (trade name "TG-1kN" supplied by Minebea Co., Ltd.) at an ambient temperature of 23°C to measure a 90-degree peel strength as the adhesion force.

A sample having a 90-degree peel strength of 10 [N/25 mm] or more was evaluated as having good initial bond strength (Good), and one having a 90-degree peel strength of less than 10 [N/25 mm] was evaluated as having poor initial bond strength (Poor).

(Method for Evaluating Debonding Capability Through Heating)

From each of the sheets prepared in the examples, the release film (A) was removed to expose an adhesive face; and the exposed adhesive surface was affixed, using a laminator roll, to a poly(ethylene terephthalate) film (PET film; supplied by Toray Industries, Inc. under the trade name of "Lumirror #50") 50 μm thick having a surface treated with corona on one side thereof, so that the corona-treated surface was in contact with the adhesive face, and the resulting laminate was cut to a width of 25 mm to give a series of test samples as pressure-sensitive adhesive sheets supported on the corona-treated surface of the PET film 50 μm thick.

Each of the test samples was applied to an adherend by bonding using sufficient pressure at an ambient temperature of 23°C through one reciprocating movement of a 5-kg roller thereon, aged at 23°C for 30 minutes, and the bonded article including the test sample adhering to the adhered was placed as intact in an air forced oven and treated through heating at 130°C for 10 minutes.

After the completion of heating treatment, each of the test samples was observed whether it had been peeled off from the adherend by expansion or foaming of the blowing agent through heating, and a sample which had been spontaneously peeled off from the adherend was evaluated as having good debonding capability (removability) through heating (Good).

As adherends, a stainless steel SUS 304BA plate and a polycarbonate plate (PC plate) (transparent, trade name "Polycarbonate Plate" supplied by Takiron Co., Ltd.) were used in the evaluations of the initial bond strength and heat removability, whereas the surfaces of the adherends had been washed with an alcohol (ethanol) before use.

(Method for Evaluating Less Corrosivity)

From each of the sheets prepared in the examples, the release film (A) was removed to expose an adhesive face; the exposed adhesive surface was affixed, using a laminator roll, to a poly(ethylene terephthalate) film (PET film; supplied by Toray Industries, Inc. under the trade name of "Lumirror #50") 25 μm thick having a surface treated with corona on one side thereof, so that the corona-treated surface was in contact with the adhesive face; the release film (B) was removed to expose another adhesive face; the exposed adhesive face was applied to a copper foil (80 μm thick); and the resulting article was stored at an ambient temperature of 60°C and relative humidity of 95% for 250 hours. Thereafter the surface of the copper foil was visually observed from the poly(ethylene terephthalate) film side to determine whether the surface of the copper foil to which the pressure-sensitive adhesive sheet was applied was corroded (discolored) or not.

A sample not underwent discoloration and corrosion was evaluated as being less corrosive (Good), and one underwent discoloration and corrosion was evaluated as being more corrosive (Poor).

[Table 2]

TABLE 2

| | Dry adhesion | | | Debonding capability through heating | | Less corrosivity | Gap absorptivity | | |
|---|---|---|---|---|---|---|---|---|---|
| | Initial bond strength [N/25 mm] | | | | | | Wetted area ratio (%) | | |
| | SUS 304BA plate | PC plate | | SUS 304BA plate | PC plate | | 50 μm | 100 μm | |
| Example 6 | 27 | 59 | Good | Good | Good | Good | 98 | 92 | Good |
| Example 7 | 18 | 28 | Good | Good | Good | Good | 96 | 85 | Good |
| Example 8 | 20 | 31 | Good | Good | Good | Good | 98 | 90 | Good |
| Example 9 | 14 | 24 | Good | Good | Good | Good | 95 | 84 | Good |
| Example 10 | 26 | 38 | Good | Good | Good | Good | 97 | 89 | Good |

The sheet according to Example 1 had initial bond strengths of 35 [N/25 mm] and 27 [N/25 mm] to the SUS 304BA plate and the PC plate, respectively. The sheet according to Example 1 had somewhat inferior debonding capability through heating from the SUS 304BA plate but had good debonding capability through heating from the PC plate. In addition, the sheet according to Example 1 was evaluated as being more corrosive (poor in less corrosivity).

The data demonstrate that the sheets according to Examples 6 to 10 exhibit high adhesion force during bonding with an adherend but show reduced adhesive strengths easily through heating, and are thereby capable of easily peeling/debonding from the adherend. They are therefore usable in reworking and recycling applications.

Industrial Applicability

The heat-expandable/peelable acrylic pressure-sensitive adhesive tapes according to embodiments of the present invention maintain high adhesion force during bonding with an adherend to form a bonded part but, upon the separation/ debonding of the bonded part, show reduced adhesive strengths through heating, and can thereby be easily separated/debonded from the adherend regardless of whether the surface of the adherend is uneven or not.

## Claims

**1.** A heat-expandable/peelable acrylic pressure-sensitive adhesive tape or sheet, at least comprising:

a viscoelastic body containing both bubbles and microparticles; and

a pressure-sensitive adhesive layer containing a blowing agent,
wherein the pressure-sensitive adhesive layer is present on or above at least one side of the viscoelastic body.

2. The heat-expandable/peelable acrylic pressure-sensitive adhesive tape or sheet according to claim 1, wherein the bubbles are contained in an amount of from 3 to 30 percent by volume based on the total volume of the viscoelastic body containing both bubbles and microparticles.

3. The heat-expandable/peelable acrylic pressure-sensitive adhesive tape or sheet according to one of claims 1 and 2, wherein the viscoelastic body containing both bubbles and microparticles is a layer as a polymerization product derived from a polymerizable composition containing both bubbles and microparticles, in which the polymerizable composition contains a vinyl monomer mixture or a partially polymerized prepolymer thereof, the vinyl monomer mixture containing at least one alkyl (meth)acrylate whose alkyl moiety having 2 to 18 carbon atoms as a main component; one or more photoinitiators; the microparticles; one or more multifunctional (meth)acrylates; and the bubbles.

4. The heat-expandable/peelable acrylic pressure-sensitive adhesive tape or sheet according to claim 3, wherein the polymerizable composition containing both bubbles and microparticles contains the bubbles and the microparticles; 0.001 to 5 parts by weight of the photoinitiator; and 0.001 to 5 parts by weight of the multifunctional (meth)acrylate, per 100 parts by weight of the vinyl monomer mixture containing at least one alkyl (meth)acrylate whose alkyl moiety having 2 to 18 carbon atoms as a main component or partially polymerized prepolymer of the monomer mixture.

5. The heat-expandable/peelable acrylic pressure-sensitive adhesive tape or sheet according to any one of claims 1 to 4, wherein the microparticles in the viscoelastic body have an average particle diameter of from 30 to 100 μm.

6. The heat-expandable/peelable acrylic pressure-sensitive adhesive tape or sheet according to any one of claims 1 to 5, wherein the viscoelastic body containing both bubbles and microparticles contains the microparticles in a content of 5 to 50 percent by volume based on the total volume of the viscoelastic body.

7. The heat-expandable/peelable acrylic pressure-sensitive adhesive tape or sheet according to any one of claims 1 to 6, wherein the pressure-sensitive adhesive layer containing a blowing agent is a layer as a polymerization product derived from a pressure-sensitive adhesive composition containing a blowing agent,
wherein the pressure-sensitive adhesive composition contains a vinyl monomer mixture containing at least one alkyl (meth)acrylate whose alkyl moiety having 2 to 18 carbon atoms as a main component, or a partially polymerized prepolymer of the monomer mixture; one or more photoinitiators; one or more multifunctional (meth)acrylates; and one or more blowing agents, and
wherein the pressure-sensitive adhesive layer has a solvent-insoluble content of from 35 to 99 percent by weight.

8. The heat-expandable/peelable acrylic pressure-sensitive adhesive tape or sheet according to claim 7, wherein the vinyl monomer mixture or partially polymerized product thereof constituting the pressure-sensitive adhesive layer containing a blowing agent comprises, as monomer components, at least one alkyl (meth)acrylate monomer (a1) whose alkyl moiety having 2 to 18 carbon atom, represented by following Formula (1) :
[Chemical Formula 1]

$$CH_2=C(R^1)COOR^2 \qquad (1)$$

wherein $R^1$ represents hydrogen atom or methyl group, and $R^2$ represents an alkyl group having 2 to 18 carbon atoms; at least one N-hydroxyalkyl(meth)acrylamide monomer (a2) represented by following Formula (2):
[Chemical Formula 2]

$$CH_2=C(R^3)CONHR^4 \qquad (2)$$

wherein $R^3$ represents hydrogen atom or methyl group, and $R^4$ represents a hydroxyalkyl group having 1 to 4 carbon atoms; and at least one nitrogen-containing monomer (a3).

9. The heat-expandable/peelable acrylic pressure-sensitive adhesive tape or sheet according to claim 8, wherein the vinyl monomer mixture or partially polymerized prepolymer thereof contains 50 to 85 percent by weight of the alkyl (meth)acrylate monomer (a1) whose alkyl moiety having 2 to 18 carbon atom; 0.1 to 12 percent by weight

of the N-hydroxyalkyl(meth)acrylamide monomer (a2); and 10 to 40 percent by weight of the nitrogen-containing monomer (a3).

**10.** The heat-expandable/peelable acrylic pressure-sensitive adhesive tape or sheet according to one of claims 8 and 9, wherein the total content of the alkyl (meth)acrylate monomer (a1) whose alkyl moiety having 2 to 18 carbon atom, the N-hydroxyalkyl(meth)acrylamide monomer (a2), and the nitrogen-containing monomer (a3) is 90 percent by weight or more based on the total weight of monomer components constituting the pressure-sensitive adhesive composition containing a blowing agent.

**11.** The heat-expandable/peelable acrylic pressure-sensitive adhesive tape or sheet according to any one of claims 8 to 10,
wherein the vinyl monomer mixture contains substantially no carboxyl-containing monomer.

**12.** The heat-expandable/peelable acrylic pressure-sensitive adhesive tape or sheet according to any one of claims 8 to 11,
wherein the N-hydroxyalkyl(meth)acrylamide monomer (a2) is N-(2-hydroxyethyl)(meth)acrylamide.

**13.** The heat-expandable/peelable acrylic pressure-sensitive adhesive tape or sheet according to any one of claims 8 to 12,
wherein the nitrogen-containing monomer (a3) is an N-vinyl cyclic amide represented by following Formula (3):

[Chemical Formula 3]

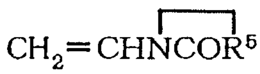 (3)

wherein $R^5$ represents a bivalent organic group.

**14.** The heat-expandable/peelable acrylic pressure-sensitive adhesive tape or sheet according to any one of claims 7 to 13,
wherein the pressure-sensitive adhesive composition containing a blowing agent contains 0.001 to 5 parts by weight of the photoinitiator, 10 to 200 parts by weight of the blowing agent, and 0.001 to 5 parts by weight of the multifunctional (meth)acrylate, per 100 parts by weight of the vinyl monomer mixture containing at least one alkyl (meth)acrylate whose alkyl moiety having 2 to 18 carbon atoms as a main component or partially polymerized prepolymer of the monomer mixture.

**15.** The heat-expandable/peelable acrylic pressure-sensitive adhesive tape or sheet according to any one of claims 1 to 14,
wherein the pressure-sensitive adhesive layer contains heat-expandable microspheres as the blowing agent.

**16.** The heat-expandable/peelable acrylic pressure-sensitive adhesive tape or sheet according to any one of claims 1 to 15,
wherein the pressure-sensitive adhesive layer containing a blowing agent has a thickness of from 1 to 300 µm.

**Patentansprüche**

**1.** Wärme-expandierbares/abziehbares Acrylhaftklebeband oder -Folie, umfassend mindestens:

einen viskoelastischen Körper, der sowohl Blasen als auch Mikropartikel enthält; und
eine Haftklebeschicht, die ein Treibmittel enthält,
wobei die Haftklebeschicht auf oder über mindestens einer Seite des viskoelastischen Körpers vorhanden ist.

**2.** Wärme-expandierbares/abziehbares Acrylhaftklebeband oder -Folie gemäß Anspruch 1, wobei die Blasen in einer Menge von 3 bis 30 Volumenprozent enthalten sind, bezogen auf das Gesamtvolumen des viskoelastischen Körpers, der sowohl Blasen als auch Mikropartikel enthält.

3. Wärme-expandierbares/abziehbares Acrylhaftklebeband oder -Folie nach einem der Ansprüche 1 und 2,
wobei der viskoelastische Körper, der sowohl Blasen als auch Mikropartikel enthält, eine Schicht als ein Polymerisationsprodukt ist, das von einer polymerisierbaren Zusammensetzung abgeleitet ist, die sowohl Blasen als auch Mikropartikel enthält, wobei die polymerisierbare Zusammensetzung ein Vinyl-Monomergemisch oder ein teilweise polymerisiertes Präpolymer desselben enthält, wobei das Vinyl-Monomergemisch enthält: mindestens ein Alkyl(meth)acrylat, dessen Alkyleinheit 2 bis 18 Kohlenstoffatome aufweist, als eine Hauptkomponente; einen oder mehrere Photoinitiatoren; die Mikropartikel; ein oder mehrere multifunktionelle (Meth)acrylate; und die Blasen.

4. Wärme-expandierbares/abziehbares Acrylhaftklebeband oder -Folie nach Anspruch 3, wobei die polymerisierbare Zusammensetzung, die sowohl Blasen als auch Mikropartikel enthält, folgendes enthält: die Blasen und die Mikropartikel; 0,001 bis 5 Gewichtsteile des Photoinitiators; und 0,001 bis 5 Gew.-Teile des multifunktionellen (Meth)acrylats, pro 100 Gewichtsteile des Vinyl-Monomergemischs, das mindestens ein Alkyl(meth)acrylat enthält, dessen Alkyleinheit 2 bis 18 Kohlenstoffatome aufweist, als eine Hauptkomponente, oder des teilweise polymerisierten Präpolymers des Monomergemischs.

5. Wärme-expandierbares/abziehbares Acrylhaftklebeband oder -Folie nach einem der Ansprüche 1 bis 4,
wobei die Mikropartikel in dem viskoelastischen Körper einen durchschnittlichen Partikeldurchmesser von 30 bis 100 μm aufweisen.

6. Wärme-expandierbares/abziehbares Acrylhaftklebeband oder -Folie nach einem der Ansprüche 1 bis 5,
wobei der viskoelastische Körper, der sowohl Blasen als auch Mikropartikel enthält, die Mikropartikel in einem Gehalt von 5 bis 50 Volumenprozent, bezogen auf das Gesamtvolumen des viskoelastischen Körpers, enthält.

7. Wärme-expandierbares/abziehbares Acrylhaftklebeband oder -Folie nach einem der Ansprüche 1 bis 6,
wobei die Haftklebeschicht, die ein Treibmittel enthält, eine Schicht als ein Polymerisationsprodukt ist, das von einer Haftklebezusammensetzung abgeleitet ist, die ein Treibmittel enthält,
wobei die Haftklebezusammensetzung enthält: ein Vinyl-Monomergemisch, das mindestens ein Alkyl(meth)acrylat, dessen Alkyleinheit 2 bis 18 Kohlenstoffatome aufweist, als eine Hauptkomponente enthält, oder ein teilweise polymerisiertes Präpolymer des Monomergemischs; einen oder mehrere Photoinitiatoren; ein oder mehrere multifunktionelle (Meth)acrylate; und ein oder mehrere Treibmittel, und
wobei die Haftklebeschicht einen Lösungsmittel-unlöslichen Gehalt von 35 bis 99 Gewichtsprozent aufweist.

8. Wärme-expandierbares/abziehbares Acrylhaftklebeband oder -Folie nach Anspruch 7, wobei das Vinyl-Monomergemisch oder ein teilweise polymerisiertes Produkt desselben, das die ein Treibmittel enthaltende Haftklebeschicht bildet, als Monomer-Komponenten umfasst: mindestens ein durch die folgende Formel (1) dargestelltes Alkyl(meth)acrylat-Monomer (a1), dessen Alkyleinheit 2 bis 18 Kohlenstoffatome aufweist:
[Chemische Formel 1]

$$CH_2=C(R^1)COOR^2 \qquad (1)$$

wobei $R^1$ ein Wasserstoffatom oder eine Methylgruppe darstellt, und $R^2$ eine Alkylgruppe mit 2 bis 18 Kohlenstoffatomen darstellt; mindestens ein durch die folgende Formel (2) dargestelltes N-Hydroxyalkyl(meth)acrylamid-Monomer (a2):
[Chemische Formel 2]

$$CH_2=C(R^3)CONHR^4 \qquad (2)$$

wobei $R^3$ ein Wasserstoffatom oder eine Methylgruppe darstellt, und $R^4$ eine Hydroxyalkylgruppe mit 1 bis 4 Kohlenstoffatomen darstellt; und mindestens ein stickstoffhaltiges Monomer (a3).

9. Wärme-expandierbares/abziehbares Acrylhaftklebeband oder -Folie nach Anspruch 8,
wobei das Vinyl-Monomergemisch oder ein teilweise polymerisiertes Präpolymer desselben enthält: 50 bis 85 Gewichtsprozent Alkyl(meth)acrylat-Monomer (a1), dessen Alkyleinheit 2 bis 18 Kohlenstoffatome aufweist; 0,1 bis 12 Gewichtsprozent N-Hydroxyalkyl(meth)acrylamid-Monomer (a2); und 10 bis 40 Gewichtsprozent des stickstoffhaltigen Monomers (a3).

10. Wärme-expandierbares/abziehbares Acrylhaftklebeband oder -Folie nach einem der Ansprüche 8 und 9,
wobei der Gesamtgehalt des Alkyl(meth)acrylat-Monomers (a1), dessen Alkyleinheit 2 bis 18 Kohlenstoffatome

aufweist, des N-Hydroxyalkyl(meth)acrylamid-Monomers (a2) und des stickstoffhaltigen Monomers (a3) 90 Prozent Gewichtsprozent oder mehr ist, bezogen auf das Gesamtgewicht der Monomerkomponenten, die die ein Treibmittel enthaltende Haftklebezusammensetzung bilden.

**11.** Wärme-expandierbares/abziehbares Acrylhaftklebeband oder -Folie nach einem der Ansprüche 8 bis 10, wobei das Vinyl-Monomergemisch im Wesentlichen kein eine Carboxylgruppe enthaltendes Monomer enthält.

**12.** Wärme-expandierbares/abziehbares Acrylhaftklebeband oder -Folie nach einem der Ansprüche 8 bis 11, wobei das N-Hydroxyalkyl(meth)acrylamid-Monomer (a2) N-(2-Hydroxyethyl)(meth)acrylamid ist.

**13.** Wärme-expandierbares/abziehbares Acrylhaftklebeband oder -Folie nach einem der Ansprüche 8 bis 12, wobei das stickstoffhaltige Monomer (a3) ein durch die folgende Formel (3) dargestelltes cyclisches N-Vinylamid ist:

[Chemische Formel 3 ]

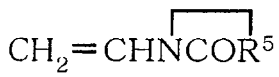

(3)

wobei $R^5$ eine zweiwertige organische Gruppe ist.

**14.** Wärme-expandierbares/abziehbares Acrylhaftklebeband oder -Folie nach einem der Ansprüche 7 bis 13, wobei die ein Treibmittel enthaltende Haftklebezusammensetzung enthält: 0,001 bis 5 Gew.-Teile des Photoinitiators, 10 bis 200 Gewichtsteile des Treibmittels und 0,001 bis 5 Gew.-Teile des multifunktionellen (Meth)acrylats, pro 100 Gew.-Teile des Vinyl-Monomergemischs, das mindestens ein Alkyl(meth)acrylat, dessen Alkyleinheit 2 bis 18 Kohlenstoffatome aufweist, als eine Hauptkomponente enthält, oder des teilweise polymerisierten Präpolymers des Monomergemischs.

**15.** Wärme-expandierbares/abziehbares Acrylhaftklebeband oder -Folie nach einem der Ansprüche 1 bis 14, wobei die Haftklebeschicht durch Wärme expandierbare Mikrokugeln als Treibmittel enthält.

**16.** Wärme-expandierbares/abziehbares Acrylhaftklebeband oder -Folie nach einem der Ansprüche 1 bis 15, wobei die Haftklebeschicht, die ein Treibmittel enthält, eine Dicke von 1 bis 300 μm aufweist.

## Revendications

**1.** Bande ou feuille adhésive acrylique thermodilatable/pelable sensible à la pression, comprenant au moins :

un corps viscoélastique contenant aussi bien des bulles que des microparticules ; et
une couche adhésive sensible à la pression contenant un agent de soufflage,
dans laquelle la couche adhésive sensible à la pression est présente sur ou au-dessus d'au moins un côté du corps viscoélastique.

**2.** Bande ou feuille adhésive acrylique thermodilatable/pelable sensible à la pression selon la revendication 1, dans laquelle les bulles sont contenues à raison de 3 % à 30 % en volume sur base du volume total du corps viscoélastique contenant aussi bien des bulles que des microparticules.

**3.** Bande ou feuille adhésive acrylique thermodilatable/pelable sensible à la pression selon l'une des revendications 1 et 2,
dans laquelle le corps viscoélastique contenant aussi bien des bulles que des microparticules est une couche sous la forme d'un produit de polymérisation dérivé d'une composition polymérisable contenant aussi bien des bulles que des microparticules, dans laquelle la composition polymérisable contient un mélange de monomère vinyle ou d'un prépolymère partiellement polymérisé correspondant, le mélange de monomère vinyle contenant au moins un alkyl (méth)acrylate dont le groupe fonctionnel alkyle possède entre 2 et 18 atomes de carbone comme composant principal ; un ou plusieurs photoamorceurs ; les microparticules ; un ou plusieurs (méth)acrylates multifonctionnels ; et les bulles.

4. Bande ou feuille adhésive acrylique thermodilatable/pelable sensible à la pression selon la revendication 3, dans laquelle la composition polymérisable contenant aussi bien des bulles que des microparticules contient les bulles et les microparticules ; 0,001 à 5 parties en masse du photoamorceur ; et de 0,001 à 5 parties en masse du (méth)acrylate multifonctionnel, par 100 parties en masse du mélange de monomère vinyle contenant au moins un alkyl (méth)acrylate dont le groupe fonctionnel alkyle possède entre 2 et 18 atomes de carbone comme composant principal, ou de prépolymère partiellement polymérisé du mélange monomère.

5. Bande ou feuille adhésive acrylique thermodilatable/pelable sensible à la pression selon l'une quelconque des revendications 1 à 4, dans laquelle les microparticules présentes dans le corps viscoélastique ont un diamètre de particule moyen compris entre 30 $\mu$m et 100 $\mu$m.

6. Bande ou feuille adhésive acrylique thermodilatable/pelable sensible à la pression selon l'une quelconque des revendications 1 à 5, dans laquelle le corps viscoélastique contenant aussi bien des bulles que des microparticules contient les microparticules à raison de 5 % à 50 % en volume sur base du volume total du corps viscoélastique.

7. Bande ou feuille adhésive acrylique thermodilatable/pelable sensible à la pression selon l'une quelconque des revendications 1 à 6, dans laquelle la couche adhésive sensible à la pression contenant un agent de soufflage est une couche sous forme d'un produit de polymérisation dérivé d'une composition adhésive sensible à la pression contenant un agent de soufflage, dans laquelle la composition adhésive sensible à la pression contient un mélange de monomère vinyle contenant au moins un alkyl (méth)acrylate dont le groupe fonctionnel alkyle comporte entre 2 et 18 atomes de carbone comme composant principal, ou un prépolymère partiellement polymérisé du mélange monomère ; un ou plusieurs photoamorceurs ; un ou plusieurs (méth)acrylates multifonctionnels ; et un ou plusieurs agents de soufflage, et dans laquelle la couche adhésive sensible à la pression présente un contenu insoluble dans le solvant compris entre 35 % et 99 % en masse.

8. Bande ou feuille adhésive acrylique thermodilatable/pelable sensible à la pression selon la revendication 7, dans laquelle le mélange de monomère vinyle ou le produit partiellement polymérisé correspondant constituant la couche adhésive sensible à la pression contenant un agent de soufflage comprend, comme components monomères, au moins un monomère alkyl (méth)acrylate (a1) dont le groupe fonctionnel alkyle comporte entre 2 et 18 atomes de carbone, représenté par la formule suivante (1) :
[Formule chimique 1]

$$CH_2 = C(R^1)COOR^2 \qquad (1)$$

dans laquelle $R^1$ représente un atome d'hydrogène ou un groupe méthyle, et $R^2$ représente un groupe alkyle comportant entre 2 et 18 atomes de carbone ;
au moins un monomère N-hydroxyalkyl(méth)acrylamide (a2) représenté par la formule suivante (2) :
[Formule chimique 2]

$$CH_2 = C(R^3)CONHR^4 \qquad (2)$$

dans laquelle $R^3$ représente un atome d'hydrogène ou un groupe méthyle, et $R^4$ représente un groupe hydroxyalkyle comportant entre 1 et 4 atomes de carbone ; et au moins un monomère contenant de l'azote (a3).

9. Bande ou feuille adhésive acrylique thermodilatable/pelable sensible à la pression selon la revendication 8, dans laquelle le mélange de monomère vinyle ou un prépolymère partiellement polymérisé correspondant contient entre 50 % et 85 % en masse du monomère alkyl (méth)acrylate (a1) dont le groupe fonctionnel alkyle comporte entre 2 et 18 atomes de carbone ; de 0,1 % à 12 % en masse du monomère N-hydroxyalkyl(méth)acrylamide (a2) ; et de 10 % à 40 % en masse du monomère contenant de l'azote (a3).

10. Bande ou feuille adhésive acrylique thermodilatable/pelable sensible à la pression selon l'une des revendications 8 et 9, dans laquelle le contenu total de monomère alkyl (méth)acrylate (a1) dont le groupe fonctionnel alkyle comporte entre 2 et 18 atomes de carbone, de monomère N-hydroxyalkyl(méth)acrylamide (a2), et de monomère contenant

de l'azote (a3) est supérieur ou égal à 90 % en masse sur base de la masse totale des composants monomères constituant la composition adhésive sensible à la pression contenant un agent de soufflage.

**11.** Bande ou feuille adhésive acrylique thermodilatable/pelable sensible à la pression selon l'une quelconque des revendications 8 à 10,
dans laquelle le mélange de monomère vinyle ne contient essentiellement aucun monomère contenant un groupe carboxyle.

**12.** Bande ou feuille adhésive acrylique thermodilatable/pelable sensible à la pression selon l'une quelconque des revendications 8 à 11,
dans laquelle le monomère N-hydroxyalkyl(méth)acrylamide (a2) est le N-(2-hydroxyéthyl)(méth)acrylamide.

**13.** Bande ou feuille adhésive acrylique thermodilatable/pelable sensible à la pression selon l'une quelconque des revendications 8 à 12,
dans laquelle le monomère contenant de l'azote (a3) est un amide cyclique N-vinyle représenté par la formule suivante (3) :

[Formule chimique 3]

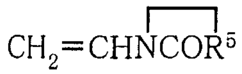

(3)

dans laquelle $R^5$ représente un groupe organique bivalent.

**14.** Bande ou feuille adhésive acrylique thermodilatable/pelable sensible à la pression selon l'une quelconque des revendications 7 à 13,
dans laquelle la composition adhésive sensible à la pression contenant un agent de soufflage contient de 0,001 à 5 parties en masse du photoamorceur, de 10 à 200 parties en masse de l'agent de soufflage, et de 0,001 à 5 parties en masse du (méth)acrylate multifonctionnel, par 100 parties en masse du mélange de monomère vinyle contenant au moins un alkyl (méth)acrylate dont le groupe fonctionnel alkyle possède entre 2 et 18 atomes de carbone comme composant principal, ou de prépolymère-partiellement polymérisé du mélange monomère.

**15.** Bande ou feuille adhésive acrylique thermodilatable/pelable sensible à la pression selon l'une quelconque des revendications 1 à 14,
dans laquelle la couche adhésive sensible à la pression contient des microsphères thermodilatables comme agent de soufflage.

**16.** Bande ou feuille adhésive acrylique thermodilatable/pelable sensible à la pression selon l'une quelconque des revendications 1 à 15,
dans laquelle la couche adhésive sensible à la pression contenant un agent de soufflage présente une épaisseur comprise entre 1 µm et 300 µm.

[Fig.1]

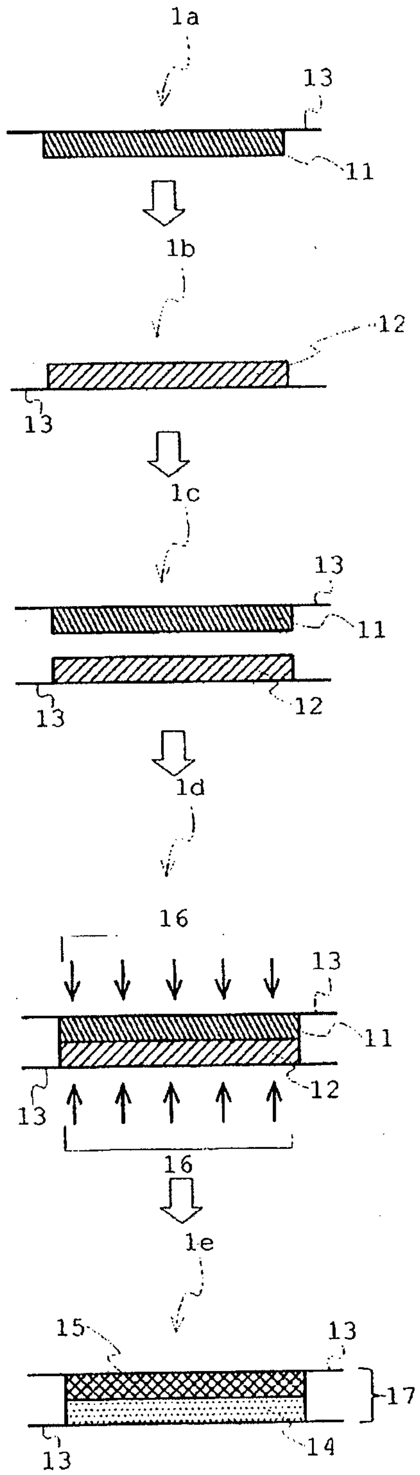

[Fig.2]

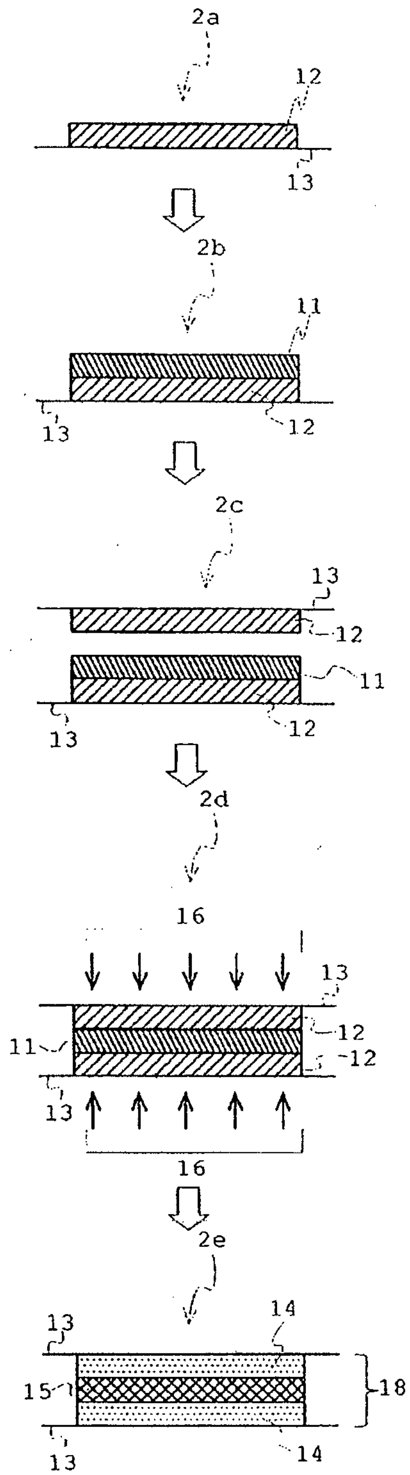
2a
12
13
2b
11
13
12
2c
13
12
11
13
12
2d
16
13
11
12
12
13
16
2e
13
14
15
18
13
14

[Fig.3]

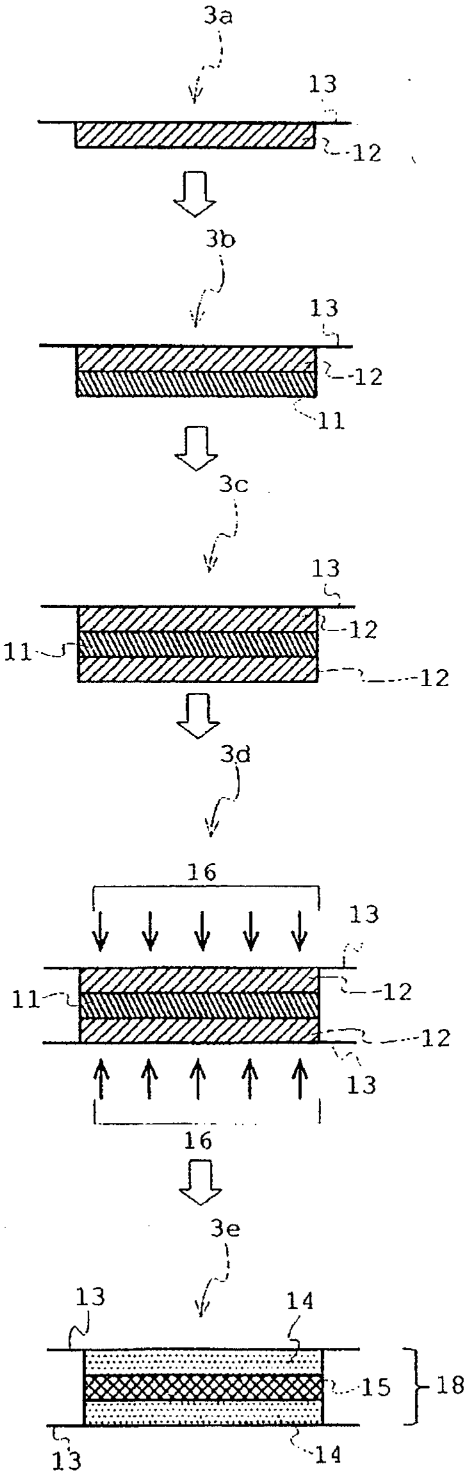
3a
13
12
3b
13
12
11
3c
13
12
11
12
3d
16
13
12
11
12
13
16
3e
13
14
15
18
13
14

[Fig.4]

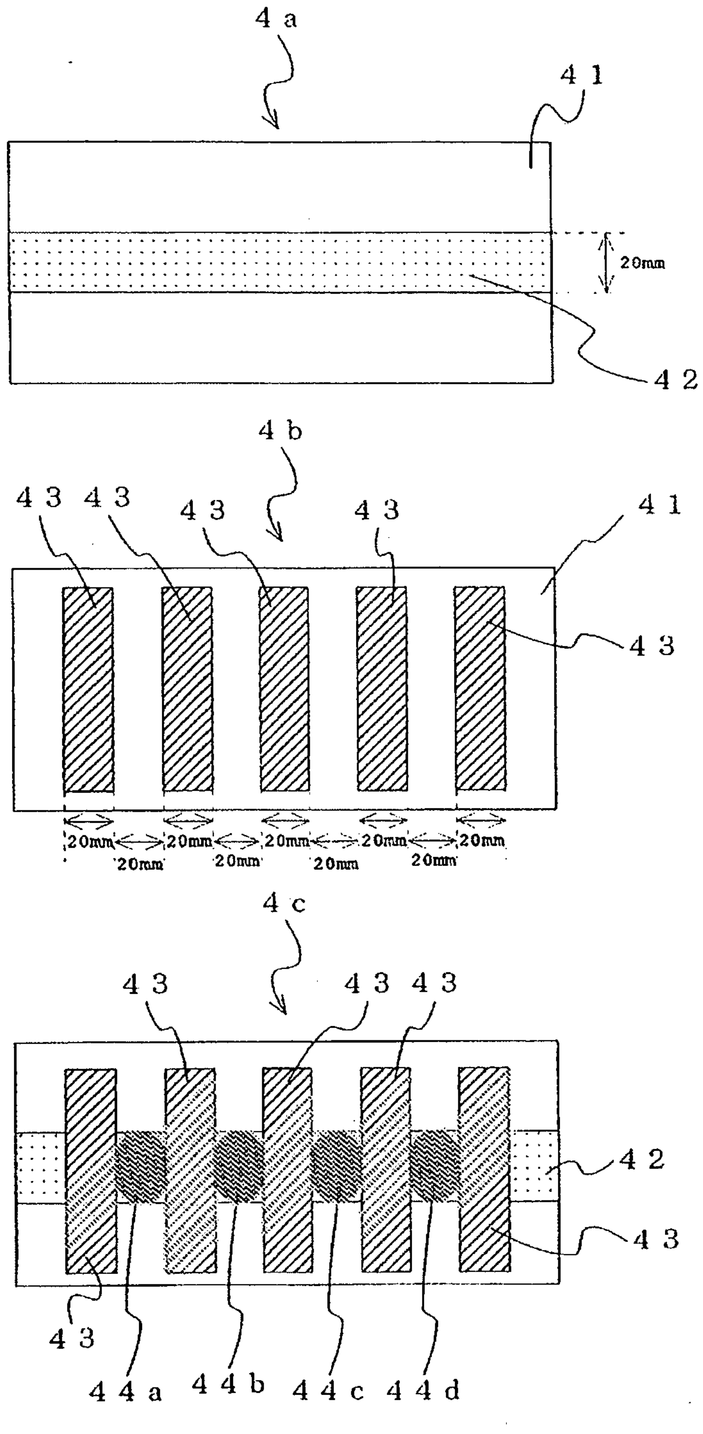
4 a
4 1
20mm
4 2
4 b
4 3
4 3
4 3
4 3
4 1
4 3
20mm
20mm
20mm
20mm
20mm
20mm
20mm
20mm
20mm
4 c
4 3
4 3
4 3
4 2
4 3
4 3
4 4 a
4 4 b
4 4 c
4 4 d

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S57198217030 B
- US 4223067 A
- JP H07199548549 A
- JP 2001212900 A
- JP 2002088320 A
- JP 2002003800 A
- JP 2002121505 A
- JP 2004018761 A
- JP 2006022189 A
- EP 1820833 A
- JP 2003013015 A